# EUROPÄISCHE PATENTSCHRIFT

(11) **EP 4 063 564 B1**
(45) Veröffentlichungstag und Bekanntmachung des Hinweises auf die Patenterteilung: **05.03.2025**
(21) Anmeldenummer: 21164220.2
(22) Anmeldetag: 23.03.2021
(51) Int. Cl.: E01C 19/48, E01C 19/00

(54) **MESSSYSTEM**
MEASURING SYSTEM
SYSTÈME DE MESURE

(43) Veröffentlichungstag der Anmeldung: 28.09.2022
(73) Patentinhaber: MOBA Mobile Automation AG, 65555 Limburg (DE)
(72) Erfinder: KÖRNER, Matthias, 65555 Limburg (DE); FASEL, Michael, 65555 Limburg (DE); DÖRING, Lukas, 65555 Limburg (DE)
(74) Vertreter: Pfitzner, Hannes

(56) Entgegenhaltungen:
- EP-A1- 2 597 321
- CN-U- 201 660 836
- CN-U- 201 770 931
- US-A- 5 984 420

## Beschreibung

Ausführungsbeispiele der vorliegenden Erfindung beziehen sich auf ein Messsystem für eine Baumaschine. Bevorzugte Ausführungsbeispiele beziehen sich auf ein Messsystem mit einem Träger, der einen oder mehrere verbindbare Abschnitte aufweist. Weitere Ausführungsbeispiele beziehen sich auf eine Baumaschine, insbesondere eine Straßenbaumaschine, wie einen Straßenfertiger oder eine Straßenfräse, mit einem entsprechenden Messsystem. Im Allgemeinen befindet sich die Anmeldung auf dem Gebiet von Messtechnik für Baumaschinen, insbesondere Straßenbaumaschinen, wie Straßenfertiger.

Fig. 4 zeigt einen bekannten Straßenfertiger, wie er beispielsweise in der EP 0 542 297 A1 beschrieben ist. Der Straßenfertiger ist in seiner Gesamtheit mit dem Bezugszeichen 1 bezeichnet und umfasst ein Kettenfahrwerk 2, mit dem der Straßenfertiger 1 auf dem vorbereiteten Untergrund 4 fährt. An dem in Fahrtrichtung hinteren Ende des Straßenfertigers 1 ist eine höhenverstellbare Bohle 10 angeordnet, die mittels eines Zugarms 12 an einem Zugpunkt 14 ZP an dem Straßenfertiger 1 angelenkt ist. Die Höhe des Zugpunkts 14 ZP ist verstellbar mittels des Zylinders 14 (nicht dargestellt). Vor der Bohle 10 befindet sich ein Vorrat 3 des Asphaltmateriales, wobei dieser Vorrat durch entsprechende, an sich bekannte Regelung der Drehzahl einer schneckenartigen Fördereinrichtung 4 im Wesentlichen über den gesamten Breitenbereich der Bohle 10 konstant gehalten wird. Die Bohle 10 schwimmt auf dem Asphalt der zu fertigenden Straßendecke 16 auf. Die Dicke der zu fertigenden Straßendecke vor ihrer Endverfestigung durch Straßenwalzen wird durch Ausregelung der Höhenlage der Hinterkante 10k der Bohle 10 eingestellt. Diese Höhenregelung wird durch Veränderung des Anstellwinkels der Bohle 10 herbeigeführt, und erfolgt typischerweise durch die Ansteuerung von Stellzylindern, die an den vorderen Enden der Zugarme 12 eingreifen. Der Straßenfertiger umfasst drei Ultraschallsensoren 5a, 5b, 5c, die an einer Halterung 5h befestigt sind. Die Halterung 5h ist an dem Zugarm 12 befestigt. Die drei Ultraschallsensoren 5a, 5b, 5c dienen zur Abtastung einer Referenzfläche, die beispielsweise durch eine bereits gefertigte oder alte Bahn der Straßendecke gebildet sein kann.

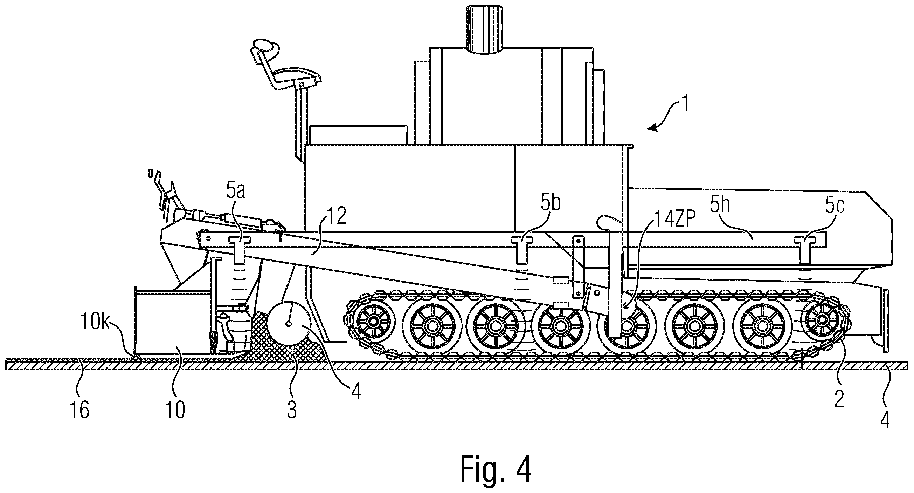

Bei Baumaschinen, wie insbesondere Straßenbaumaschinen wird, wie im Zusammenhang mit Fig. 4 erläutert, an einem oder mehreren Punkten der Abstand zum Untergrund bzw. zu einer Referenz, wie z. B. einem gespannten Seil oder einem Bordstein oder einer bereits eingebauten benachbarten Schicht gemessen. Hierfür haben sich in den letzten Jahren Ultraschallsensoren am Markt durchgesetzt, die mittels Auslegern, z. B. an einer Bohle des Straßenfertigers, einem Zugarm eines Straßenfertigers und/oder einem Chassis des Straßenfertigers angebracht sind. Bei manchen Anwendungen kommt ein sog. Sonic-Ski zum Einsatz, der mehrere parallele Messköpfe zu einem Abstandssensor kombiniert.

Bei einer weiteren Stand der Technik-Lösung (Big Sonic-Ski oder auch kurz Big Ski genannt) werden eine Mehrzahl von Abstandssensoren, wie z. B. Ultraschallmessköpfen oder auch Sensoren basierend auf einem anderen Messprinzip wie z. B. Lasern, über ein gemeinsames Gestänge an dem Zugarm angebracht. Das Gestänge erstreckt sich in Fahrtrichtung in etwa entlang der Maschinenlänge oder sogar über diese hinaus und ist so angeordnet, dass an zwei, drei oder mehreren Messpunkten entlang dieses Gestänges bzw. Fahrtrichtung ein Abstand zum Untergrund gemessen werden kann. Beispielsweise kann ein Sensor auf die aufgebrachte Schicht ausgerichtet sein, während ein weiterer Sensor auf den Untergrund für die aufzubringende Schicht ausgerichtet ist. Hierbei sind also zwei oder mehr Sensorköpfe vorgesehen, wobei ein Sensorkopf vor der Bohle und ein Sensorkopf hinter der Bohle angeordnet ist.

Diese sogenannte Big Sonic-Ski (bzw. Big Ski) Anwendung hat eine Mehrzahl von Vorteilen, wie z. B., dass systematische Fehlmessungen, z. B. bedingt durch auf dem Untergrund befindliche Steine, ausgeblendet oder ausgemittelt werden können. Nachteilig bei diesem sog. Big Sonic-Ski ist, dass der Montageaufwand für das Gestänge und die einzelnen Sensorköpfe recht hoch ist. Ausgehend davon, dass, um einem eventuellen Diebstahl vorzubeugen, derartige Messsysteme über Nacht abgebaut werden, ist dieser Montageaufwand im täglichen Arbeitsablauf nicht vernachlässigbar. Deshalb besteht der Bedarf nach einem verbesserten Ansatz.

Als weiteren Stand der Technik ist die EP 2597321 A1, die eine Lichtleiste zeigt, zu nennen.

CN 201601836 U offenbart eine Trägerstruktur, die an einem Straßenfertiger befestigt wird und aus länglichen Segmenten mit Sensoren besteht, wobei die einzelnen Segmente an deren Enden nacheinander mechanisch verbunden sind.

Aufgabe der vorliegenden Erfindung ist es, ein Konzept zu schaffen, dass die Messung an zumindest zwei Positionen gegenüber dem Untergrund ermöglicht, wobei insgesamt ein verbesserter Kompromiss aus Montageaufwand, Messbereich (im Sinne von einem hohen Abstand zwischen den einzelnen Messpunkten) und Zuverlässigkeit aufweist.

Die Aufgabe wird durch den unabhängigen Patentanspruch 1 gelöst.

Die Erfindung schafft ein Messsystem bzw. eine Messanordnung für eine Baumaschine, wie z.B. einen Straßenfertiger oder eine Fräse. Das Messsystem umfasst einen Träger, der mit der Baumaschine (oder einer Komponente, wie z. B. der Bohle oder dem Zugarm der Baumaschine) verbindbar ist, z.B. derart, dass sich der Träger entlang eines Untergrunds erstreckt. Beispielsweise kann sich der Träger entlang einer Längsachse der Baumaschine, seitlich an selbiger erstrecken. Der Träger umfasst zumindest einen ersten Abschnitt und einen zweiten Abschnitt, wobei der erste Abschnitt eine Mehrzahl an dem ersten Abschnitt befestigten oder integrierten Sensorköpfen zur berührungslosen Messung gegenüber einem Untergrund oder allgemein einer Referenz aufweist. Diese sind z.B. parallel ausgerichtet, d.h. haben einen sich parallel bzw. im Wesentlichen parallel erstreckenden Scanbereich. Der erste Abschnitt weist an einer zweiten Stirnseite ein zweites Verbindungselement auf, wobei das zweite Verbindungselement mit einem ersten Verbindungselement derart verbindbar ist, dass sowohl eine mechanische als auch eine elektrische Verbindung ausgebildet wird.

Der zweite Abschnitt des Trägers weist ebenfalls eine Mehrzahl an befestigten / integrierten (parallelen) Sensorköpfen auf. Der zweite Abschnitt weist an einer ersten Stirnseite das erste Verbindungselement auf, so dass das zweite Verbindungselement des ersten Abschnitts mit dem ersten Verbindungselement des zweiten Abschnitts verbindbar ist.

Das erste und/oder das zweite Verbindungselement weist einen Haken auf, so dass das erste Verbindungselement und das zweite Verbindungselement durch eine Drehbewegung um eine Rotationsachse in Eingriff bringbar ist, um die mechanische Verbindung auszubilden. Das erste Verbindungselement (allgemein: eines der zwei Verbindungselemente) weist einen Stecker auf, wobei dann das zweite Verbindungselement (allgemein: das andere der zwei Verbindungselemente) eine Buchse aufweist. Stecker und Buchse bilden zusammen die elektrische Verbindung aus; hier sind Stecker und/oder Buchse ausgebildet, verkippt zu werden, und/oder wobei der Stecker und/oder die Buchse zumindest partiell eine konische Form aufweisen.

Entsprechend Ausführungsbeispielen kann ein zweiter Abschnitt an einer zweiten Stirnseite ein zweites Verbindungselement aufweisen und/oder der erste Abschnitt an einer ersten Stirnseite ein erstes Verbindungselement. Insofern können diese zwei Abschnitte gleich ausgebildet sein, so dass nicht nur zwei Abschnitte zu einem Träger zusammensteckbar sind, sondern auch eine Mehrzahl von Abschnitten.

Entsprechend einem Ausführungsbeispiel erstreckt sich der Stecker und/oder die Buchse sich im Wesentlichen längs einer Längsrichtung des ersten und/oder zweiten Abschnitts.

Ausführungsbeispielen der vorliegenden Erfindung liegt die Erkenntnis zugrunde, dass durch die Verwendung von Steckverbindungen, die, z. B. bezüglich ihrer Flexibilität oder Geometrie an die Bewegung des ersten und zweiten Trägers, wenn diese aneinandergefügt werden, angepasst sind, die mechanische und elektrische Verbindung gleichsam sicher und effizient ausgebildet werden kann. Eine Variante hierbei ist es, die Stecker und/oder die Buchse flexibel beziehungsweise freihängend zu lagern. Wenn man beispielsweise davon ausgeht, dass die Verbindungselemente mit den Haken eine Rotationsbewegung ausführen, verläuft die Fügerichtung von Stecker und Buchse tangential auf einem Radius um die Rotationsachse der Rotationsbewegung, mit welcher die zwei Verbindungselemente in Eingriff gebracht werden. Durch die flexible Lagerung beziehungsweise drehbare Lagerung ist es möglich, dass sich die Ausrichtung von Stecker und/oder Buchse während der Rotationsbewegung variiert, so dass es nicht zu einem Verkanten oder Verklemmen von Stecker und Buchse infolge der gebogenen Fügebahn kommt. Anders ausgedrückt heißt es, dass beim Fügen von Stecker und Buchse sich diese so ausrichten, dass das Fügen auch entlang einer Rotationsbahn erfolgen kann. Diese Ausrichtung wird durch die Freiheitsgrade von Stecker und/oder Buchse realisiert. Additiv oder alternativ kann die Geometrie von Stecker und/oder Buchse entsprechend angepasst sein, so dass es beim Zusammenfügen von Stecker und Buchse entlang einer, auf einer Kreisbahn verlaufenden, Fügerichtung nicht zum Verklemmen kommt. Beispielsweise wäre es denkbar, dass Stecker und/oder Buchse konisch oder zumindest partiell konisch ausgeführt sind. Hierdurch kommt es zu einer Zentrierung und einem Ineinandergleiten von Stecker und/oder Buchse. Beispielsweise kann der Stecker im vorderen Bereich konisch ausgeführt sein, so dass eine Art Anphasung vorliegt. Die konische Form kann mit oder ohne die flexible Lagerung vorteilhafterweise sicherstellen, dass Stecker und Buchse elektrisch miteinander in Verbindung gebracht werden, wenn die mechanische Verbindung entlang einer Rotationsachse erfolgt.

Entsprechend Ausführungsbeispielen sei darauf hingewiesen, dass der Stecker beispielsweise eine konische Spitze oder eine sich verjüngende Spitze oder auch eine Anphasung aufweisen kann. Die konische Form kann entsprechend weiteren Ausführungsbeispielen auch nur partiell vorliegen, das heißt, dass diese sich nicht zwingend entlang des gesamten Umfangs des beispielsweise runden Steckers und/oder über die gesamte Länge erstecken muss. Entsprechend einem Ausführungsbeispiel weist die Buchse eine konische Öffnung auf, das heißt also, dass diese sich beispielsweise zur Öffnung hin mit ihrem Durchmesser aufweitet.

Entsprechend Ausführungsbeispielen ist Stecker und/oder Buchse um eine oder mehrere Rotationsachsen (beispielsweise eine Rotationsachse Stecker oder eine Rotationsachse Buchse) rotierbar, um die flexible Lagerung auszubilden. Entsprechend einem Ausführungsbeispiel können die Rotationsachsen parallel zu der Rotationsachse verlaufen, um die das mechanische Einhaken erfolgt.

Wie oben bereits angedeutet, kann eine Selbstzentrierung von Stecker und/oder Buchse erfolgen. Diese kann beispielsweise durch ein oder mehrere Magnete unterstützt werden, die beim Fügen Stecker und/oder Buchse führen beziehungsweise gegenseitig aufrichten, so dass ein Kontakt hergestellt wird. Die Magnetkraft hat einen weiteren Vorteil, nämlich, dass hier der Kontakt auch ausgebildet bleibt, wenn es zu Vibrationen oder ähnlichen kommt. Insofern sind die Magnete ausgebildet, um Stecker und Buchse zueinander zu fixieren.

Bezüglich des Steckers und/oder der Buchse sei angemerkt, dass diese Pole beziehungsweise magnetische Pole umfassen, über welche die elektrische Verbindung ausgebildet wird. Durch die Verwendung einer Mehrzahl von Polen kann sichergestellt werden, dass sowohl eine elektrische Verbindung als auch eine Datenverbindung ermöglicht wird. Natürlich ist es auch denkbar, dass nur eine elektrische Verbindung im Sinne von Energieversorgung oder nur eine Datenverbindung im Sinne von Datenkommunikation erfolgt.

Entsprechend Ausführungsbeispielen weist das erste Verbindungselement und/oder das zweite Verbindungselement einen Mechanismus zur mechanischen Fixierung des ersten und des zweiten Verbindungselements auf; beispielsweise kann das erste Verbindungselement einen Hebelmechanismus und/oder einen Hebelmechanismus mit einem Exzenter aufweisen, um das erste Verbindungselement mit dem zweiten Verbindungselement translatorisch zu fixieren.

Entsprechend Ausführungsbeispielen weist der Haken des ersten und/oder des zweiten Verbindungselements oder die Haken des ersten und/oder des zweiten Verbindungselements eine Eingriffsfläche auf, die im Wesentlichen senkrecht zu der Längsrichtung des jeweiligen Abschnitts geöffnet ist. Entsprechend Ausführungsbeispielen ist die Drehbewegung durch einen Endanschlag definiert, der eine Berührung der ersten und zweiten Stirnseite voraussetzt.

Entsprechend weiteren Ausführungsbeispielen weist das Messsystem ein Befestigungselement auf. Dieses ist mit der Baumaschine oder einer Komponente der Baumaschine verbindbar und weist hierzu ein erstes und/oder ein zweites Verbindungselement auf. Das kann beispielsweise derart erfolgen, dass der erste Abschnitt mit der Baumaschine oder der Komponente der Baumaschine verbindbar ist.

Entsprechend Ausführungsbeispielen kann der erste und/oder der zweite Abschnitt auf einer Längsseite senkrecht zu der Längsachse des ersten und des zweiten Abschnitts ausgerichtete Sensorköpfe aufweisen. Anders ausgedrückt heißt es, dass die Sensorköpfe auf den Untergrund (im eingebauten Zustand) gerichtet sind, d. h. die Sensorköpfe sind auf die bereits aufgebrachte Schicht bzw. auf den Untergrund für die aufzubringende Schicht ausgerichtet. Wie oben bereits erläutert, sind die Sensorköpfe befestigt bzw. integriert, wobei je Abschnitt eine Vielzahl, das heißt mindestens drei Sensorköpfe befestigt / integriert sind. Umso höher die Anzahl bzw. Dichte der Sensoren ist, umso besser werden Unebenheiten einer bestimmten Wellenlänge, z.B. 5 m ausgeregelt.

Entsprechend weiteren Ausführungsbeispielen kann das Messsystem je ersten und/oder zweiten Abschnitt oder je Träger zumindest einen ersten weiteren Sensorkopf aufweisen, der parallel zu der Längsachse ausgerichtet ist und/oder der an der ersten und/oder zweiten Stirnseite angeordnet ist; und/oder wobei der erste weitere Sensorkopf ausgebildet ist, um eine Referenzmessung durchzuführen. Hier kann entsprechend Ausführungsbeispielen das Messsystem je ersten und/oder zweiten Abschnitt einen zweiten Sensorkopf aufweisen, der entlang der Längsachse des jeweiligen ersten und/oder zweiten Abschnitts oder des Trägers angeordnet ist und sich an der gegenüberliegenden Stirnseite zu dem ersten weiteren Sensorkopf befindet. Zur Bestimmung der Referenz kann entsprechend weiteren Ausführungsbeispielen das Messsystem an der ersten und/oder zweiten Stirnseite einen Reflektor (z.B. parallel zu der Längsachse) oder einen geneigten Reflektor (z.B. 135° geneigt zu der Längsachse) aufweisen. Der Reflektor kann auch in der Aufnahme eines und/oder mehrerer Sensorköpfe integriert/ausgebildet sein. Entsprechend weiteren Ausführungsbeispielen wäre es auch denkbar, dass das Messsystem je ersten und/oder zweiten Abschnitt oder je Träger zumindest einen zusätzlichen Sensorkopf aufweist, der parallel zu der Längsachse ausgerichtet ist und/oder der an der ersten und/oder zweiten Stirnseite angeordnet ist; der zusätzliche Sensorkopf ist ausgebildet, um einen Abstand zu einem Objekt, das eine Relativbewegung gegenüber der Baumaschine oder einer Komponente der Baumaschine durchführt, zu bestimmen.

Ein weiteres Ausführungsbeispiel bezieht sich auf eine Baumaschine, wie z. B. eine Straßenbaumaschine mit einem oben erläuterten Messsystem.

Ausführungsbeispiele der vorliegenden Erfindung werden beiliegend anhand der folgenden Figuren erläutert. Es zeigen:

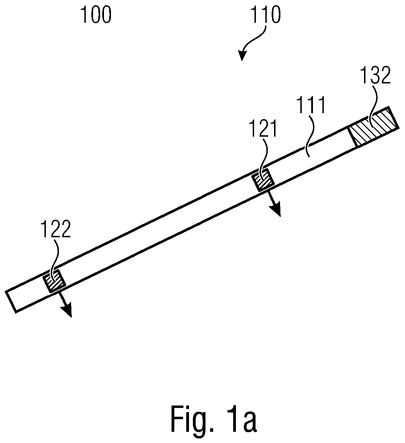

- Fig. 1a: eine schematische Darstellung eines Abschnitts mit Sensorköpfen für eine Messanordnung gemäß Beispielen;

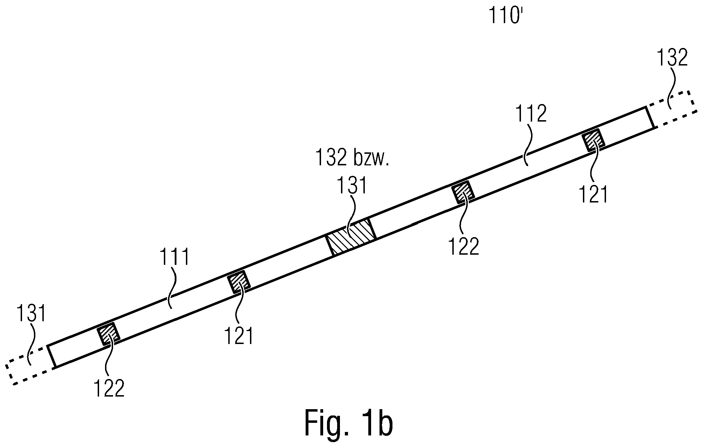

- Fig. 1b: eine schematische Darstellung zur Illustration der Kaskadierung von mehreren Trägern bei einer Messanordnung gemäß weiteren Beispielen;

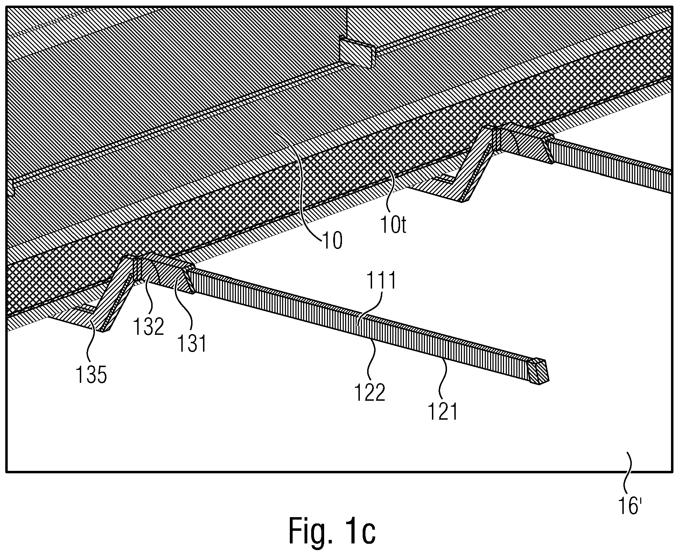

- Fig. 1c - 1e: eine schematische Darstellung für die Applizierung der Messanordnung an einem Straßenfertiger gemäß weiteren Beispielen;

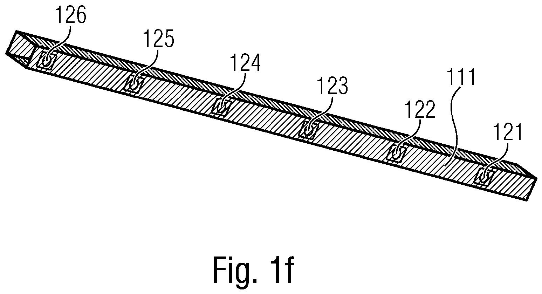

- Fig. 1f: eine schematische Darstellung eines Abschnitts im Detail gemäß Beispielen;

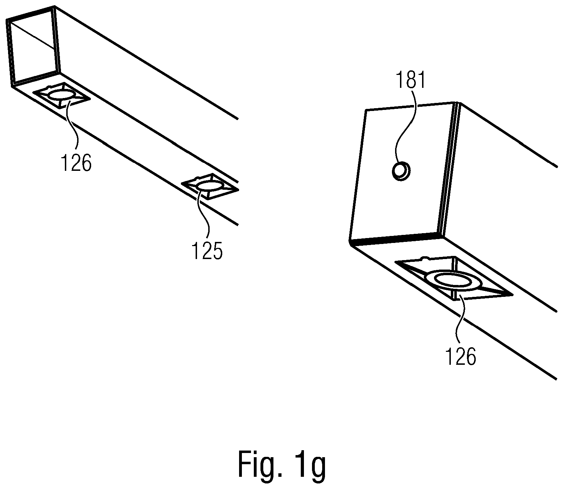

- Fig. 1g: eine schematische Darstellung eines Sensorkopfs zur Integration gemäß Beispielen;
- Fig. 1h - 1j: schematische Darstellungen von Verbindungsmöglichkeiten zwischen Abschnitten bzw. Verbindern und einem Abschnitt;
- Fig. 1w - 1z: schematische Darstellungen einer bevorzugten Verbindungsmöglichkeiten auf Basis eines Hakens gemäß Ausführungsbeispielen der vorliegenden Erfindung;
- Fig. 1k - 1n: eine schematische Darstellung von Abständen zwischen Sensorköpfen bei einem Abschnitt;
- Fig. 1o und 1p: schematische Darstellungen von entstehenden Welligkeiten bei aufgetragenen Schichten zur Illustration von unterschiedlichen Anzahlen von Sensoren;
- Fig. 1q bis 1v: schematische Darstellungen von Anordnungen zur Referenzmessung;
- Fig. 2a: eine schematische Darstellung eines Schichtdickenmesssystems unter Verwendung einer Regressionsgerade gemäß einem Beispiel;
- Fig. 2b: eine schematische Darstellung des dreidimensionalen Raums zur Erläuterung der Bestimmung einer Regressionsgerade bei einer Vielzahl von Abstandspunkten;
- Fig. 2c bis 2e: eine schematische Darstellung zur Illustration eines Schichtdickenmesssystems basierend auf der Bestimmung von Regressionsgeraden;
- Fig. 3a: eine schematische Darstellung eines üblichen Regelkreises für die Nivellierung der Bohle;
- Fig. 3b: eine schematische Darstellung der Regelstrecke beim System Bohle-Zugarm;
- Fig. 3c: eine schematische Darstellung einer Regelkreisstruktur für die Bohlennivellierung gemäß einem Beispiel;
- Fig. 3d: eine schematische Darstellung einer Regelkreisstruktur für die Bohlennivellierung gemäß erweiterten Beispielen;
- Fig. 3e: eine schematische Darstellung der Illustration der Störgrößen, die am System Bohle-Zugarm wirken zur Erläuterung von Beispielen;
- Fig. 3f: eine schematische Darstellung einer Einbausituation Bahn an Bahn;
- Fig. 3g: eine schematische Darstellung einer Seilabtastung mit zwei Sensoren;
- Fig. 3h: eine Seilabtastung mit Bohlensensor und Big Sonic-Ski für die Zugpunktregelung;
- Fig. 3i: eine schematische Darstellung eines Aufbaus eines 3D-Systems mit Totalstation und Big Sonic-Ski;
- Fig. 3j: eine schematische Darstellung einer Nivellierung mit einer Totalstation und zwei Prismen;
- Fig. 3k: eine schematische Darstellung einer Nivellierung mit Laser; und
- Fig. 4: einen bekannten Straßenfertiger.

Nachfolgend werden Ausführungsbeispiele der vorliegenden Erfindung anhand der beiliegenden Zeichnungen erläutert. Hierbei sind gleichwirkende Elemente und Strukturen mit gleichem Bezugszeichen zu versehen, so dass die Beschreibung derer aufeinander anwendbar bzw. austauschbar ist.

### Ausgangsaspekt

Nachfolgend wird bezugnehmend auf einen Ausgangsaspekt eine Sensoranordnung 100 erläutert. Diese umfasst in seiner einfachsten Ausführung einen Träger 110, der zumindest einen Abschnitt 111 umfasst. In diesem Abschnitt 111 sind zumindest zwei Sensoren 121, 122 integriert (allgemein befestigt). Diese Sensoren sind beabstandet voneinander angeordnet. Darüber hinaus umfasst der Träger 110 ein zweites Verbindungselement 132, das mit einem ersten Verbindungselement (nicht dargestellt) verbindbar ist. Das Verbindungselement 132 sowie auch das nicht dargestellte erste Verbindungselement sind dazu ausgebildet, um erstens eine mechanische Verbindung und zweitens eine elektrische Verbindung auszubilden. Unter einer elektrischen Verbindung wird beispielsweise eine Kontaktverbindung, eine kontaktlose Verbindung, wie z. B. eine induktive Verbindung verstanden. Der Träger 110 und damit auch der Abschnitt 111 kann beispielsweise eine Vierkantform (vgl. Trägerabschnitt 111 aus Fig. 1f) aufweisen. Wie insbesondere aus Fig. 1f zu erkennen ist, sind die integrierten Sensorelemente 121, 122 ff. in den Träger integriert und alle in der gleichen Richtung ausgerichtet.

Wenn man von der Einbausituation des Trägers 110 parallel zum Untergrund ausgeht und weiter davon ausgeht, dass die Sensoranordnung 100 dazu verwendet werden soll, um einen Abstand zum Untergrund zu messen, sind alle Sensorköpfe 121, 122 ff. zum Boden hin ausgerichtet. Anders gesagt heißt es, dass diese einen Abtastbereich haben, der sich senkrecht zu der Längsachse des Trägers 110 bzw. Abschnitt 111 erstreckt.

Durch die Integration der Sensoren 121 und 122, wobei Integration heißt, dass diese vollständig in das Rohr des Abschnitts 111 eingebettet sein können oder auch einfach nur mit diesem verbunden sein können, wird der Montageaufwand erheblich reduziert, da nur noch der Abschnitt 111 an der Baustelle montiert wird und nicht mehr die einzelnen Sensorköpfe. Anders gesagt heißt es, dass die Sensorköpfe 121 und 122 zusammen mit dem Abschnitt 111 transportierbar sind. Der Abschnitt 111 des Trägers ist über die Schnittstelle 132 entweder mit einer Aufnahmevorrichtung an der Baumaschine oder mit einem weiteren Abschnitt verbindbar, wie beispielsweise in Fig. 1b gezeigt ist.

Fig. 1b zeigt einen Träger 110' mit einem Abschnitt 111 und einem Abschnitt 112. Jeder Abschnitt umfasst eingebettete Sensorköpfe 121 und 122. Die Verbindung zwischen den zwei Abschnitten 111 und 112 erfolgt über die Verbindungselemente 131 und 132, die zueinander kompatibel und jeweils an der Stirnseite angeordnet sind. Der Vollständigkeit halber sei darauf hingewiesen, dass entsprechend optionalen Beispielen jeder Abschnitt 111 und 112 auch noch weitere Verbindungselemente 131 und 132 an der jeweils gegenüberliegenden Stirnseite aufweisen kann.

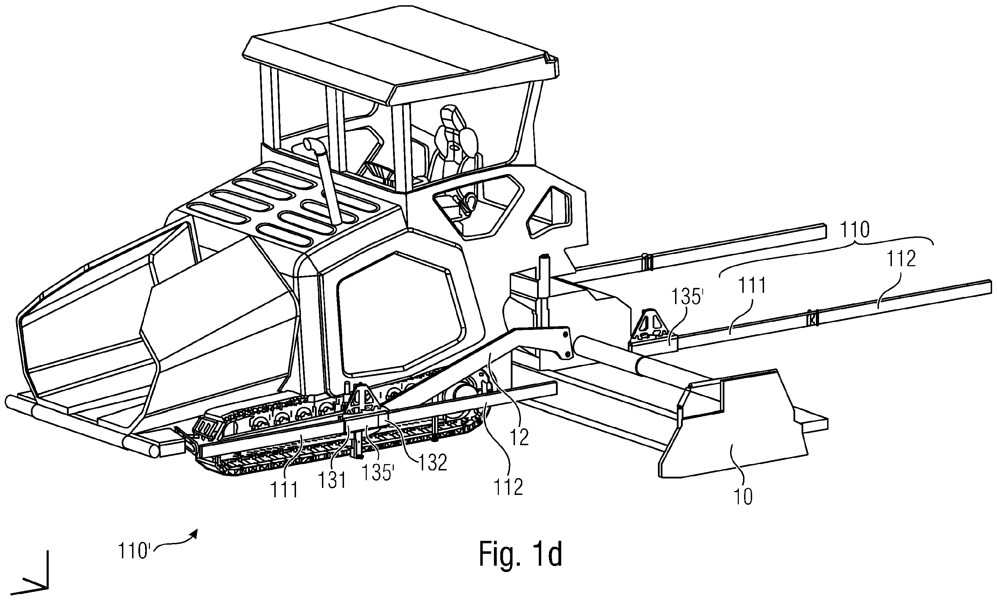

Bezugnehmend auf Fig. 1a und 1b sei angemerkt, dass der Träger 110 beispielsweise aus einem Abschnitt 111 oder auch aus einer Mehrzahl von Abschnitten 111 und 112 bestehen kann. Nachfolgend werden bezugnehmend auf Fig. 1c und 1d unterschiedliche Einbausituationen erläutert.

Fig. 1c zeigt den Abschnitt 111, der hier das Verbindungselement 131 umfasst. Das Verbindungselement 131 ist mit einem Verbinder 135, das das Verbindungselement 132 aufweist, verbunden. Der Verbinder 135 ist mit der Maschine angekoppelt. In diesem Beispiel mit der Bohle 10. Der Verbinder 135 erstreckt sich in diesem Beispiel s-förmig unterhalb des Trittbretts 10t der Bohle 10 längs in Fahrtrichtung nach hinten. Die Sensorköpfe 121 und 122 sind exemplarisch eingezeichnet. Wie zu erkennen ist, sind diese derart orientiert, dass eine Abtastung des Untergrunds 16' bzw. hier der aufgebrachten Materialschicht 16' erfolgt.

Beispielsweise kann der Abschnitt 111 ein oder zwei Meter bzw. allgemein in der Größenordnung zwischen 50 und 300 cm lang sein. Um insgesamt einen längeren Bereich abtasten zu können, ist entsprechend weiteren Beispielen eine Kaskadierung des Trägers 110 durch Verbindung von zwei Abschnitten 111 und 112 möglich. Das ist in Fig. 1d gezeigt.

Fig. 1d zeigt einen Abschnitt 111, der mit einem Abschnitt 112 fluchtend verbunden ist. Die beiden Abschnitte 111 und 112 bilden zusammen den Träger 110 der Sensoranordnung. Die Sensoranordnung 110 ist über einen Verbinder 135' mit der Bohle 10 verbunden, so dass sich die Sensoranordnung 110 in etwa in Fahrtrichtung von der Bohle nach hinten erstreckt. Durch die Kombination von zwei Abschnitten 111 und 112 kann ein längerer Bereich abgetastet werden, wobei das Handling, insbesondere wie beim Auf- und Abbau, optimiert ist. Das wird dadurch erreicht, dass die Abschnitte 111 und 112 voneinander trennbar sind und so einzeln verstaut werden können. Beim Aufbau einer derartig langen Sensoranordnung 110 muss nur der Abschnitt 111 mit dem Element 135 verbunden werden und der Abschnitt 112 mit dem Abschnitt 111. Wie bereits im Zusammenhang mit Fig. 1a und 1b erläutert, sind die Verbindungselemente 131 und 132 derart ausgelegt, dass neben der mechanischen Verbindung auch eine elektrische Verbindung ausgebildet wird. Insofern sind keine zusätzlichen Verkabelungen zur Kontaktierung des Abschnitts 112 notwendig, was den Montageaufwand erheblich reduziert.

Fig. 1d zeigt eine weitere exemplarische Einbausituation am Zugarm 12. Am Zugarm 12 ist ein weiterer Halter 135' angeordnet, der sowohl ein erstes Verbindungselement 131 und ein zweites Verbindungselement 132 aufweist. Die Sensoranordnung 110' umfasst wiederum zwei Abschnitte 111 und 112, wobei sowohl der Abschnitt 111 über sein Verbindungselement 132 mit dem Verbinder 135' verbunden ist als auch der Abschnitt 112 mit seinem Verbindungselement 131. Anders gesagt heißt es, dass das Element 135', das fest mit der Maschine bzw. dem Zugarm 12 der Maschine verbunden ist, zwischen den zwei Abschnitten 111 und 112 des Trägers liegt. Beide Abschnitte sind, wie auch bei der Sensoranordnung 110 aus Fig. 1d gleich orientiert, so dass eine Abtastung des Untergrunds bzw. der aufgebrachten Schicht erfolgt.

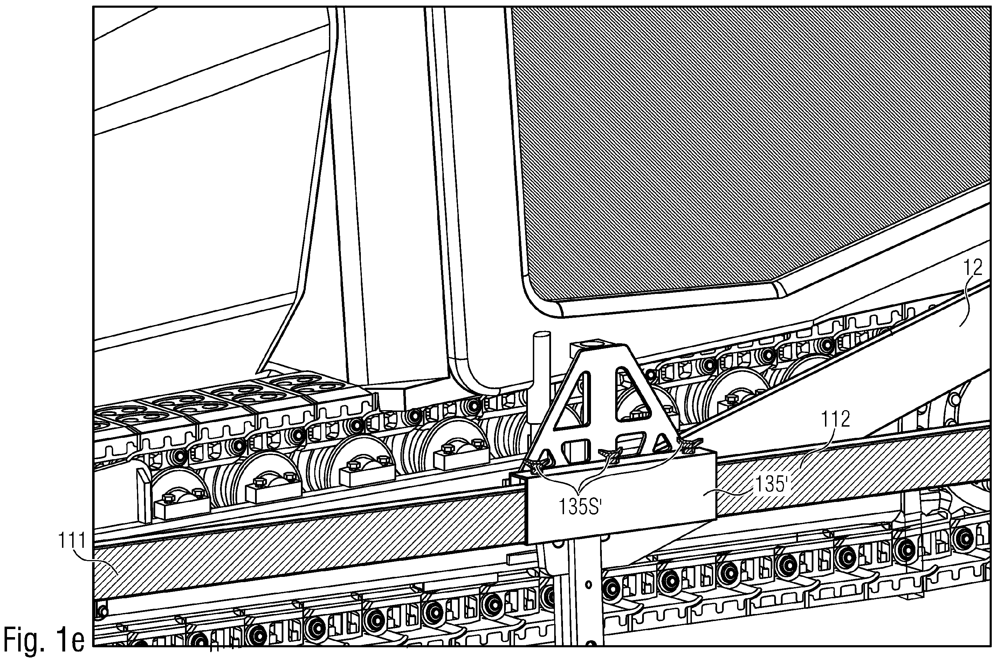

Dieses Beispiel hat also gezeigt, dass nicht nur eine Kaskadierung wie bei der Anordnung 110 durch Serienschaltung, sondern auch eine Kaskadierung durch gemeinsames Verbinden mit einem gemeinsamen Verbinder 135' möglich ist. Über diese Kaskadierung ist es natürlich auch möglich, dass das Messsystem einen dritten Abschnitt aufweist, der z.B. in Reihe angeordnet ist. Des Weiteren hat dieses Beispiel gezeigt, dass unterschiedliche Anbringungspositionen, z. B. an der Bohle 10 selbst oder am Zugarm 12 möglich sind. Wichtig ist, dass das Element 135' jeweils fix mit der Bohle 10 oder dem Zugarm 12 verbunden ist. Hierzu eignen sich Schraubverbindungen, Schweißverbindungen oder andere Verbindungen. Beispielsweise kann dieses Element 135' direkt mit der Maschine verbunden bleiben, während nachts die Technologie tragenden Sensorelemente/Abschnitte 111 und 112 demontiert werden. Das Element 135' der Sensoranordnung 110' ist in Fig. 1e dargestellt. Fig. 1e zeigt das Element 135', bei welchem auf der ersten Seite der Abschnitt 111 verbunden ist und auf der zweiten Seite der Abschnitt 112. In diesem Beispiel ist das Verbindungselement 135 als Art Hülse geformt, das von der Querschnittsform dem Querschnitt der Profile 111 und 112 entspricht (hier rechteckig, alternative anderer z.B. runder Querschnitt), wobei die Dimensionierung, insbesondere die Innendimensionierung der Hülse des Elements 135' derart gebildet ist, dass die Elemente 111 und 112 eingeschoben werden können. Mittels den hier dargestellten Schrauben 135s' kann eine Fixierung der Elemente 111 und 112 erfolgen. Die elektrische Verbindung ist nicht dargestellt.

Entsprechend Beispielen wird das oder kann das Element 135' gegenüber dem Zugarm 12 verdreht werden, um die Sensoranordnung 110 oder 110' parallel zum Untergrund auszurichten. An dieser Stelle sei gleich angemerkt, dass dies nicht zwingend erforderlich ist, da mit dem Prinzip der Verwendung einer Regressionsgerade, das im Zusammenhang mit Aspekt 2 erläutert werden wird, hier auch rechentechnische Korrekturen möglich sind.

Entsprechend Beispielen erstrecken sich die Abschnitte 111 und 112 sowohl bei der Sensoranordnung 110 als auch bei der Sensoranordnung 110' im Wesentlichen fluchtend, so dass alle Sensoren 121 und 122 eine im Wesentlichen parallele Abtastkeule aufweisen.

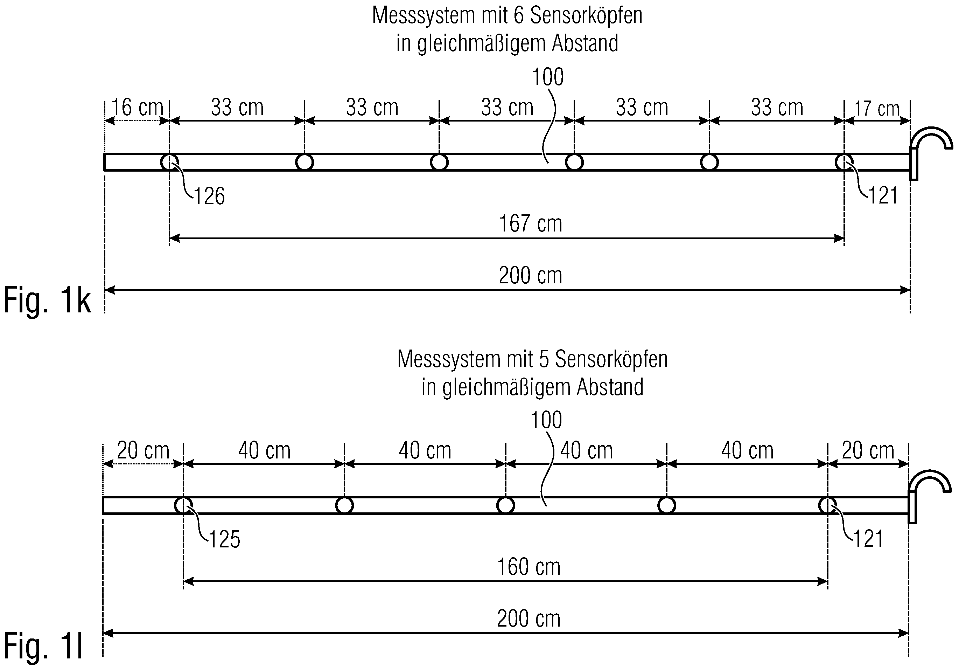

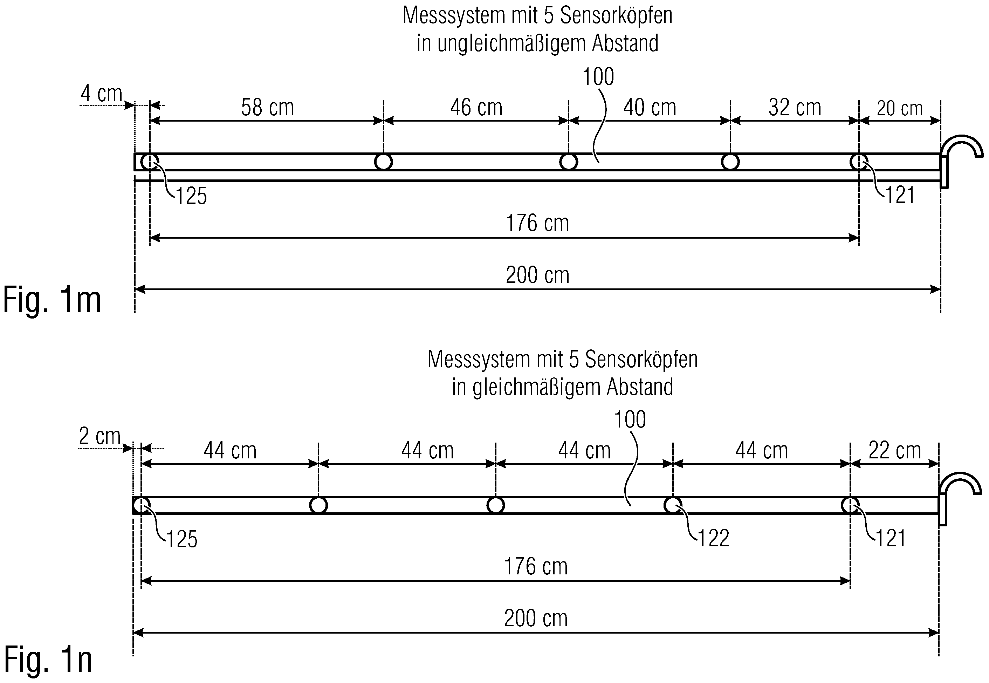

Bezugnehmend auf Fig. 1f wird ein Abschnitt 111 mit seinen Sensoranordnung erläutert. Der Abschnitt 111 kann eine Mehrzahl von Sensorköpfen 121 und 122, wie z. B. hier sechs Sensorköpfe, aufweisen. Diese sind mit dem Bezugszeichen 121 bis 126 markiert. Beispielsweise kann die Anordnung äquidistant sein, wobei auch eine andere Anordnung sinnvoll ist, wie nachfolgend bezugnehmend auf Fig. 1m erläutert werden wird. Auch kann die Anzahl entsprechend variieren (vgl. Erläuterungen im Zusammenhang mit Fig. 1k und 1l).

Die Sensorköpfe 121 bis 126 sind auf einer Seite des hier rechteckigen Profils eingebettet, wie in Fig. 1f und in Fig. 1g gezeigt ist. Fig. 1g stellt ein exemplarisches Profil von 60 x 80 mm dar, wobei auf der schmaleren Seite 60 ein Sensorkopf 126 eingebettet ist. Dieser kann beispielsweise eingeklickt werden oder auch verschraubt werden. Entsprechend Beispielen schließt der Sensorkopf 126 in etwa bündig, das heißt +/- 3 mm oder +/- 10 mm oder +/- 20 mm mit der Oberfläche des Profils ab.

Entsprechend Beispielen handelt es sich bei dem Sensorkopf um einen Ultraschallsensor, wobei auch andere Sensortechnologien, wie z. B. Laser oder kapazitive Sensoren zum Einsatz kommen können. Auch können je Abschnitt 111 oder je Sensoranordnung 110 unterschiedliche Messprinzipien bei den unterschiedlichen Sensorköpfen verwendet werden.

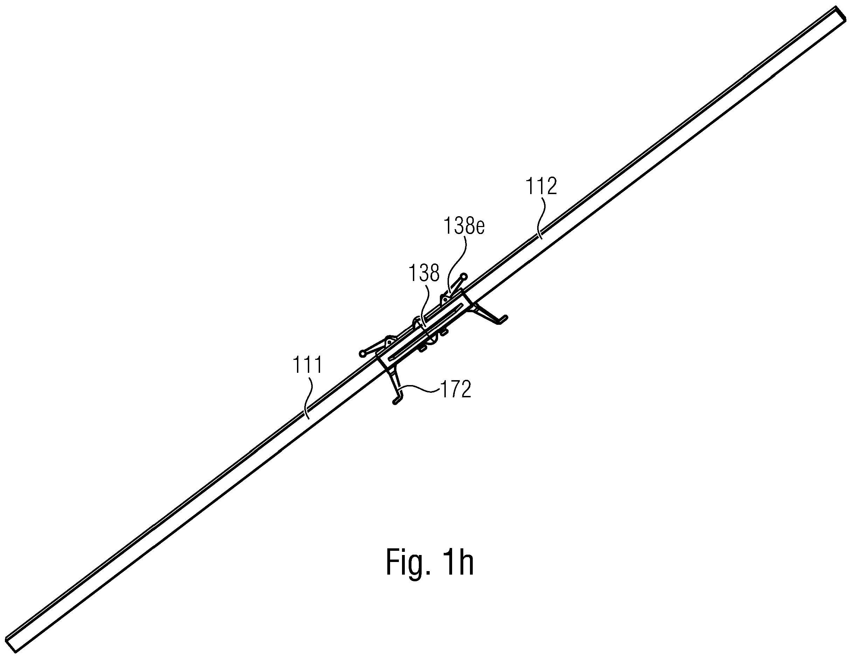

Fig. 1h zeigt die zwei Abschnitte 111 und 112, die mit einem Verbinder 138 miteinander verbunden sind. Die Abschnitte 111 und 112 sind einfache Profile, die in den Verbinder 138 eingeschoben werden und mittels des Exzenters 138e je Seite verbunden werden. Die Profile weisen an den entsprechenden Stirnseiten, an welchen die Verbindung zu dem Verbinder 138 erfolgt, die Verbindungselemente 131 und 132 auf, wobei der Verbinder 138 die entsprechenden Gegenstücke hat, um neben der mechanischen auch die elektrische Verbindung auszubilden. Bei diesem Beispiel kann der elektrische Verbinder beispielsweise durch einen in den Verbinder 138 integrierten Stecker realisiert sein, der in Längsrichtung der Abschnitte 111 und 112 verschlossen wird.

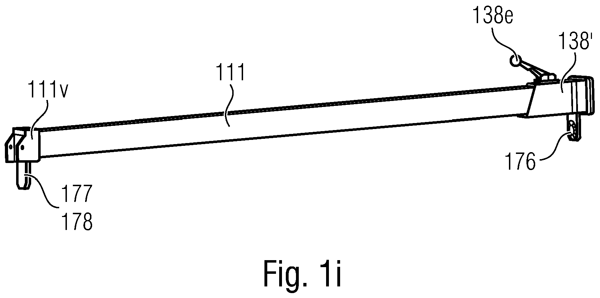

Ein weiteres Beispiel für einen Einschubverbinder ist in Fig. 1i gezeigt. Hier ist ein modifiziertes Verbindungselement 138' mit dem Exzenter 138e dargestellt, in welches der Abschnitt 111 eingeführt ist. Das Verbindungselement 138' kann beispielsweise zu dem weiteren Abschnitt des Trägers gehören oder auch fest mit der Maschine verbunden sein.

Entsprechend einem weiteren Beispiel wäre es auch denkbar, dass statt des Exzenters 138e eine Schraubverbindung mit einer Rändelschraube, wie in Fig. 1e dargestellt, durchgeführt wird. Gemeinsam ist es, dass das Profil 111 bzw. 112 eingeschoben wird und mittels einem weiteren Mittel, wie z. B. einem Exzenter oder einer Schraube fixiert wird. Auch wäre eine Art Schnellverschluss, wie bei Fahrrädern üblich, oder ein Bajonett-Verschluss möglich. An dieser Stelle sei angemerkt, dass der Abschnitt 111 beispielsweise mit einer Verschlusskappe 111v an einer Stirnseite ausgeführt sein kann.

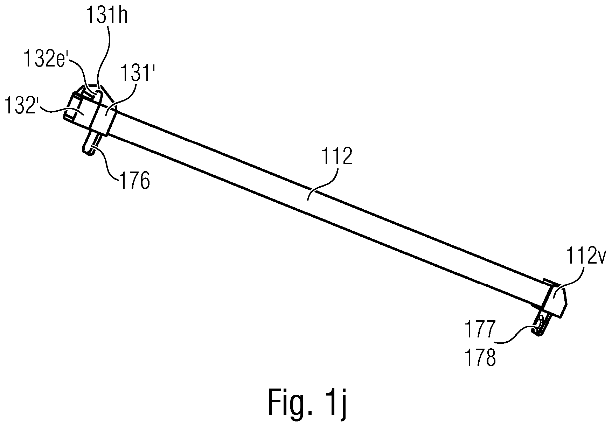

Fig. 1j stellt ein Verbindungskonzept nach der vorliegenden Erfindung dar. In diesem Beispiel weist der Abschnitt 112 als Verbindungselement 131' eine Art Haken 131h' auf, so dass der Haken mit einem Eingriffnahmeabschnitt des Verbindungselements 132' verbindbar ist. Der Eingriffnahmeabschnitt des Elements 132' ist mit dem Bezugszeichen 132e' versehen. Diese zwei Elemente stellen eine mechanische Verbindung her, indem eine rotorische Bewegung des Abschnitts 112 gegenüber dem weiteren Element, an welchem der Abschnitt 112 verbunden werden soll, durchgeführt wird. Bei dieser rotorischen Verbindung kann auch die elektrische Verbindung, z. B. durch Kontakt an den Stirnseiten ausgeführt sein. Die Stirnseite begrenzt die rotorische Bewegung.

Das Element 112 weist wiederum eine Kappe an der gegenüberliegenden Stirnseite auf. Die Kappe mit dem Bezugszeichen 112v versehen.

### Hauptaspekt

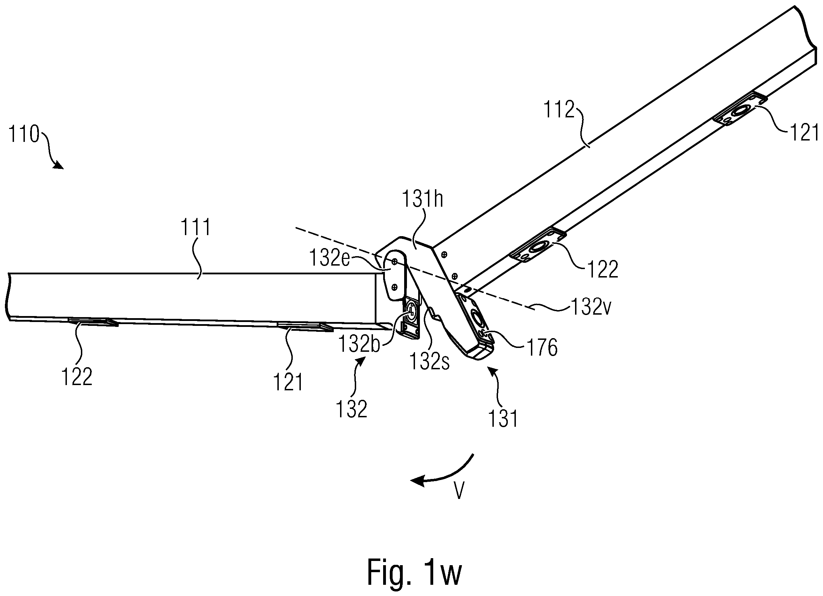

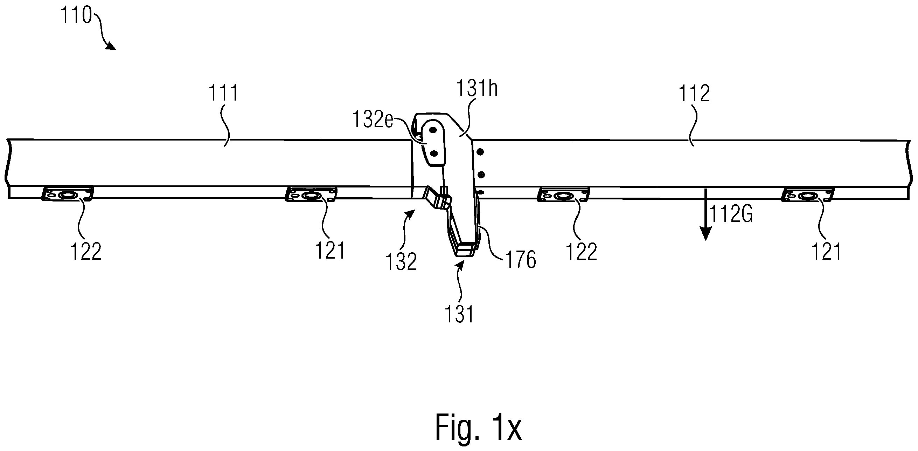

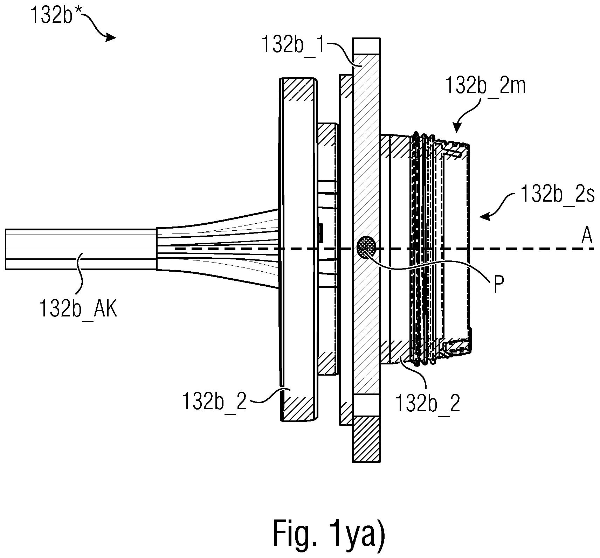

Ausgehend von dem Verbindungskonzept aus Fig. 1j wird nun ein Ausführungsbeispiel der vorliegenden Erfindung Bezug nehmend auf die Fig. 1w, 1x, 1ya), 1yb) und 1z erläutert.

Fig. 1w und 1x stellen einen Träger 110 mit zwei Abschnitten 111 und 112 dar. Die zwei Abschnitte sind miteinander verbindbar und zwar über Verbindungselemente. Diese sind mit den Bezugszeichen 131 und 132 versehen. Das erste Verbindungselement 131 weist einen Haken 131h auf, der in einen Eingriffnahmeabschnitt 132 h, z. B. eine Überhöhung 132e eingreift. Dieses Eingreifen ist in Fig. 1w dargestellt. Jeder dieser Eingriffnahmebereiche 131 und 132 weist an der Stirnseite eine Stirnfläche auf, die als eine Art Anschlag dient, so dass dann nach dem Einhaken die Elemente 111 und 112 miteinander verbunden sind, wie in Fig. 1x dargestellt ist. Hierbei liegen die Stirnseiten der Verbindungselemente 131 und 132 aufeinander, so dass diese einen Anschlag für die Fügebewegung V um die Rotationsachse 132r formt. Wird beispielsweise der Haken 131h des Sensorbalkens 112 zunächst in die Halterung 132e eingehakt, kann der Sensorbalken 112 dann durch eine Bewegung beziehungsweise Drehbewegung V nach unten befestigt / gefügt werden.

Dadurch, dass das Element 131h in den Eingriffnahmeabschnitt 132e eingehakt ist, kann eine Querkraft, zumindest entlang eines Freiheitsgrades, übertragen werden. Das Element 112 und seine Gewichtskraft 112g werden durch den Eingriffnahmeabschnitt 132e abgestützt. Ebenso wird ein Drehmoment resultierend aus der Gewichtskraft 112g durch den Eingriffnahmeabschnitt 132e in Kombination mit dem stirnseitigen Anschlag abgestützt. Infolgedessen erstrecken sich die Abschnitte 111 und 112 fluchtend/längs und formen zusammen den Träger 110. Um die Sensorköpfe 121 und 122 des jeweiligen Abschnitts 111 und 112 mit elektrischer Energie versorgen zu können beziehungsweise Daten dieser übertragen zu können, weist jedes Verbindungselement 131 und 132 zueinander passende elektrische Verbindungselemente auf. Diese sind hier als eine Art Stecker-Buchsen-Paar ausgebildet. Der Stecker ist mit dem Bezugszeichen 132s, die Buchse mit dem Bezugszeichen 132b versehen. Stecker 132s kann sowohl auf Hakenseite 131h als auch auf Eingriffnahmeabschnittseite 132e angeordnet sein. Analog hierzu ist die Buchse entweder auf Seiten des Eingriffnahmeabschnitts 132e oder auf Seiten des Hakens 131h vorgesehen. Sowohl Stecker als auch Buchse sind beispielsweise auf der jeweiligen Stirnseite der Verbindungselemente 131 und 132 vorgesehen und so ausgerichtet, dass diese sich in der Längsrichtung beziehungsweise im Wesentlichen in der Längsrichtung öffnen. Das heißt also, dass der Stecker 132s aus der Stirnseite in Längsrichtung herausragt, während die Buchse 132b von der Stirnseite in Längsrichtung in das Element 111 hineinragt. Geometrisch sind diese so angeordnet, dass bei der Fügebewegung V um die Rotationsachse 132r die beiden Erstreckungsrichtungen von Stecker und Buchse 132s und 132b zueinander ausgerichtet sind beziehungsweise fluchten, so dass ein gutes Fügen der zwei Elemente 132s und 132b möglich ist.

Da die Bewegungsrichtung des Steckers 132s beim Einhaken des Elements 112 um die Rotationsachse 132r entlang einer Kreisbahn verläuft (beziehungsweise Allgemein beim Fügen der Elemente 111 und 112 die Elemente 132s und 132b entlang einer Kreisbahn gefügt werden), ist es wichtig, dass ein Verkanten von Stecker 132s gegenüber Buchse 132b beim Herstellen der elektrischen Verbindung verhindert wird. Hintergrund ist, dass aufgrund der Drehbewegung eine elektrische Verbindung über bekannte Standard-Stecker/Buchsen-Systeme nicht möglich ist, da diese im Regelfall nur dann gut funktionieren, wenn beim Zusammenfügen Stecker und Buchse exakt gerade zueinander zeigen (das heißt Stecker und Buchse müssen sich in einer Flucht zueinander gegenüberstehen). Stecker- und Buchsengröße sind bei Standardkomponenten im Regelfall zylindrisch geformt und passen nur zusammen, wenn diese exakt in einer Flucht zueinander geführt beziehungsweise zusammengesteckt werden. Werden diese mechanisch (leicht) verdreht zueinander zusammengeführt, dann wird eine mechanische Kopplung von Stecker und Buchse schwierig. Somit wäre eine sichere elektrische Verbindung bei Standardkomponenten nicht immer möglich. Deshalb besteht der Bedarf nach einem verbesserten Ansatz.

Der verbesserte Ansatz wird durch ein oder mehrere der nachfolgenden Konzepte erreicht:
- Einbringen von Flexibilität in den Stecker 132s und/oder die Buchse 132b;
- Verwenden einer konischen Geometrie für den Stecker 132s und/oder die Buchse 132b.

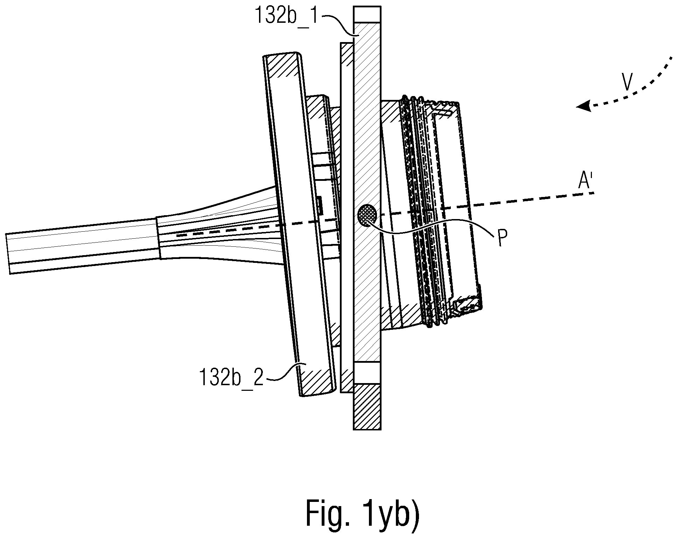

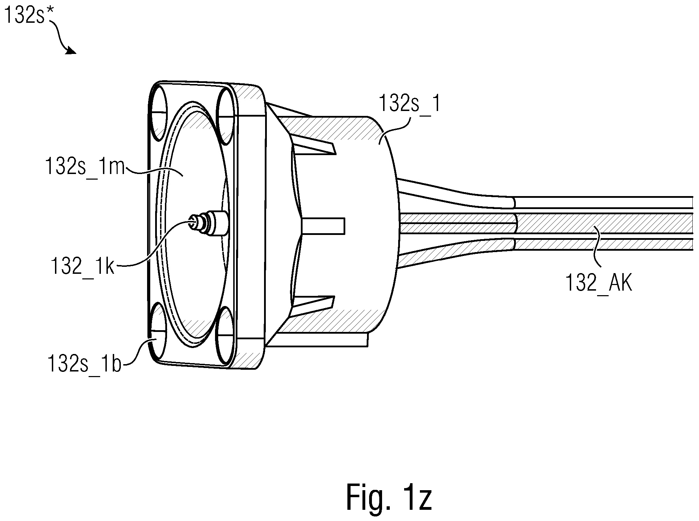

Wie in Fig. 1ya) und 1yb) dargestellt, kann die Steckerbuchse 132B*, z.B. verwendbar als Buchse 132b (vgl. Fig. 1w), flexibel in diesem Fall rotierbar um die Rotationsachse P angeordnet sein. Das Gegenstück 132s* aus Fig. 1z (z.B. verwendbar als Stecker 132s (vgl. Fig. 1w) kann, muss aber nicht zwingend, flexibel ausgeführt sein. Dadurch, dass ein Teil der Steckerverbindung, hier die Steckerbuchse 132B*, flexibel beziehungsweise freihängend gelagert ist, kann diese sich beim Fügen verkippen (vgl. Fig. 1yb)), so dass eine elektrische Verbindung auch bei einer translatorischen Bewegungsbahn von Steckerbuchse 132B* und Steckergehäuse 132S* hergestellt wird. Beispielsweise kann sich das Element 132b_2 aufgrund der flexiblen Lagerung um ca. 5 bis 10° verdrehen, wie anhand der unterschiedlichen Längsachsen A und A' dargestellt ist. Wenn man beispielsweise von der Bewegungsbahn V um die Rotationsachse 132r (vgl. Fig. 1w) des Gegenstücks 132s* ausgeht, kann am Anfang des Fügevorgangs, ausgehend von der Verkippung, das Steckergehäuse 132S* fluchtend gegenüber der Steckerbuchse 132B* liegen, wobei sich während des Fügevorgangs entlang der Bewegungsbahn V die Steckerbuchse 132B* in ihrer Verkippung ändert, so dass sich beispielsweise am Ende des Fügevorgangs der Stecker 132B* in der Ausgangssituation aus Fig. 1ya) befindet.

Entsprechend Ausführungsbeispielen erfolgt die Verkippung eines Elements 132b_2 der Steckerbuchse 132B* um den Punkt P und zwar gegenüber einem fest montierbaren Element 132b_1.

Entsprechend weiteren Ausführungsbeispielen kann, wie oben bereits erläutert, die Steckerbuchse 132B* beziehungsweise insbesondere das Element 132b_2 beziehungsweise 132b_2m eine sich verjüngende Form aufweisen. Im Detail verjüngt sich der Mantel 132b_2m zum vorderen Ende hin, das heißt also zur Stirnfläche 132b_2s. Die Steckerbuchse 132B* weist somit eine konische Form auf.

Entsprechend Ausführungsbeispielen kann auch das Steckergehäuse 132s_1 aus Fig. 1z im Inneren eine konische Form 132s_1m zur Aufnahme der Buchse 132b* aufweisen. Durch die Kombination der konischen Form und der flexiblen Lagerung der Steckerbuchse 132B* ist es möglich, dass sich der Stecker 132s und die Buchse 132b* bei der Drehbewegung des Sensorbalkens 111 mechanisch zusammenführen, so dass eine sichere elektrische Verbindung im gesteckten Zustand entsteht. Man spricht hier von einer selbstzentrierenden Steckverbindung. Der Stecker 132S* und die Buchse 132B* enthalten Kontakte 132s_1k zur Strom und/oder Datenübertragung. Die Bezugszeichen 132b_ak (vgl. Fig. 1ya)) und 132s_ak (vgl. Fig. 1z) bezeichnen jeweils einen Anschluss, das Bezugszeichen 132s_1b bezeichnet eine Gehäusebefestigung.

Ein Beispiel für einen flexiblen und gleichsam konischen Stecker ist der Stecker der Firma Rosenberger (https: //www.rosenberger.com/de/produkt/ropd/).

Entsprechend Ausführungsbeispielen kann ein Magnet im Steckerinneren (nicht dargestellt) vorgesehen sein. Dieser hält die Steckverbindung in gestecktem Zustand geschlossen, ohne dass eine mechanische Verriegelung, z. B. mittels Bajonettverschluss verwendet wird. Dies sorgt für eine sichere mechanische und somit auch elektrische Verbindung beispielsweise bei Vibrationen oder sonstigen äußeren Krafteinwirkungen (wie beispielsweise Stößen, Schlägen, etc.). Wird der Sensorbalken 112 von dem Sensorbalken 111 wieder gelöst/ausgehakt, dann löst sich die Steckverbindung von selbst auf.

Entsprechend Ausführungsbeispielen ist es auch möglich, den eingehakten Sensorbalken 112 mittels einer mechanischen Verriegelung am Sensorbalken 111 zu sichern (beispielsweise mittels eines Bügels). Mechanische Codierung von Stecker 132s* und Buchse 132b* ist entsprechend weiteren Ausführungsbeispielen nicht unbedingt notwendig, da der Sensorbalken 112 ja nur in eine Richtung angebracht werden kann.

An dieser Stelle sei auch angemerkt, dass auch weitere Verbindungsmöglichkeiten denkbar wären. Beispielsweise kann das jeweilige Verbindungselement auch sich orthogonal zu der in Längsrichtung erstreckenden Führungen aufweisen, so dass eine Art Schwalbenschwanzverbindung ausgebildet wird.

Alle diese genannten Verbindungen haben gemein, dass ein Abschnitt an einem Befestigungselement oder mehrere Abschnitte miteinander verbindbar sind, wobei neben der mechanischen Verbindung auch eine elektrische Verbindung ausgebildet wird. Auch ist die Winkelausrichtung des Längsabschnitts durch den Verbinder fixiert.

Nachfolgend wird eine alternative Variante erläutert, die nicht zur vorliegenden Erfindung gehört. Entsprechendem einem alternativen Ausführungsbeispiel kann die elektrische Verbindung auch drahtlos erfolgen. Eine drahtlose Daten und/oder Energieübertragung kann als Alternative zu dem Stecker/Buchse-System gesehen werden. Hier werden dann beispielsweise statt dem Stecker und statt der Buchse jeweils ein Energieübertrager, z. B. eine Induktionsschleife auf Seiten des Eingriffnahmebereichs 131 und auf Seiten des Eingriffnahmebereichs 132 vorgesehen.

D.h. also dass entsprechend Ausführungsbeispielen die Verbindungselemente 131 und 132 kontaktlose Energieübertragungselemente aufweisen können, über welche sowohl eine Energieversorgung zu den Sensorköpfen als auch eine Datenübertagung zwischen den Sensorköpfen und einer Rechnereinheit erfolgt.

Gemäß Ausführungsbeispielen kann das Energieübertragungselement eine Induktionsschleife oder Induktionsspule umfassen oder ausgebildet sein, um induktiv elektrische Energie zu übertragen. Gemäß Ausführungsbeispielen kann das Energieübertragungselement ferner ausgebildet sein, um zusammen mit der elektrischen Energie Daten mit dem Energieempfangsgerät des Sensors auszutauschen.

Ausführungsbeispiele schaffen eine Aufnahmevorrichtung, die eine Mehrzahl an mechanischen Aufnehmern mit jeweils einer Mehrzahl an Energieübertragungselementen für eine Mehrzahl an Träger 110 / Abschnitten 111 und 112 aufweist. Hierbei kann einen Verkabelung vorgesehen sein, über welche das Energieübertragungselement mit elektrischer Energie von der Baumaschine versorgt wird. Gemäß Ausführungsbeispielen ist das Energieempfangselement ausgebildet, um mindestens 5 W oder 10 W elektrische Energie zu empfangen und mindestens 5 W oder 10 W elektrische Energie einem Sensorelement oder einer elektrischen Schaltung bereitzustellen. Hierzu hat z.B. das Energieempfangselement eine Induktionsschleife oder Induktionsspule oder ist ausgebildet, um induktiv elektrische Energie zu empfangen. Das Energieempfangselement kann ferner ausgebildet sein, um Daten auszutauschen. Weitere Ausführungsbeispiele beziehen sich auf eine Aufnahmevorrichtung für eine Baumaschine. Die Aufnahmevorrichtung umfasst einen mechanischen Aufnehmer zur Aufnahme einer Anzeige und ein Energieübertragungselement, welches ausgebildet ist, um zur Energieversorgung der Anzeige an ein Energieempfangselement der Anzeige eine elektrische Energie drahtlos bzw. kontaktlos zu übertragen.

Wie bereits oben erläutert, kann jeder Abschnitt eine Mehrzahl von Sensorelementen 121 ff. umfassen. Bei Fig. 1k wird davon ausgegangen, dass der Abschnitt 100 eine Länge von 2 m (200 cm) hat und die Sensorköpfe 121-126 (hier sechs Sensorköpfe) gleich verteilt sind. Dadurch ergibt sich ein Abstand von 33 cm zwischen den Sensorköpfen, wobei 33/2 cm von der Stirnseite bis zu dem ersten Sensorkopf 121 bzw. bis zu dem letzten Sensorkopf 126 vorgesehen sind. Fig. 1l zeigt einen Abschnitt 100 der Länge von 2 m (200 cm), wobei hier fünf Sensorköpfe 121-125 vorgesehen sind. Der Abstand ist wiederum äquidistant, so dass sich ein Abstand zwischen den Sensorköpfen von 40 cm und von der Stirnseite zum ersten bzw. letzten Sensorkopf 121/125 von 20 cm einstellt.

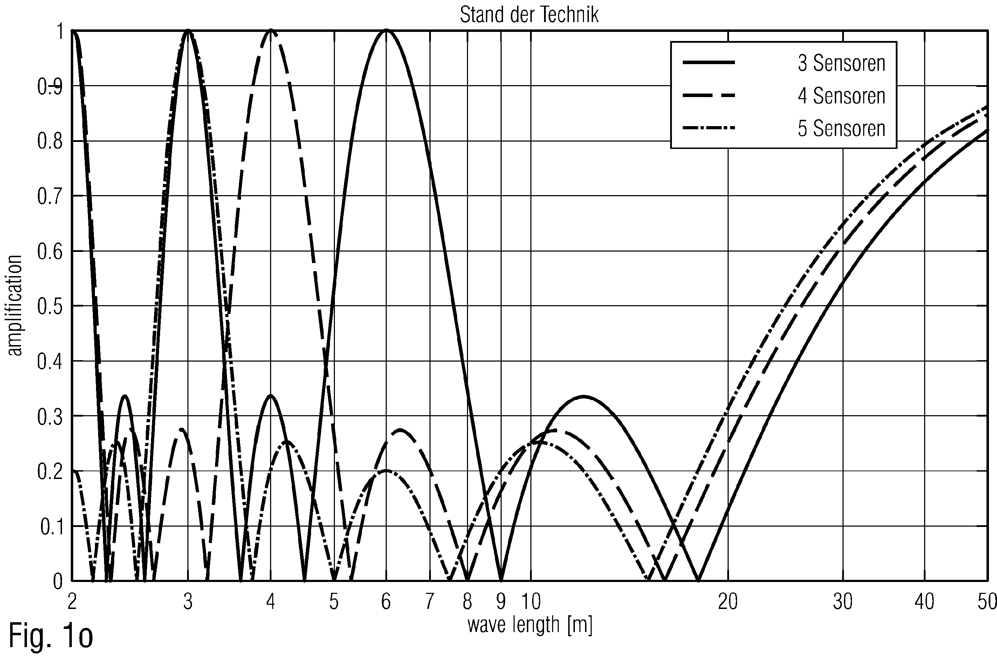

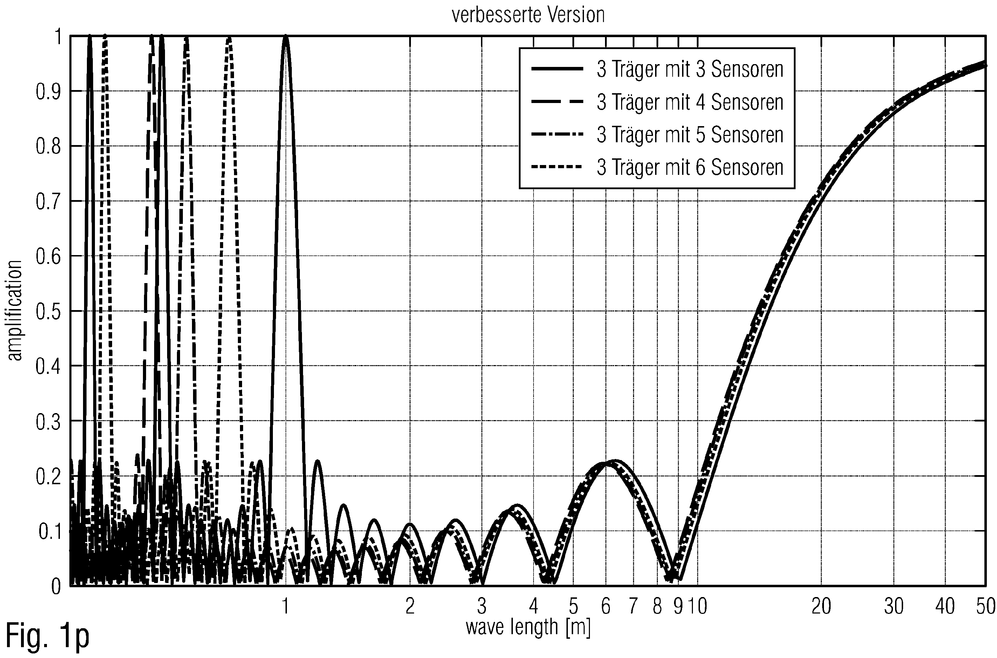

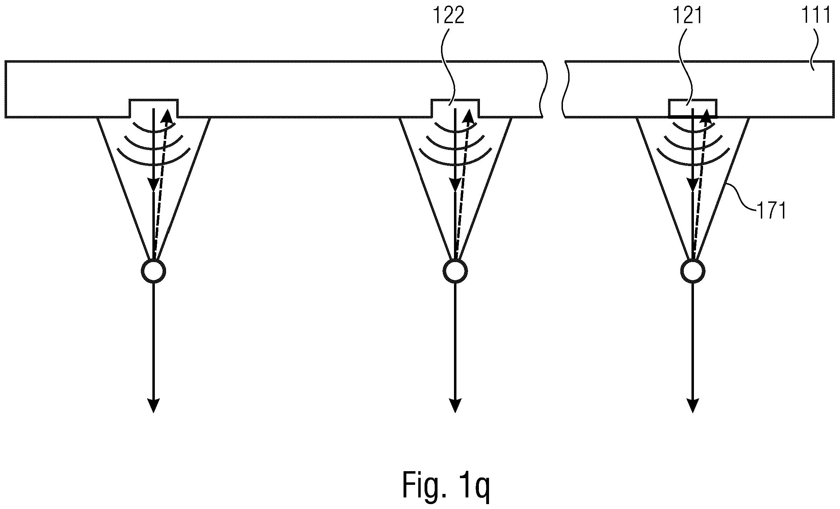

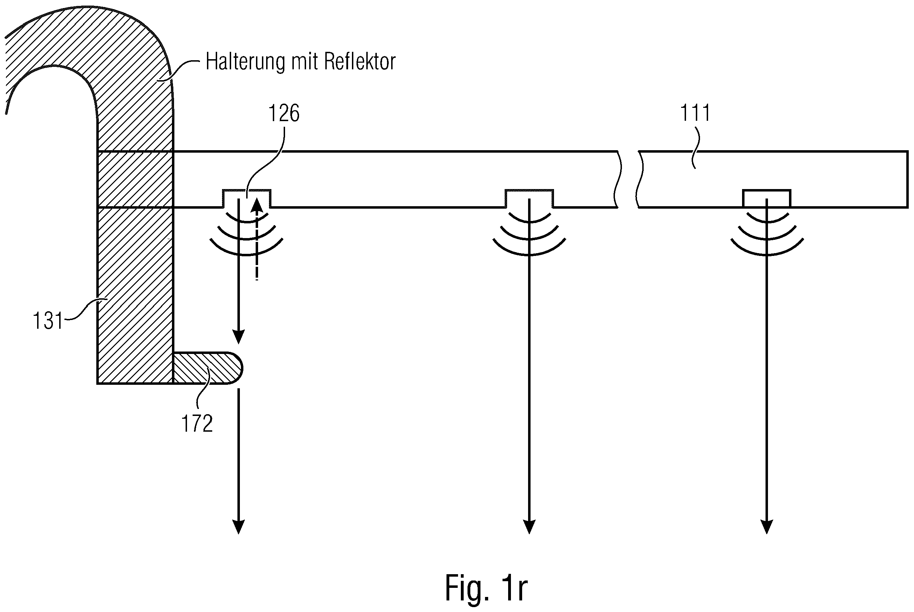

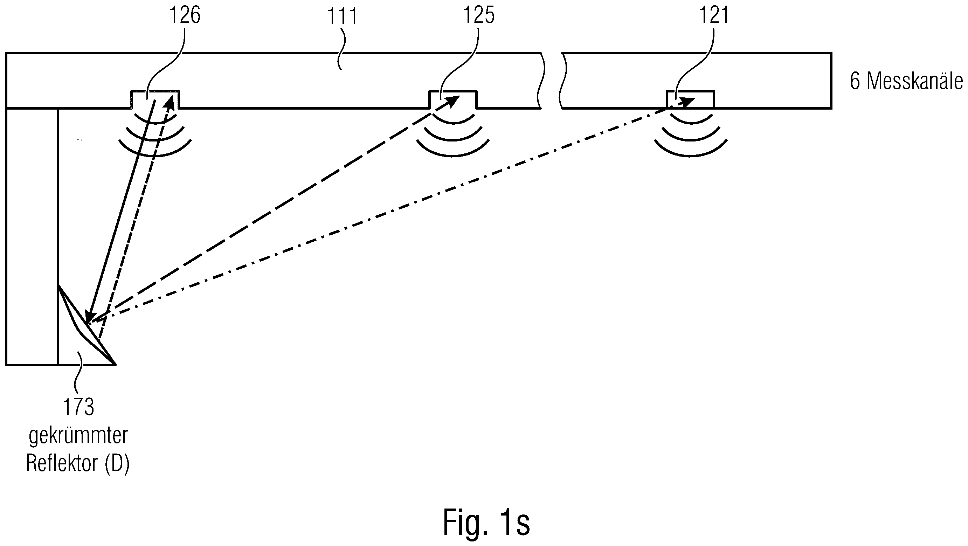

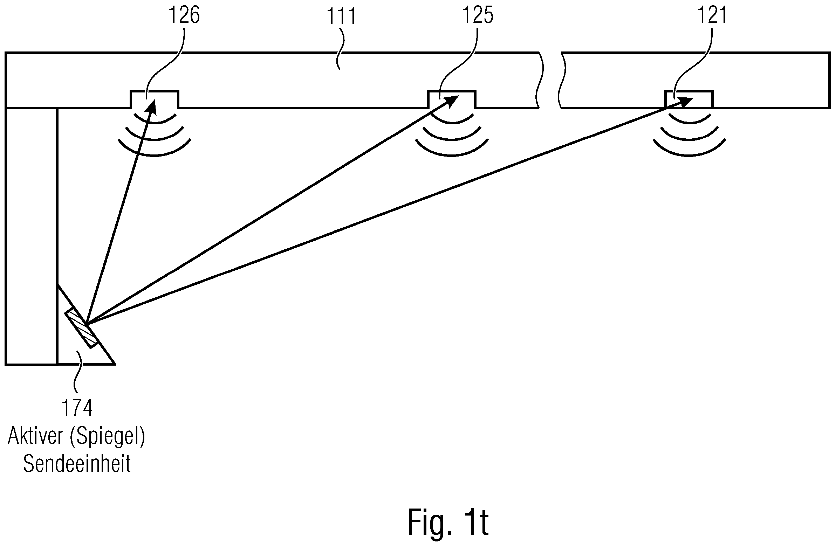

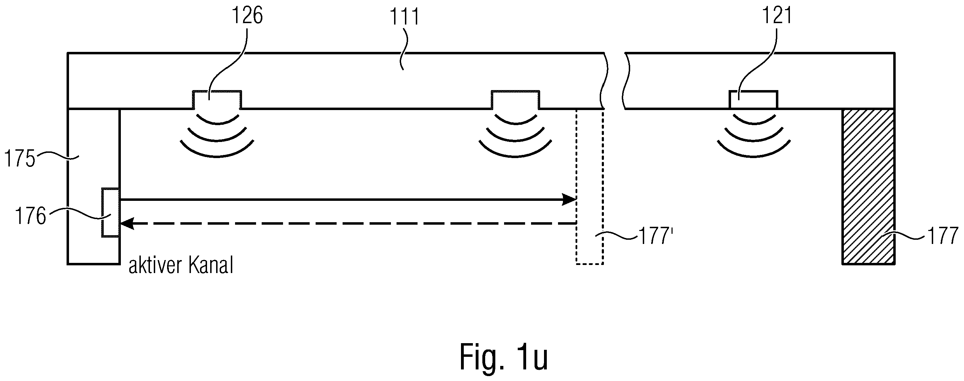

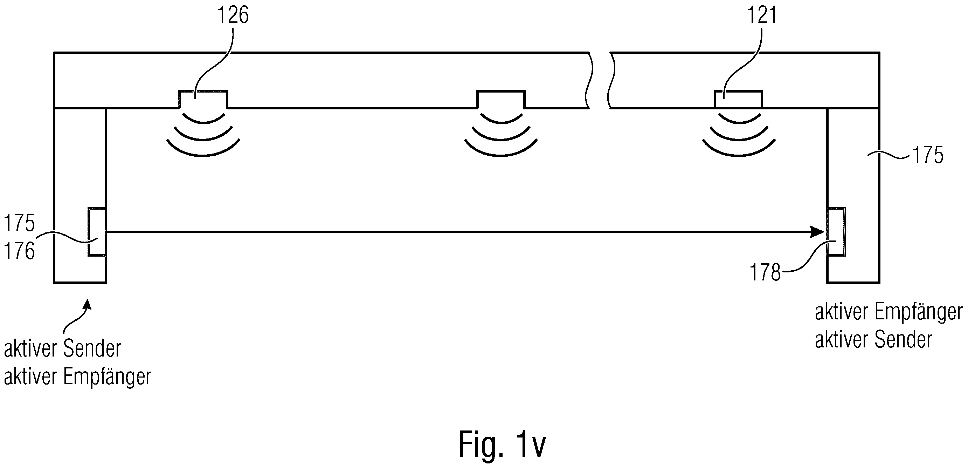

Wie in Fig. 1o und 1p dargestellt ist, hat die Anzahl der Sensorköpfe einen erheblichen Einfluss auf die mögliche Regelung. Fig. 1o zeigt einen Vergleich zwischen einem klassischen Big Sonic-Ski (kurz: Big Ski) mit 12 m Ausdehnung unter Verwendung von drei, vier und fünf Sensoren. Wie zu erkennen ist, gibt es beim Big Sonic-Ski mit drei Sensoren Probleme im Bereich von 6 m, beim Big Sonic-Ski mit vier Sensoren Probleme im Bereich von 4 m und beim Big Sonic-Ski mit fünf Sensoren Probleme im Bereich von 3 m. Dieselben Probleme hat auch der Big Sonic-Ski mit drei Sensoren. Durch die Steigerung der Sensordichte können diese hochfrequenten Probleme (im Vergleich zu Schwingungen) im Bereich von 20 m ff. reduziert werden. Die Verbesserung durch die Verwendung der in Fig. 1 beschriebenen Sensoranordnung ist in Fig. 1p dargestellt. Hier wird von einem 8 m langen Träger ausgegangen, der drei bis sechs Sensoren aufweist. Mit zunehmender Sensorzahl werden die Regelungslücken hochfrequenter, was aber aus der Sicht, dass die Wahrscheinlichkeit für hochfrequente Störungen geringer ist, unkritischer ist.

Zusammenfassend ist also festzustellen, dass eine Steigerung der Sensordichte in Längsrichtung einen Qualitätsvorteil bietet. Insgesamt wird davon ausgegangen, dass bevorzugte Beispiele eine Sensoranordnung mit einer Länge mindestens 4 m aufweisen, das heißt also zwei Abschnitte umfasst. Noch bessere Qualitäten sind mit 6 m oder 8 m langen Sensoranordnungen erreichbar.

Um auch hochfrequente Lücken bzw. allgemein Lücken, die aufgrund von harmonischen Schwingungen herrühren, zu verbessern, kann entsprechend weiteren Beispielen auch ein nicht-äquidistantes Sensormuster je Abschnitt verwendet werden. Solche Beispiele sind für einen Abstand mit fünf Sensorköpfen 121-125 in Fig. 1m dargestellt. Hier nimmt der Abstand von 20 cm zwischen Stirnseite und ersten Sensor 121 zu. Die Abstände sind beispielsweise 32, 40, 46 und 58 sowie 4 cm.

Fig. 1n zeigt eine weitere Darstellung, wobei hier wieder äquidistante Sensoren mit einem Abstand von 44 cm verwendet sind, der Abstand zwischen Stirnseite und dem ersten Sensor 121 allerdings derart gewählt ist, dass auch eine Äquidistanz über zwei Abschnitte hinweg erhalten bleibt. Hier ist der Abschnitt zwischen Stirnseite und dem ersten Sensor so gewählt, dass die Hälfte des Abstands zwischen dem weiteren Sensor bzw. insbesondere dem Sensor 121 und 122 vorliegt.

Nachfolgend werden bezugnehmend auf Fig. 1q-v mögliche Implementierungsbeispiele von Referenzsensoren erläutert. Bei Ultraschallsensoren ist es so, dass diese häufig einen Drift, z. B. in Folge von Umgebungstemperaturen, unterlegen sind und hierfür eine Referenzmessung erfolgen muss. Eine Referenzmessung erfolgt beispielsweise dadurch, dass ein bekannter Abstand mit einem Ultraschallsensor gemessen wird und ausgehend von dem Messsignal, typischerweise eine Zeitspanne zwischen Aussenden und Empfangen des Antwortsignals, dieses Referenzsignal als Kalibrierwert zu verwenden. Fig. 1q zeigt einen Abschnitt 111 mit Sensorköpfen 121 ff. Einer oder jeder Sensorkopf hat einen Bügel 171 in einem definierten Abstand vor dem Sensor 121 angeordnet. Dieser Bügel 171 befindet sich zumindest teilweise in dem gesamten Messfeld und kann entsprechend Beispielen eingeklappt werden oder auch starr ausgeführt sein. Der Bügel 171 reflektiert das Messsignal, wie hier mittels der gestrichelten Linie dargestellt ist.

Eine weitere Variante ist in Fig. 1r gezeigt. Hier ist ebenfalls ein Bügel bei einem Sensor, hier dem Sensor 125, vorgesehen. Der Bügel weist einen Reflektor 172 auf. Entsprechend Beispielen ist der Bügel in den Halter 131', hier ein Hakenhalter (vgl. Fig. 1j) integriert. Der Reflektor 172 befindet sich in einem definierten Abstand zu dem Sensor 126 und kann somit zur Referenzmessung verwendet werden.

Fig. 1s zeigt eine weitere Variante, wobei in einem seitlich angeordneten Bügel, der sich in etwa senkrecht zu der Längsausdehnung des Abschnitts 111 erstreckt, ein weiterer Reflektor 173 vorgesehen ist. Dieser Reflektor 173 ist wiederum mit einem Abstand zu dem Sensoren 126 angeordnet, dient allerdings nicht nur zur Referenz für den nächstliegenden Sensor 126, sondern auch für die daneben angeordneten Sensoren 125, ... 121. Entsprechend Beispielen kann der Reflektor 173 gewinkelt angeordnet sein, z. B. 45° in Bezug auf die Messrichtung der einzelnen Sensorköpfe 121 bis 126. Entsprechend weiteren Beispielen kann die Reflektorfläche 173 gekrümmt sein, um für alle Kanäle 121 bis 126 als Reflektor zu dienen. Wie hier dargestellt, kann der Bügel, der den Reflektor 173 mit dem Abschnitt 111 verbindet, entweder direkt an dem Abschnitt 111 befestigt sein oder auch in das Verbindungselement integriert sein, wie beispielsweise im Zusammenhang mit Fig. 1r gezeigt ist.

Fig. 1t ist im Wesentlichen vergleichbar mit dem Beispiel aus Fig. 1s, wobei hier der Reflektor 174 einen aktiven Spiegel aufweist, der je nachdem, welcher Kanal (Sensorkopf) kalibriert werden soll, sich entsprechend ausrichtet.

Bezugnehmend auf die Beispiele aus Fig. 1s und 1t sei angemerkt, dass beispielsweise die Sensorköpfe 121 bis 126 nacheinander kalibriert werden können, um sich nicht gegenseitig zu stören.

Entsprechend weiteren Beispielen wäre es auch denkbar, dass der aktive Reflektor 174 als aktive Sendeeinheit ausgeführt ist, die dann ein Ultraschallsignal zu den Empfängern 121 bis 126 richtet.

Bei dem Beispiel aus Fig. 1u wird davon ausgegangen, dass ein Ultraschallsensor 176 mittels eines Bügels 175, der unterhalb den Sensorköpfen 121 bis 126 angeordnet ist, zur Referenzmessung verwendet wird. Unterhalb meint hierbei, zwischen dem Träger/Abschnitt 111 und dem Straßenbelag. Der Ultraschallsensor 176 ist parallel zu dem Träger/Abschnitt 111 angeordnet und kann beispielsweise mittels eines zusätzlichen Reflektors 177 auf der anderen Stirnseite oder auch zwischen den Stirnseiten, beispielsweise in der Mitte (vgl. gestricheltes Element 177') angeordnet sein.

Entsprechend einer weiteren Variante, die in Fig. 1v dargestellt ist, kann der aktive Sender 176, der an dem Bügel 175 angeordnet ist, mit einem aktiven Empfänger 178, der an einem Bügel 175 auf der anderen Stirnseite angeordnet ist, zusammenarbeiten.

Alle Beispiele haben gemein, dass die Referenzmessung im Bereich der Ultraschallsensoren 121 bis 126 erfolgt. Das hat den Vorteil, dass hier die gleichen Umgebungsbedingungen, z. B. Umgebungstemperatur und Infrarotstrahlung, vorherrschen.

Alle Möglichkeiten der Referenzmessung mittels an den Stirnseiten angeordneten Reflektoren, mittels an den Stirnseiten angeordneten aktiven Sendern oder Empfängern, oder mittels an den Stirnseiten angeordneten Sendern oder Empfängern, die beispielsweise ein Parallelsignal formen, können derart implementiert sein, dass die Verbindungselemente, die beispielsweise an das Profil angeschweißt oder allgemein an dem Profil angeordnet sind, diese Reflektoren oder Sender integriert haben. In diesem Zusammenhang sei auf Fig. 1h verwiesen, die einen Reflektor vergleichbar zu dem Reflektor 172 aus Fig. 1r integriert in den Profilverbinder aufweist. Insofern ist hier das Element zur Durchführung der Referenzmessung gar nicht Teil des Abschnitts 111 bzw. 112, sondern des Verbinders 138. Eine weitere Variante, die beispielsweise dem in Fig. 1v dargestellten Messprinzip mit aktivem Sender 176 und aktivem Empfänger 178 folgt, ist in Fig. 1i dargestellt. Hier ist ein aktiver Sender 176 in das Element 138' integriert, während der Empfänger 178 in die Verschlusskappe 111v integriert ist. Bei diesem Beispiel wäre es selbstverständlich auch denkbar, dass statt des Empfängers 178 ein Reflektor 177 verwendet wird. Eine ähnliche Variante ist in Fig. 1j gezeigt. Hier ist der Sender 176 in das Element 131' integriert, während der Empfänger bzw. Reflektor 177 und 178 in die Verschlusskappe 112v integriert ist. Selbstverständlich wäre es natürlich auch denkbar, dass 176 mit 177/178 bei den Beispielen aus Fig. 1i und 1j getauscht ist.

Bei allen Beispielen ist es vorteilhaft, dass Messungen der Sensorköpfe im Wesentlichen gleichzeitig erfolgen (synchrone Messung innerhalb eines Zeitfensters, z.B. innerhalb eines Zeitfensters von 3s, 1s, 0,5s, 0,1s oder kleiner). D. h., es ist von Vorteil, dass alle im Messsystem angeordneten Sensorköpfe im Wesentlichen zeitgleich Messungen durchführen. Denn bei einer gleichzeitigen Messung wird im Prinzip eine Momentaufnahme von beispielsweise des Untergrund- bzw. Referenzprofils (die bereits aufgebrachte Schicht bzw. der Untergrund für die aufzubringende Schicht) und der Referenzmessung(en) unter gleichen Bedingungen (beispielsweise Umweltbedingungen wie Umgebungstemperatur) erstellt. Es wird somit ein korrektes Referenzprofil bzw. korrektes Profil des Untergrunds von allen Sensorköpfen in allen Abschnitten und allen Trägern des Messsystems erfasst. Eine im Wesentlichen gleichzeitige Messung ist weiterhin vorteilhaft im Hinblick auf eine hohe Messrate (Abtastrate), wie es bei einer Nivellierung im Straßenbau (beispielsweise einer Höhennivellierung der Bohle) heutzutage erforderlich ist.

Bezugnehmend auf Fig. 1g wird ein weiteres Merkmal erläutert. Bei Fig. 1g ist auch eine Stirnseite eine **LED** 181 angezeigt. Diese kann beispielsweise durch farbige Codierung oder Blinken angeben, ob die für elektrische Verbindungen zwischen den Abschnitten bzw. vom Abschnitt zu Maschine richtig sind. Des Weiteren können auch Informationen, wie z. B. Nachregelungen erforderlich angezeigt werden. Des Weiteren wäre es auch denkbar, dass die LED, wenn sie beispielsweise an der endenden Stirnseite bei Fig. 1d der Messanordnung 110 angeordnet ist, einem dahinter fahrenden Fahrzeug, wie z. B. einer Walze, Zeichen bezüglich des Abstands gibt. Hierzu kann entsprechend Beispielen in die Stirnseite ähnlich zu dem Abstandssensor zur Referenzmessung 176 auch ein weitere Abstandssensor in die andere Richtung ausgerichtet sein, der dann den Abstand zu einem nachfolgenden Fahrzeug misst.

Entsprechend weiteren Beispielen kann statt der LED auch eine komplexe Anzeige, wie z. B. eine LCD-Anzeige vorgesehen sein, um beispielsweise einen Text und/oder Symbole anzuzeigen.

### Vergleichsaspekt 2

Nachfolgend wird ein Messsystem 200 erläutert, das eine Regressionsgerade zur Lagebestimmung verwendet.

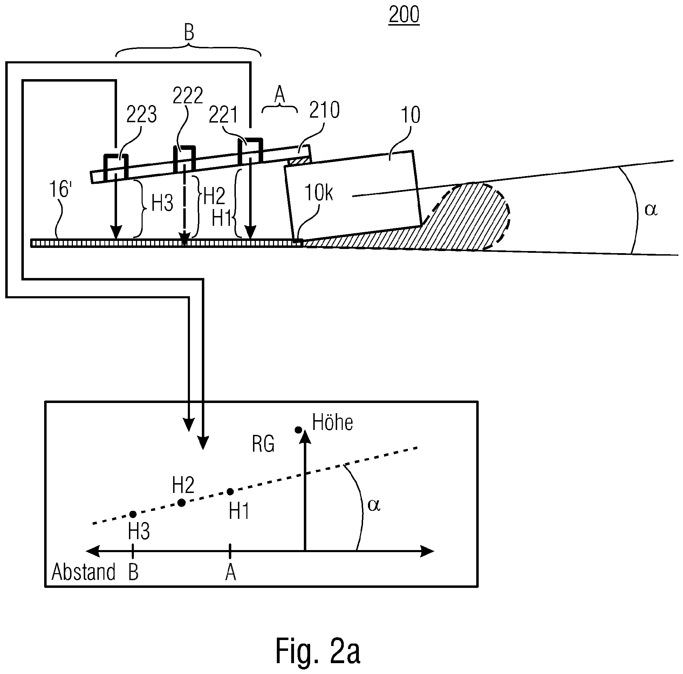

Wie im Beispiel aus Fig. 2a umfasst das Messsystem 200 einen Träger 210, der beispielsweise an einer Komponente, wie zum Beispiel der Bohle 10 der Baumaschine angeordnet ist. Wie hier dargestellt, ist die Komponente 10 beispielsweise um den Winkel α gekippt. Der Träger erstreckt sich exemplarisch von der Komponente 10 nach hinten oder auch nach vorne (nicht dargestellt). Der Träger 10 ist ferner fest mit der Komponente verbunden und ändert somit seine Winkelausrichtung im Raum entsprechend des Winkels α.

Auf dem Träger 210 sind drei Sensorköpfe 221 und 222 und 223 vorgesehen. Auch wenn es erst Mal für die Berechnung nicht wichtig ist, sei an dieser Stelle angemerkt, dass der Sensorkopf 221 näher an der Bohlenkante 10k, die einen Drehpunkt 10 der Bohle darstellt, angeordnet ist als Sensor 223. Der Sensorkopf 222 liegt in der Mitte bzw. dazwischen. Beispielsweise kann der Abstand zu dem Lotfußpunkt auf die Bohlenkante 10k mit A bezeichnet werden, während der Abstand auf den Lotfußpunkt der Bohlenkante 10k zu dem Sensor 223 mit B bezeichnet ist. Allgemein sein darauf hingewiesen, dass die Bohle 10 alternative zu dem Drehpunkt um die Bohlenhinterkante 10k auch einen anderen Drehpunkt, z.B. vor der Bohlenhinterkante 10k (insbesondere, wenn diese auf heißem Asphalt aufliegt), haben kann. In diesem Fall werden dann beispielsweise die Abstände zum Drehpunkt entsprechend berücksichtigt.

Die Sensoren 221, 222 und 223 sind im Wesentlichen parallel angeordnet und messen einen Abstand von dem Träger 110 zu dem Untergrund, hier der aufgebrachten Schicht 16'.

Ausgehend von dem Winkel α ist der Abstand H1 größer als der Abstand H3. Die Sensorwerte können beispielsweise in einem zweidimensionalen Raum, hier Höhe über Abstand, aufgezeichnet sein. Ausgehend von den Sensorwerten zeigt sich, dass die Regressionsgerade RG ebenfalls entsprechend dem Winkel α verläuft. Die Regressionsgerade RG ist, wenn sie im zweidimensionalen Raum sich befindet, derart bestimmbar, dass der Winkel α rechentechnisch bestimmt werden kann. Unter Bestimmung des Winkels α ist also auch die Lage der Komponente 10 gegenüber dem Untergrund bekannt.

An dieser Stelle sei angemerkt, dass die Lage α nicht zwingend eine absolute Lage sein muss, sondern insbesondere eine relative Lage gegenüber dem Untergrund sein kann.

Bezug nehmend auf die Abstände A und B sei angemerkt, dass bei zwei Sensorwerten, diese keine Rolle spielen, es viel wichtiger ist, dass die Lage der Sensoren 221, 222 und 223 zueinander bekannt ist. Das gleiche gilt selbstverständlich auch für mehr als zwei Sensoren, um die Höhenwerte im zweidimensionalen Raum zu bestimmen.

Wenn beispielsweise sich die Bohlenhöhe verändert, verändern sich auch die Werte H1 und H3, wobei ausgehend von einer Parallelverschiebung der Winkel α konstant bleibt. Wenn es also beispielsweise infolge von Vibrationen zu leichten Schwankungen der Werte kommt, so können diese Werte in dem gemeinsamen Raum aufgetragen werden und eine Regressionsgerade RG bestimmt werden. Diese stellt also eine Mittelung dar. Auch die Verwendung von mehr als drei Sensoren führt zu einer Mittelung, wenn alle Sensoren exakt auf dem Träger 210 angeordnet sind.

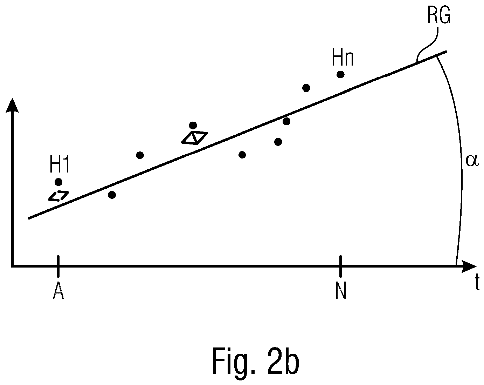

Bezug nehmend auf Fig. 2b wird die Bestimmung der Regressionsgerade RG für eine Punktwolke erläutert. Bei diesem Beispiel wird davon ausgegangen, dass mehr als zwei Sensoren vorgesehen sind. Beispielsweise kann das Sensorarray aus Aspekt 1 verwendet werden. Die Abweichungen, wie sie hier anhand der Höhenpunkte H1 bis Hn dargestellt sind, können beispielsweise aufgrund von Unebenheiten im Boden herrühren. Im Wesentlichen nehmen die Höhenwerte aber von a bis n zu, so dass das hier in der Regressionsgerade RG durchgelegt werden kann. Die Regressionsgerade RG wird beispielsweise derart durchgelegt, dass der Abstand zwischen der Regressionsgeraden RG, hier dargestellt durch kleine Pfeile, zu den Messpunkten in Summe minimal wird.

Auch hier ist die Regressionsgerade gewinkelt gegenüber der Abstandsachse, z. B. um den Winkel α. Diese Lage kann bestimmt werden und gibt einen Rückschluss auf den Winkel der Komponente.

Wenn man beispielsweise den Träger aus Fig. 2a mit den Sensoren 221, 222 und 223 an der Bohle befestigt und in Längsrichtung anordnet, so kann der Rollwinkel der Bohle um deren Längsachse bestimmt werden. Wenn neben dem Längsanteil auch noch ein Queranteil erfolgt, wird eine Kombination aus dem Rollwinkel und dem Querneigungswinkel ermittelt. Unter Kenntnis des Queranteils zum Längsanteil, können diese zwei Winkel separiert werden. Der Queranteil kann beispielsweise mit dem Träger aus Fig. 2a mit den Sensoren 221, 222 und 223 ermittelt werden, wenn dieser in Längsrichtung der Bohle (d. h. quer zur Fahrtrichtung der Maschine) anordnet ist.

Entsprechend Beispielen verläuft der Träger ohne Winkel-Offset gegenüber der Komponente. Auch kann ein Offset mit berücksichtigt werden. Zur Ermittlung des Offsets kann beispielsweise eine Kalibrierung am Anfang durchgeführt werden oder ein Abgleich mit einem optionalen Winkelsensor, wie zum Beispiel einem Neigungssensor, erfolgen.

Entsprechend Beispielen könnte man auch, statt der Befestigung des Trägers an der Bohle, die Bohle beispielsweise an dem Zugarm befestigen. Ein Beispiel für eine derartige Befestigung ist in Aspekt 1 erläutert, da hier ein Träger, umfassend eine Mehrzahl von Abschnitten, befestigt wird. Dieser Träger weist eine Mehrzahl von integrierten Sensoren auf, was dann eine mittelnde Regressionsgerade entsprechend der Ausführung aus Fig. 2b entspricht.

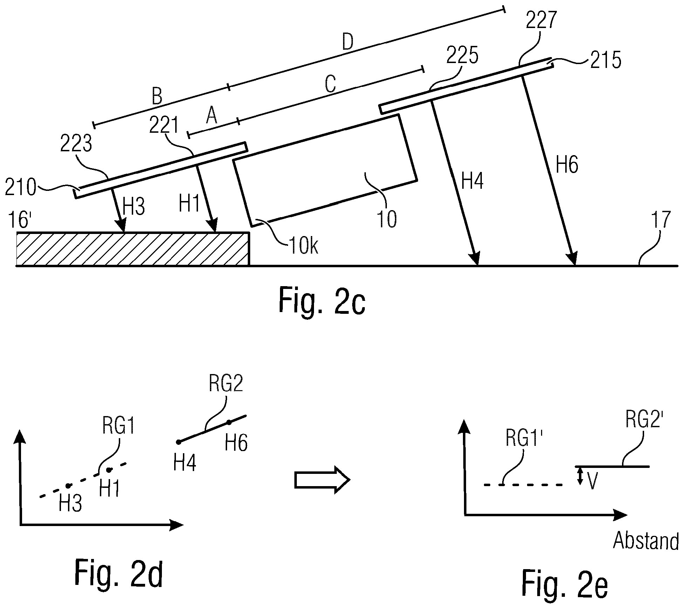

Nachfolgend wird Bezug nehmend auf Fig. 2c eine Schichtdickenbestimmung mittels der Regressionsgerade erläutert.

Fig. 2c zeigt die Verwendung von den Sensoren 221 und 223 mittels des Trägers 210 und die Verwendung eines weiteren Trägers 215, der die Sensoren 225 und 227 beherbergt. Das Sensorarray 210 ist wie in Fig. 2a hinter der Bohle angeordnet, während das Sensorarray 215 vor der Bohle angeordnet ist. Eine vertauschte Anordnung wäre selbstverständlich auch denkbar. Es wird davon ausgegangen, dass beide sich in Längsrichtung erstrecken.

Die resultierenden Sensorwerte H1, H3, H4 und H6 sind im zweidimensionalen Raum in Fig. 2d aufgezeichnet. Hierdurch ergeben sich die zwei Regressionsgeraden RG1 und RG2. Wenn man nun beide Regressionsgeraden RG1 und RG2 um den Drehpunkt der Bohle, nämlich die Bohlenhinterkante 10k verkippt, werden die Regressionsgeraden auf die entsprechenden RG1' und RG2' abgebildet, wie in Fig. 2e dargestellt ist. Der Achsabstand in Fig. 2e verläuft parallel zum Untergrund bzw. zu der Referenz gegenüber welcher gemessen wird. Die verkippten Regressionsgeraden RG1' und RG2' sind nun nicht mehr wie in Fig. 2d fluchtend zueinander, sondern haben einen Versatz V. Dieser Versatz V resultiert dadurch, dass das Array 210 zugehörig zu der Regressionsgerade RG1 auf die aufzutragende Schicht 16' misst, während das Sensorarray 215 auf den Untergrund 17 misst. Insofern ist diese Versatz von der Schichtdicke der aufzutragenden Schicht 16' abhängig. Umgekehrt gesprochen heißt das, dass mittels dieses Ansatzes die Schichtdicke bestimmt, d. h. berechnet werden kann.

Entsprechend Beispielen werden die Abstände A, B, C und D zwischen dem jeweiligen Sensor 221, 223, 225 und 227 zu dem Lotfußpunkt auf die Bohlenkante 10k bei der Rotation verwendet, um die Rotation durchzuführen.

Bei obigen Beispielen ist zu bedenken, dass bei einer Messung mit Ultraschall das Lot zum Boden und nicht die Senkrechte bezogen auf den Träger zum Boden vermessen wird. Anders ausgedrückt, stellt die dargestellte Variante z.B. eine Messung mit einem Laser oder ähnliches dar.

Bei allem oben erläuterten Messsystemen, war von vergleichbarer (gleicher) Anbringungshöhe ausgegangen, wobei angemerkt sei, dass diese auch variieren kann und dann im Nachgang rechentechnisch korrigiert wird.

### Vergleichsaspekt 3

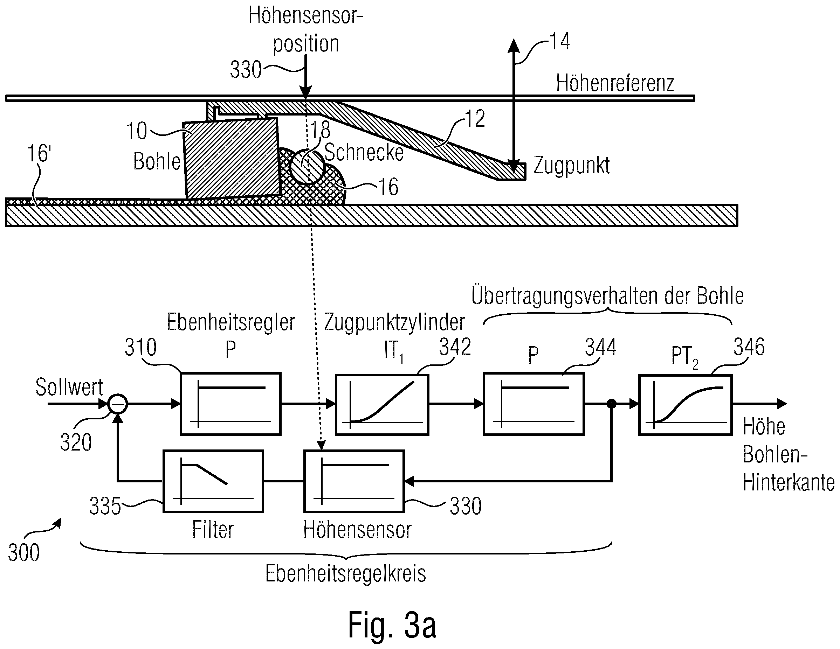

Fig. 3a zeigt einen üblichen Regelkreis 300 (Ebenheitsregelkreis), der für die Nivellierung der Bohle 10, die über den Zugarm 12 gezogen wird, Verwendung findet. Der Zugarm 12 ist fest bzw. zumindest während des Betriebs fest mit der Bohle 10 verbunden. Die Bohle wird durch einen Traktor (nicht dargestellt) geschleppt, wozu der Zugarm 12 über den Zugpunkt mit dem Traktor verbunden ist. Der Zugpunkt ist typischerweise in der Höhe verstellbar, wie hier anhand des Pfeiles 14 illustriert ist. Diese Höhenverstellung wird mit dem Ebenheitsregelkreis 300 geregelt.

Der Vollständigkeit halber sei darauf hingewiesen, dass die Bohle den Asphalt bzw. das Material für die aufzutragende Schicht 16' glatt zieht, das durch die Schnecke 18 vor der Bohle bereitgestellt wird (vgl. Material 16).

Der Ebenheitsregelkreis 300 umfasst einen Ebenheitsregler 310, der ausgehend von einem Soll-Ist-Vergleich 320 den Zugpunktzylinder (vgl. Bezugszeichen 14) ansteuert. Das Resultat ist eine veränderte Höhe, die mittels des Höhensensors 330 detektiert wird. Das Höhensensorsignal des Höhensensors 330 wird dann wiederum dem Soll-Ist-Vergleich 320 zugeführt. Optionaler Weise kann auch ein Filter 335 vorgesehen sein. Dieses Filter ist entweder als Tiefpassfilter, Tiefpassfilter mit niedriger/erhöhter Eckfrequenz, Bandpassfilter oder Hochpassfilter ausgelegt, je nachdem wie das Übertragungsverhalten korrigiert werden soll. Denkbar sind in diesem Zusammenhang auch andere Frequenzfilter, wie bspw. Tschebyscheff-Filter oder ähnlich.

Einfluss auf das Übertragungsverhalten hat einerseits der Zugpunktzylinder sowie auch die Bohle selber. Das Übertragungsverhalten des Zugpunktzylinders ist anhand eines IT₁-Regelkreises beschreibbar (vgl. Block 342). Das Übertragungsverhalten der Bohle lässt sich wie folgt beschreiben: in Sensorposition repräsentiert durch ein P-Verhalten (vgl. 344). Die Bohle selbst kann durch ein PT₂-Glied repräsentiert werden (vgl. 346).

An dieser Stelle sei angemerkt, dass bei der unmittelbaren Höhenregelung mit dem Regelkreis 300 zwar das Übertragungsverhalten 342 und 344 mit berücksichtigt wird, nicht aber 346, da dieses sehr träge ist. Insofern muss das Verhalten 346 über die Zeit nachgeregelt werden. Das Übertragungsverhalten 344 wird deshalb mit berücksichtigt, da eine Änderung der Höhenposition am Zugpunkt 14 ZP (vgl. Bezugszeichen 14) auch zu einer Änderung der Höhenposition an dem Abtastpunkt im Bereich der Schnecke 18 führt.

Bisherige Nivelliersysteme für den Fertiger versuchen alle Störgrößen über einen einzigen Regelkreis zu kompensieren. Hierbei besteht aber die Problematik, dass in der Regelstrecke "Bohle - Zugarm" zwei dominierende und signifikant unterschiedliche Zeitkonstanten vorhanden sind, auf die getrennt und verschieden reagiert werden muss, um die einwirkenden Störgrößen optimal zu kompensieren. Während die Bohle selbst ein sehr träges Verhalten aufweist und somit eine vergleichsweise hohe Zeitkonstante im Bereich von mehreren Sekunden besitzt, hat der Zugpunkt, der in der Regel von einem Hydraulikzylinder angesteuert wird, eine sehr kleine Zeitkonstante die im Bereich von Millisekunden liegt.

Wie oben bereits angedeutet, lässt sich das Übertragungsverhalten vom System Bohle-Zugarm als Art Reihenschaltung von Übertragungsgliedern beschreiben:
- Zugpunktzylinder mit einem IT1-Verhalten
- Höhensensorposition repräsentiert durch ein P-Verhalten
- Die Bohle selbst beschrieben durch ein PT2-Glied

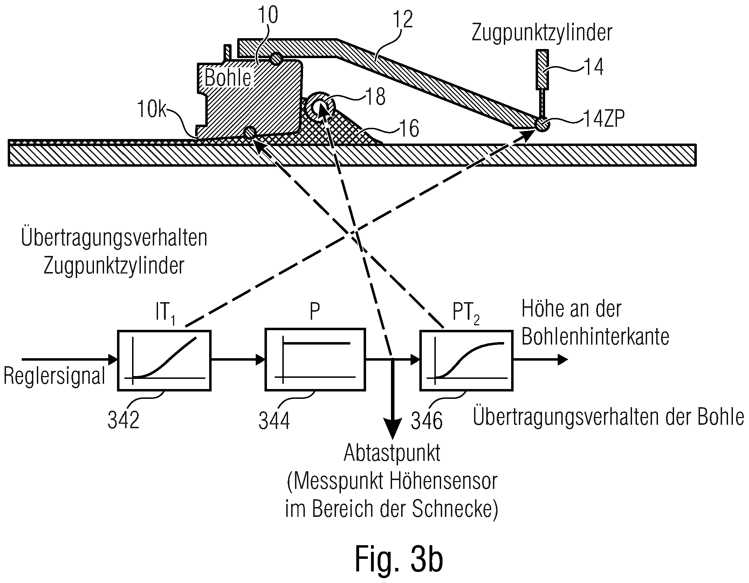

Fig. 3b verdeutlicht das so interpretierte Übertragungsverhalten der Regelstrecke von Bohlenhinterkante bis Zylinder. Fig. 3b zeigt wiederum die Bohle 10, die über den Zugarm 12 am Zugpunkt 14 ZP mittels des Zugpunktzylinders 14 gezogen bzw. in ihrer Höhe verstellt wird.

Die Fig. 3b soll weiterhin verdeutlichen, dass der übliche Abtastpunkt in Bezug zur Referenz auch aus regelungstechnischer Sicht nicht das Verhalten der gesamten Regelstrecke 342-346 wiederspiegelt. Damit wird auch deutlich, dass bei den derzeitigen Regelsystemen keine direkte Höhenregelung der Bohlenhinterkante 10k stattfindet. Dies hat zur Folge, dass aufgrund von einwirkenden Störgrößen über einen bestimmten Zeitraum, eine leichte Verkippung über dem Abtastpunkt zwischen Hinterkante 10k und Zugpunkt 14 ZP stattfindet und sich somit eine Höhenänderung an der Bohlenhinterkante 10k einstellt.

Ausgehend von diesem üblichen und in der Praxis verwendeten Regelkreisstruktur für die Höhennivellierung der Bohle 10 wird nachfolgend die verbesserte und optimierte Erweiterung der Bohlennivellierung erläutert.

Der Grundgedanke für die Optimierung der Höhennivellierung der Bohle 10 ist die gezielte Überwachung der Fertiger-Bohle und hier insbesondere der Bohlenhinterkante durch einen zusätzlichen Regelkreis bzw. die Implementierung einer Regelkreisüberlagerung zur vorhandenen Höhennivellierung. Der Regelkreis für die normale Höhennivellierung fungiert als unterlagerter Regelkreis. Diese neue Regelkreisstruktur kann auf alle Nivellieraufgaben angewandt werden und soll im Folgenden im Einzelnen betrachtet werden.

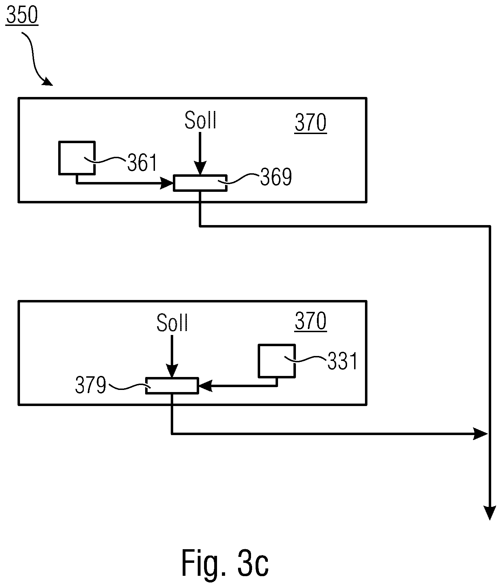

Dieser Regelkreisaufbau ist in Fig. 3c dargestellt. Der hier dargestellte Regelkreis 350 umfasst zwei einzelne Regelkreise 360 und 370. Der Regelkreis 360 wird als erster Regelkreis bzw. überlagerter Regelkreis bezeichnet. Der Regelkreis 370 als zweiter Regelkreis. Der Regelkreis 370 ist vergleichbar mit dem Regelkreis 300, wie er in Bezug auf Fig. 3a erläutert wurde, wobei der Sensor 330 anders positioniert ist (vgl. Bezugszeichen 331). Der Sensor 331 ist im Bereich des Zugpunkts 14 ZP und nicht mehr im Bereich der Schnecke 18 (vgl. Anordnung Fig. 3b) vorgesehen. Im Übrigen entspricht sonst der Regelkreis 370 dem Regelkreis 300, das heißt also umfasst den Vergleich 320, den Ebenheitsregler 310 sowie den optionalen Filter 335. Ein signifikanter Unterschied liegt ausgehend von der Positionierung des Höhensensors darin, dass in dem Regelkreis 370 nicht mehr das Übertragungsverhalten der Bohle 344 mit berücksichtigt werden muss, sondern nur noch das Übertragungsverhalten des Zugpunktzylinders (vgl. Bezugszeichen 342). Das Verhalten der Bohle, beschrieben durch PT₂ (vgl. Bezugszeichen 346) wird mit dem Regelkreis 360 mit berücksichtigt.

Der Regelkreis 360 umfasst ebenfalls einen Höhensensor 362 sowie ein optionales Filter 364. Der Sensor 362 ist im Bereich der Bohle 10 oder z. B. im Bereich der Hinterkante der Bohle 10 angeordnet. Das Verhalten des Punktes 10k in Antwort auf eine Höhenänderung am Zugpunkt 14 ZP (vgl. Bezugszeichen 14) ist relativ träge. Das wird bei der Betrachtung der Anordnung der Bohle 10, Zugarm 12 und Zugpunkt 14 ZP recht deutlich, da der Höhenzylinder 14 den Zugpunkt 14 ZP um den Drehpunkt 10k verschiebt, so dass es erst nach und nach zu einer Höhenänderung kommt. Dieses Verhalten wird mittels des Model Predictive Controls 365 nachgebildet. Die Eingangsgröße für das MPC 365 ist das Ergebnis eines Soll-Ist-Vergleichs (vgl. Bezugszeichen 367), wobei das selbe Signal des Sensors 362 als Ist-Signal verwendet wird. Das Ergebnis des MPCs ist ein Soll-Signal, das als Eingangsgröße für den Vergleich 320 dient. Nachdem nun die Struktur erläutert wurde, wird auf die Funktionsweise eingegangen.

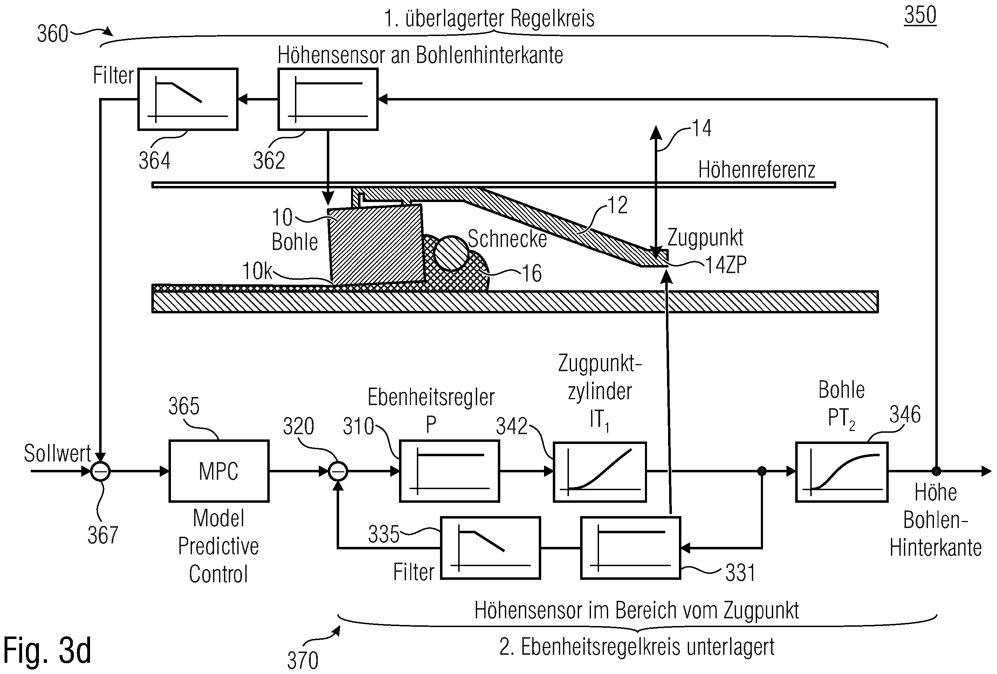

Basierend auf diesem Sachverhalt wird der Regelkreis 370, der in Fig. 3a dargestellt ist, durch einen ihm überlagerten Regelkreis 360 erweitert, der in Fig. 3d dargestellt ist. Durch diese Maßnahme verändert sich die Struktur vom Regelkreis 350 derart, dass die einwirkenden Störgrößen auf Zugpunkt 14 ZP und Bohle 10 getrennt kompensierbar sind. Der überlagerte Regelkreis kompensiert dabei die Störgrößen, die auf die Bohle 10 wirken und der unterlagerte Regelkreis 360 kompensiert die Störgrößen die den Zugpunkt in der Höhe verändert. Das so strukturierte Regelsystem 350 kann man getrennt optimieren, was insgesamt zu einem verbesserten Regelverhalten führt.

Eine weitere Optimierung vom Regelkreisaufbau ergibt sich, indem man den Abtastpunkt vom Höhensensor für den unterlagerten Ebenheitsregelkreis 370 tendenziell in Richtung Zugpunkt 14 ZP verlagern kann.

Ausgehend von diesem komplexen Beispiel wird nun auf eine vereinfachte Variante unter Bezugnahme auf Fig. 3d eingegangen.

Fig. 3d zeigt einen Regelkreis 350, der sich aus zwei Regelkreisen 370 und 360 zusammensetzt. Jeder Regelkreis umfasst zumindest einen Sensor, der im Fall des Regelkreises 360 der Höhensensor 362 ist, während im Fall des Regelkreises 370 es sich um den Zugpunktsensor 331 handelt.

Wie der Name schon sagt und wie oben erläutert wurde, sind die Sensoren einmal im Bereich vom Zugpunkt (vgl. Sensor 331) und an der Bohle (vgl. Sensor 361) angeordnet.

Jeder Regelkreis umfasst auch noch einen entsprechenden Prozessor, der ausgehend von dem Ist-Wert der Sensoren 331 und 362 sowie einem Sollwert das Regelsignal für den Zugpunktzylinder ausgibt. Die Prozessoren sind mit 379 bzw. 369 markiert. Entsprechend Beispielen können auch die Prozessoren 369 und 379 zu einem Prozessor zusammengefasst sein, der dann von den zwei Sensoren 331 und 362 die Ist-Signale erhält und diese erst einmal getrennt verarbeitet, um dann das gemeinsame Steuersignal auszugeben.

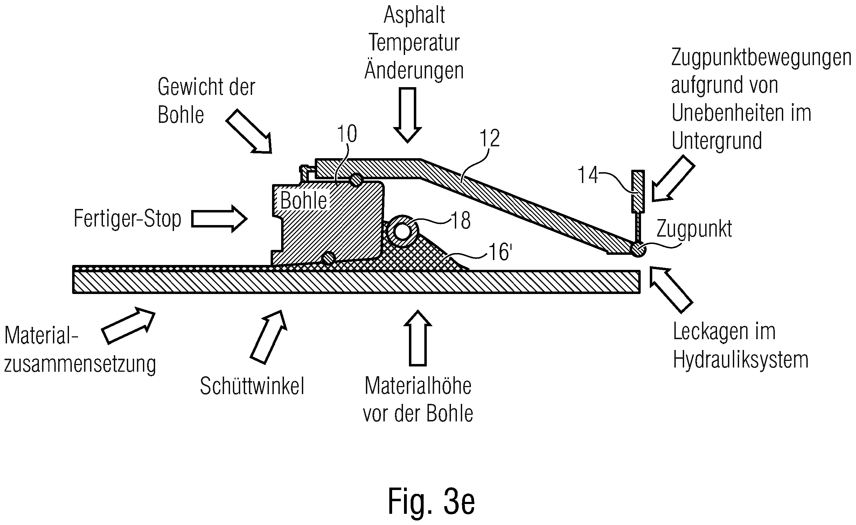

Die getrennte Betrachtung von einwirkenden Störgrößen für die Regelstrecke 346 Bohle-Zugarm hat für den Aufbau der Regelkreise 350 ebenfalls eine entscheidende Bedeutung. In Fig. 3e sind die unterschiedlichen Störgrößen im System Bohle-Zugarm dargestellt.

Während die Störgrößen am Zugpunkt vom unterlagerten Regelkreis 370 (Ebenheitsregelkreis) kompensiert werden, erfolgt die Kompensation der Störgrößen der Bohle 10 vom überlagertem Regelkreis 360. Aufgrund der unterschiedlichen Übertragungsfunktionen (siehe auch Fig. 3b) der Teilregelstrecke Zugpunkt (IT1) und der Teilregelstrecke Bohle (PT2) werden die hierzu eingesetzten Regler von Ihrer Struktur auch unterschiedlich aufgebaut und optimiert.

Für den unterlagerten Regelkreis 370 wird ein extrem schnelles Ausregeln von Regelabweichungen erfolgen, während der Regler für den überlagerten Regelkreis 360 eher langsam und unter Einbeziehung der Kenntnis von einwirkenden Störgrößen die Ausregelung von Regelabweichungen durchführt. Als Beispiel für Störgrößen die das Schwimmverhalten der Bohle 10 beeinflussen, sei hier die Auswirkung von Materialtemperaturänderungen genannt. Ist eine Temperaturänderung vom Material schon bekannt, bevor eine temperaturabhängige Auswirkung der Bohlenhöhe entsteht, kann der Regler auf der Basis eines Modells, eine Höhenabweichung der Bohle vermeiden bzw. reduzieren. Dabei muss das Modell der Bohle 10 was die Abhängigkeit einer Höhenänderung aufgrund von Materialtemperaturänderungen beschreibt, bekannt sein. Dies wäre auch typischer Weise ein Beispiel für einen MPC-Regler für den überlagerten Regelkreis 360.

Nachfolgend werden unterschiedliche Anwendungsfälle der Regelkreisstruktur 350 erläutert.

Ausgehend von der Regelkreisstruktur 350 in Fig. 3d sollen im Folgenden die unterschiedlichen Anwendungsfälle exemplarisch betrachtet werden. Der grundsätzliche Aufbau vom Regelkreis bleibt aber für alle Anwendungsfälle gleich. Nur kann sich die Sensorausführung für die Bohlenhinterkante oder den Zugpunkt ändern. Die unterschiedlichen Einbausituationen können wie folgt benannt werden:
- Bahn an Bahn
- Abtasten am Bordstein
- Seilabtastung
- Abtasten an einer Linie (Tunnelbau)
- Einbau ohne Referenz (Big Sonic-Ski)
- 3D Einbau mit Totalstation
- 3D Einbau mit GNSS
- Querneigung Bohle
- Abtasten mit Laser

Natürlich kann auch für die jeweils gegenüberliegende Seite eine andere Abtastkonstellation ausgewählt werden, sodass sich insgesamt eine Vielzahl von Einbausituationen mit dem optimierten Regelkreis 350 darstellen lassen. Zusätzlich können mit Hilfe der neuen Regelkreisstruktur 350 weitere Optimierungen realisiert werden. Hierzu zählen:
- Anfahren nach Fertigerstop
- Tagesansatz (Neuansatz)
- Integration Model Predictive Control

Im Folgenden sollen exemplarisch einige Anwendungsfälle für die neue Regelkreisstruktur 350 beschrieben werden.

Erfolgt die Höhenabtastung von einer vorhandenen oder zuvor gelegten Asphaltbahn (Einbau Bahn an Bahn), so können für die Bohlenhinterkante folgende Sensoren zum Einsatz kommen:
- Sonic-Ski
- Ein-Kopf-Sonic mit und ohne Referenzsignal
- Laserscanner
- Mechanische Drehgeber

Der Ein-Kopf-Sonic ohne Referenz ist deswegen einsetzbar, weil der Messabstand zur vorhandenen Asphaltbahn an der Bohlenhinterkante minimiert werden kann. Aus diesem Grund reduziert sich der Messfehler sehr stark im Vergleich zu großen Abständen. Eine Minimierung vom Messabstand ist möglich, weil der Messabstand zum Untergrund immer annähernd gleich ist. Die / alle Sensoren schauen in diesem Anwendungsfall möglichst fokussiert auf den Untergrund.

Für den Zugpunkt kommen vorzugsweise folgende Sensoren zum Einsatz:
- Sonic-Ski
- Laserscanner
- Big Sonic-Ski (kurz: Big Ski)

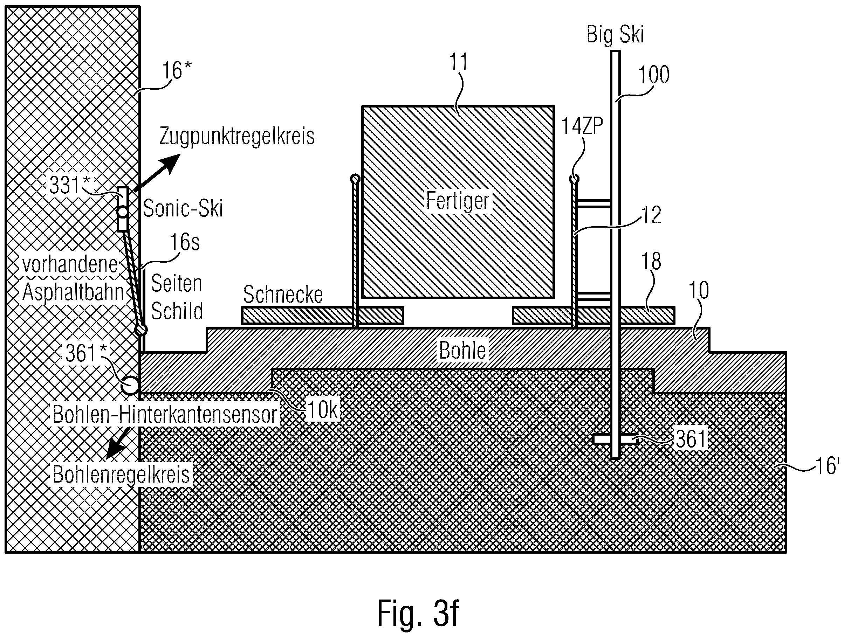

Die Fig. 3f zeigt den Montagebereich und damit auch die möglichen und sinnvollen Abtastpositionen, um die Regelkreisstruktur zu realisieren.

Fig. 3f zeigt den Straßenfertiger von oben mit der Bohle 10, der aufgebrachten Schicht 16' bzw. vorhanden Schicht 16*, der Schnecke 18 und dem Traktor 11. Die Bohle ist über den Zugarm 12 mit dem Zugpunkt 14 ZP verbunden.

Entsprechend einer ersten Variante kann ein sogenannter Big Sonic-Ski (kurz: Big Ski, vgl. Aspekt 1) 100 mit dem Zugarm 14 oder auch der Bohle 10 (nicht dargestellt) verbunden werden. Der Big Sonic-Ski hat beispielsweise den Sensor 361 im Bereich der Bohlenhinterkante 10k vorgesehen. Auf Höhe des Zugpunkts kann der Sensor 331 ebenfalls am Big Sonic-Ski 100 angeordnet sein.

Entsprechend einer weiteren Ausführungsform kann auch die Abtastung der Bohlenhinterkante für den Bohlenregelkreis und die Abtastung für den Zugpunktregelkreis auf Seiten einer vorhandenen Asphaltbahn 16* erfolgen.

Hier wird über ein Seitenschild 10s ein Sonic-Ski 331 * zur Abtastung in Höhe des Zugpunkts 14 ZP vorgesehen. An dem Seitenschild ist ebenfalls auch noch ein Bohlenhinterkantensensor 361* vorgesehen. Wie dargestellt, ist der Sonic-Ski 331* etwas mit seinem Abtastbereich außerhalb des Untergrunds versetzt, um so die vorhandene Asphaltbahn 16* abzutasten.

Die Anordnung des Sensors 331* auf der Seite der vorhandenen Asphaltbahn 16* hat den Zweck, die vorhandene Asphaltbahn als Referenz zu verwenden. Insofern wird mit dem Sensor 331* der Abstand zu der vorhandenen Asphaltbahn 16* abgetastet. Mit dem Zugpunktregelkreis die vorhandene Asphaltbahn 16* abzutasten hat den Sinn, dass Störgrößen (bspw. Material unter der Raupenkette des Traktors), die auf den Zugpunkt wirken, direkt ausgeregelt werden. Im Gegensatz dazu ist der Sensor 361* bevorzugterweise auf die vorhandene Asphaltschicht 16* gerichtet und überwacht den Höhenverlauf der Bohle in Bezug zur vorhandenen Asphaltbahn 16*, wobei Abweichungen vom eingestellten Sollwert des überlagerten Regelkreises 360 kompensiert werden.

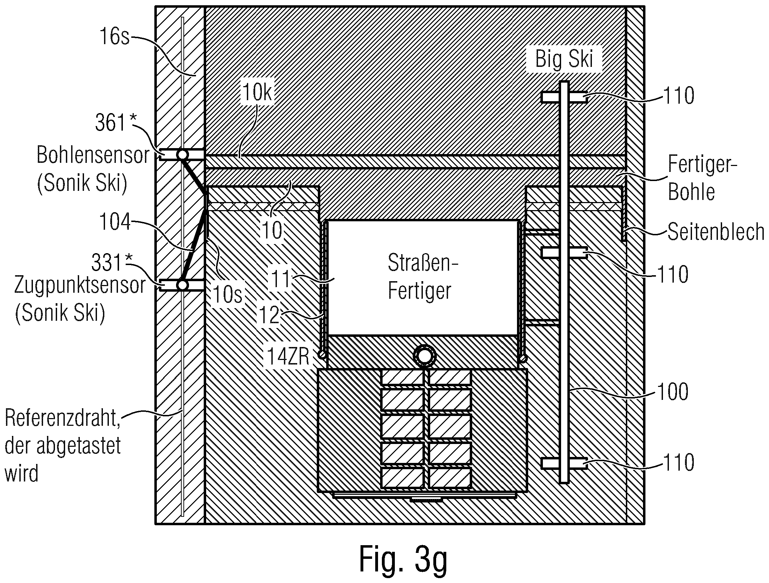

Bezugnehmend auf Fig. 3g wird nun eine Seilabtastung erläutert. Fig. 3g zeigt einen Straßenfertiger mit einem Traktor 11, einer Bohle 10, einer Bohlenhinterkante 10k. Die Bohle 10 ist über einen Zugarm 12 mit dem Fertiger 11 verbunden. An einem der Zugarme 12 ist wiederum der Big Sonic-Ski 100 mit drei Sensoren vorgesehen. Die Sensoren sind exemplarisch mit dem Bezugszeichen 110 markiert, können je nach Anwendung entlang des Big Sonic-Skis 100 gleich verteilt sein oder auch im Bereich des Zugpunkts 14 ZP oder auch im Bereich der Bohlenhinterkante 10k angeordnet sein. Alternativ oder additiv zu einem Big Sonic-Ski kann auch über die Seitenschild 10s der Bohle 10 eine Sensorik vorgesehen sein. Beispielsweise kann ein Bohlensensor 361* sowie ein Zugpunktsensor 331* vorgesehen sein. Beide sind auf ein Seil 16s gerichtet, um hier das Seil 16s abzutasten.

Die Seilabtastung an der Bohlenhinterkante 10k kann man, wie bei den derzeitig verwendeten Abtastmethoden in der Praxis üblich, berührungslos mit einem Ultraschallsensor (Sonic-Ski) oder mit einem mechanischem Drehgeber durchführen.

Die Sensoren 331*, 361* werden dabei mit einer entsprechenden Sensorhalterung 10k über das Referenzseil 16s geführt. Die Regelabweichung gemessen gegenüber zum Referenzseil 16s an der Bohlenhinterkante 10k liefert über den Weg betrachtet auch die Information der eingebauten Ebenheit.

Für den Bereich vom Zugpunkt 14 ZP gibt es mehrere Wege um eine Höheninformation für den Regelkreis zu erhalten. Im Folgenden sind 2 Möglichkeiten dargestellt.

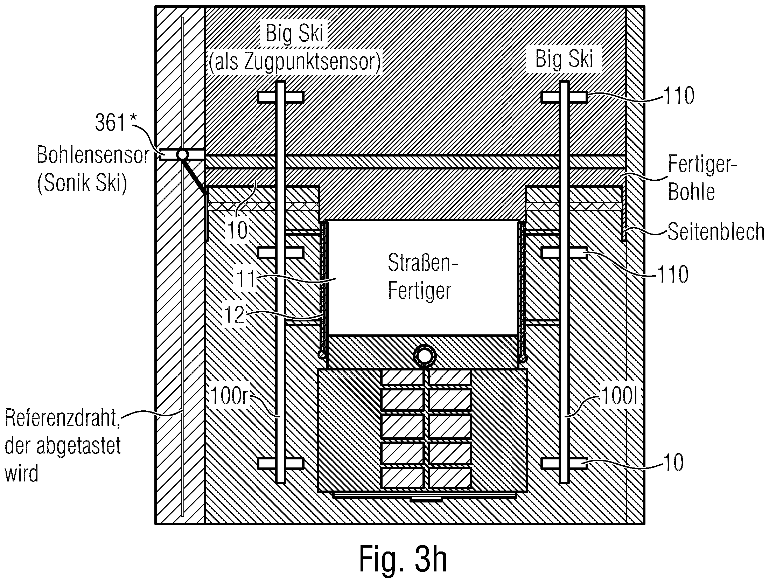

Über eine weitere Sensorhalterung kann ein zweiter Höhensensor (Sonic-Ski) über das Seil geführt werden. Alternativ kann hierzu ein Big Sonic-Ski System (kurz: Big Ski) als Zugarmsensor dienen. Siehe Fig. 3h.

Fig. 3h zeigt den vergleichbaren Aufbau wie Fig. 3g des Straßenfertigers 11 mit der Bohle 10. Als Bohlensensor auf der linken Seite kommt der Sensor 361* zum Einsatz. Als Zugpunktsensor auf der linken Seite kommt der Big Sonic-Ski 100R zum Einsatz. Dieser ist, wie bereits im Vorfeld erläutert, fest mit dem Zugarm 12 verbunden und weist eine Mehrzahl von Sensoren 110 auf.

Bezüglich des Big Sonic-Skis 100 sei darauf hingewiesen, dass wie im Zusammenhang mit Aspekt 1 bereits erläutert wurde, bevorzugterweise ein oder mehrere Sensoren, z. B. gleich verteilt, vor und hinter der Bohle 10 angeordnet sind. Bezüglich weiteren Details hierzu sei auf die Ausführung aus Aspekt 1 verwiesen.

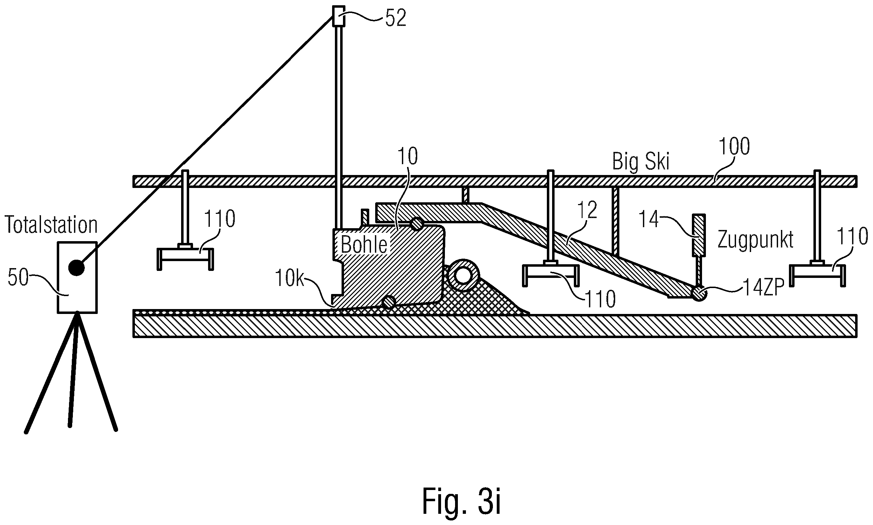

Bezugnehmend auf Fig. 3i wird nun eine 3D-Nivellierung mit einer Totalstation erläutert. Fig. 3i zeigt die Bohle 10 mit der Bohlenhinterkante 10k, dem Zugarm 12, der am Zugpunkt 14 ZP mit dem Zugzylinder 14 verbunden ist. Darüber hinaus ist auch noch ein Big Sonic-Ski 100, der mit dem Zugarm 12 verbunden ist, vorgesehen. Der Big Sonic-Ski 100 umfasst drei Abstandssensoren 110, die in diesem Beispiel zusammen den Abstand am Zugpunkt 14 ZP bestimmen. Die Bohlenhinterkante 10k wird unter Verwendung einer Totalstation 50 und einem mit der Bohle befestigten Reflektor 52 überwacht. Dieser Sensor bestehend aus den Elementen 50+52 wird als 3D-Sensor bezeichnet.

Eine Höhenbestimmung an der Bohlenhinterkante mit einem 3D - Sensor 50+52 hat den Vorteil, dass man hierrüber auch eine absolute Höhenlage der einzubauenden Asphaltbahn überwachen kann. Eine 3D Nivellierung mit Totalstation 50 besteht aus einem Prisma 52, das am Fertiger 11 bzw. der Bohle 10 so montiert wird, dass es für die Totalstation 50 sichtbar ist. Die Totalstation 50 bestimmt dann die 3D Position vom Prisma im Raum und überträgt diese Information dem 3D Regelsystem am Fertiger per Funk.

Ein großer Nachteil bei der 3D Regelung besteht darin, dass man das eingebaute Höhenniveau immer wieder kontrollieren muss. Diese Aufgabe übernimmt in der Praxis ein Vermesser, der mit einer zusätzlichen Totalstation 50 die eingebaute Höhenlage kontrolliert und, wenn nötig, entsprechende Korrekturen manuell vornimmt. Dies ist notwendig, da der Montageort vom Prisma (3D-Punkt im Raum, der von der Totalstation über die Reflektion eines Laserstrahls exakt bestimmt wird) sich nicht an der Bohlenhinterkante befindet, sondern, wie üblicherweise auch bei anderen Höhensensoren, am Zugarm in Höhe der Bohlenschnecke. Dies hat zur Folge, dass über eine gewisse Zeit eine Veränderung der Höhenlage an der Bohlenhinterkante auftritt, die der Vermesser dann wieder korrigieren muss.

Betrachtet man nun die verbesserte Regelkreisstruktur 350, so ergeben sich auch für die 3D Regelung mit Totalstation Optimierungsmöglichkeiten.

Die Kontrolle der eingebauten Höhenmessung könnte dadurch vermieden werden, indem man den Höhensensor (Prisma) auf die Bohlenhinterkante 10k setzt. Hier fungiert der Sensor dann als Höhensensor für die Bohle und wird somit im überlagerten Regelkreis 360 als Lieferant der Höheninformation verwendet. Am Zugpunkt befindet sich dann beispielsweise ein Big Sonic-Ski-System (kurz: Big Ski), welches den Höhenwert für den unterlagerten Regelkreis 370 liefert.

Ein weiterer Vorteil ergibt sich, wenn man beide Seiten der Bohle 10 über eine Totalstation 50 in Verbindung mit einem Prisma 52 nivellieren möchte (vgl. Fig. 3i). Ohne die erweiterte und optimierte Regelkreisstruktur 350 benötigt man für die Nivellierung zwei Totalstationen 50 (eine Totalstation jeweils für eine Seite). Dies ist notwendig, weil in dieser Konstellation die Abtastrate der 3D Höhenmessung hoch sein muss, um alle einwirkenden Störgrößen zu kompensieren. Mit der erweiterten und optimierten Regelkreisstruktur 350 kann die Abtastrate soweit gesenkt werden, dass man mit einer Totalstation für beide Seiten auskommt, die dann kontinuierlich und nacheinander das linke Prisma 52l und das rechte Prisma 52r. in der Position an der Bohlenhinterkante 10k bestimmt.

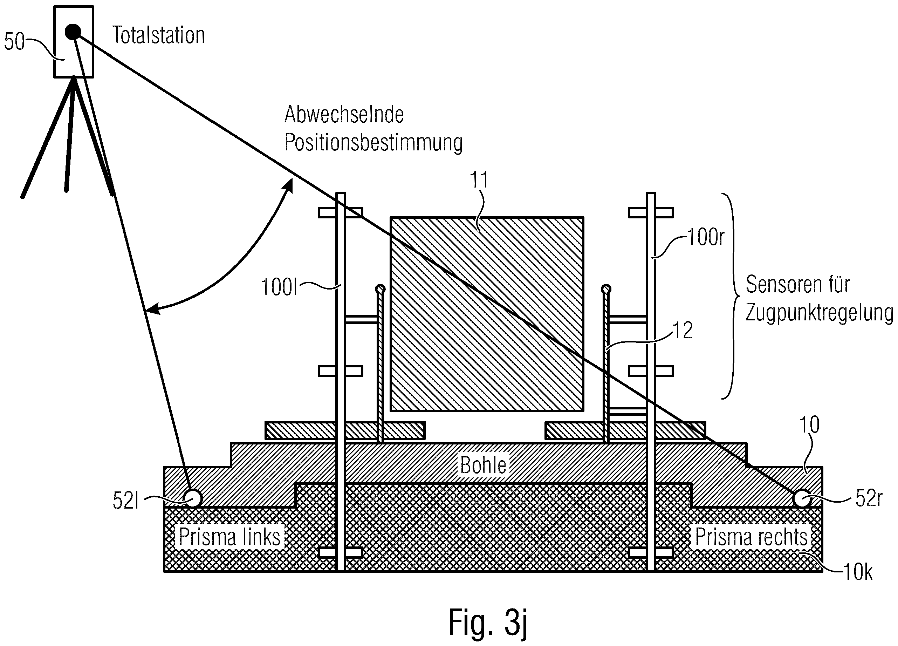

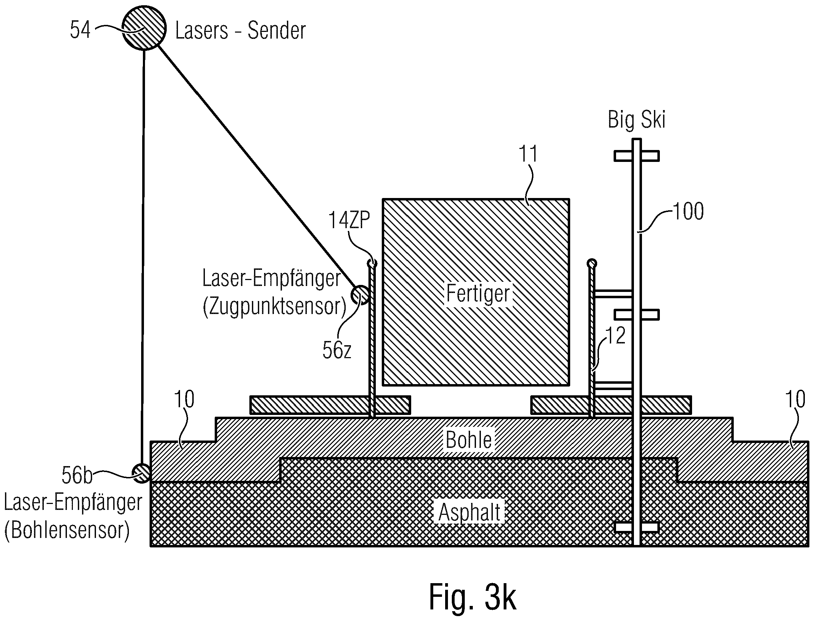

Bezugnehmend auf Fig. 3k wird nun statt dem linken Big Sonic-Ski 100 L, der bei Fig. 3j als Zugpunktregelung diente, auch der Zugpunktsensor durch einen Lasersensor realisiert. Ein Lasersender 54 bildet eine Höhenreferenz ab, der über die Empfänger 56z am Zugpunkt 14 ZP und 56b an der Bohle 10 empfangbar ist.

Prinzipiell kann man auch bei Verwendung einer Laserebene als Höhenreferenz die neue Regelkreisstruktur 350 anwenden. Hierbei wird sowohl am Zugarm als auch an der Bohlenhinterkante jeweils ein Laserempfänger angebracht, der in beiden Fällen als Höhensensor arbeitet. In dieser Konstellation repräsentiert die projizierte Laserebene exakt die gewünschte Lage der Straße mit einem entsprechenden Höhenoffset.

Fig. 3k zeigt den prinzipiellen Aufbau der Nivellierung mit einer Laser-Höhenreferenz auf der linken Seite. Die rechte Seite wird in dem Beispiel mit einem Big Sonic-Ski-System 100 nivelliert. Alternative können natürlich, je nach Einbausituation, auch andere Messelemente für die Nivellierung der Bohle wie Neigungssensoren oder Sonic-Ski eingesetzt werden.

Bezugnehmend auf Fig. 3d sei angemerkt, dass das Model Predictive Control die Regelkreisstruktur wie folgt erweitert.

Eine weitere Verbesserung für das Regelsystem ergibt sich dadurch, dass der Regler für den überlagerten Regelkreis, dessen zugehöriger Sensor in der Nähe der Bohlenhinterkante angebracht ist, den jeweiligen Prozesszustand mit berücksichtigt. Dabei wird im Prinzip jedem Zustand einen Kontrollwert zuordnet, der für die Berechnung vom Regler-Ausgang mit verantwortlich ist. Weiterhin wird der Prozesszustand mit der Hilfe eines Prozessmodells vorherbestimmt.

Das Prozessmodell ist der eigentliche Grundstein vom Model Predictive Control, worin das Modell die Prozessdynamik umfänglich erfasst und so die Vorhersagen des zukünftigen Prozesszustandes berechnen kann. Das Prozessmodell ist notwendig, um die vorhergesagten Ausgangsgrößen in einer zukünftigen Instanz zu kalkulieren. Die verschiedenen Strategien von MPC können zahlreiche Modelle benutzen, um die Beziehung zwischen den Ausgangsgrößen und den messbaren Eingangsgrößen aufzuzeigen.

### Vergleichsformen / Vergleichsbeispielen

Nachfolgend werden Vergleichsformen erläutert, die einerseits im Zusammenhang mit obigen Aspekten verwendet werden können beziehungsweise auch obige Aspekte umfassen oder auch alternativ zu obigen Aspekten Verwendung finden. Darüber hinaus werden Vergleichsbeispiele erläutert, die Details zu den Vergleichsformen und Ausführungsbeispielen enthalten.

Vergleichsvarianten basieren darauf, dass durch die Verwendung von befestigten / integrierten Sensorköpfen in einem Träger, der sich in ein oder mehrere Abschnitte untergliedert, der Montageaufwand erheblich reduziert werden kann. Dadurch, dass die Verbindungselemente gleichzeitig eine mechanische und eine elektrische Verbindung ausbilden, ist keine Verkabelung notwendig. Entsprechend Vergleichsbeispielen kann auch die Verbindung zwischen dem Abschnitt und der Baumaschine über ein entsprechendes Verbindungselement erfolgen. Beispielsweise kann der erste Abschnitt mit seinem ersten Verbindungselement mit der Baumaschine (die einen entsprechenden zweiten Abschnitt als Gegenstück aufweist) verbindbar sein. Auch hierbei kann beispielsweise neben der mechanischen auch eine elektrische Verbindung ausgebildet werden. Das Messsystem ist entsprechend Vergleichsbeispielen durch die weiteren Abschnitte mit befestigten / integrierten Sensorköpfen verlängerbar, um einen großen Bereich gleichzeitig abtasten zu können. Beim Aufbau eines so aufgebauten Messsystems mit zwei Abschnitten je Träger sind also nur noch zwei Verbindungen (eine mit der Maschine und eine zwischen den zwei Abschnitten) herzustellen und nicht die einzelnen Sensorköpfe einzuhängen und zu verkabeln. Dies ist gegenüber dem konventionellen Ansatz ein erheblicher Zeitgewinn. Dadurch, dass die Messköpfe auch alle zueinander ausgerichtet sind, muss auch keine weitere Einstellung mehr vorgenommen werden, was insgesamt die Messqualität sicherstellt.

Für die mechanische Verbindung gibt es unterschiedliche Ansätze. Nachfolgend werden drei Vergleichsvarianten erläutert, wobei auch weitere möglich wären.

Entsprechend einer ersten Variante nach der vorliegenden Erfindung kann eine Art Hakenverbindung verwendet werden.

Entsprechend Vergleichsbeispielen kann das erste und/oder das zweite Verbindungselement einen Haken aufweisen, so dass das erste Verbindungselement und das zweite Verbindungselement durch eine Drehbewegung in Eingriff bringbar ist. Entsprechend weiteren Vergleichsbeispielen kann der Haken des ersten oder des zweiten Verbindungselements oder die Haken des ersten und des zweiten Verbindungselements eine Eingrifffläche aufweisen, die im Wesentlichen senkrecht zur Längsrichtung des jeweiligen Abschnitts geöffnet ist. Hierbei ist die Drehbewegung durch einen Endanschlag definiert, der eine Berührung der ersten und der zweiten Stirnseite bzw. Stirnfläche voraussetzt. Entsprechend weiteren Vergleichsbeispielen kann das erste und/oder das zweite Verbindungselement einen elektrischen Koppler aufweisen, der sich im Wesentlichen längs der Längsrichtung des jeweiligen Abschnitts erstreckt.

Entsprechend einer Vergleichsvariante, die nicht zur vorliegenden Erfindung gehört, kann auch eine Scherbewegung der zwei Abschnitte bzw. eines Abschnitts gegenüber einem weiteren Verbindungselement die Verbindung ausbilden. Bei dieser Vergleichsvariante kann das erste und/oder das zweite Verbindungselement ein sich im Wesentlichen senkrecht zu der Längsrichtung des jeweiligen Abschnitts erstreckendendes Profil mit einem Endanschlag umfassen, so dass die zwei Verbindungselemente durch eine translatorische Bewegung im Wesentlichen senkrecht zu der Längsrichtung des jeweiligen Abschnitts verbindbar sind. Entsprechend Vergleichsbeispielen weist das erste Verbindungselement einen Hebelmechanismus, z.B. mit einem Exzenter auf, um das erste Verbindungselement mit dem zweiten Verbindungselement translatorisch zu fixieren. Entsprechend einem Vergleichsbeispiel kann das erste und/oder das zweite Verbindungselement jeweils einen elektrischen Koppler aufweisen, der sich im Wesentlichen senkrecht zu der Längsrichtung des jeweiligen Abschnitts erstreckt.

Entsprechend einer weiterer Vergleichsvariante, die nicht zur vorliegenden Erfindung gehört, wäre auch eine translatorische Bewegung der zwei Abschnitte zueinander zum Ausbilden der Verbindung denkbar. Deshalb kann entsprechend Vergleichsbeispielen das erste Verbindungselement eine Hülse aufweisen, die sich im Wesentlichen in Längsrichtung des jeweiligen Abschnitts erstreckt und wobei die zwei Verbindungselemente durch Einführen des zweiten Verbindungselements in die Hülse verbindbar sind. Entsprechend Vergleichsbeispielen kann das erste und/oder das zweite Verbindungselement einen jeweiligen elektrischen Koppler aufweisen, der sich im Wesentlichen längs zur Längsrichtung des jeweiligen Abschnitts erstreckt.

Bei den Sensorköpfen kann sich das Messprinzipien unterscheiden, d. h. die Sensorköpfe können beispielsweise als Ultraschallsensoren, als Lasersensoren oder als Radarsensoren oder dergleichen ausgebildet sein. Entsprechend einer bevorzugten Variante sind die Sensorköpfe voneinander beabstandet, z. B. 10 cm, 20 cm, 33 cm, 40 cm oder allgemein im Bereich von 5 cm bis 50 cm bzw. 2 cm bis 100 cm. Der Abstand kann je nach Messprinzip der Sensorköpfe entsprechend angepasst sein. Der Abstand kann beispielsweise so gewählt sein, dass über den jeweiligen Abschnitt bzw. über den Träger eine gleiche Verteilung vorliegt. Ferner kann der Abstand von Sensor/Sensorkopf zu Sensor/Sensorkopf sich verändern, wie z.B. anwachsen. Das ist vorteilhaft bei der Ausregelung von Unebenheiten in der aufzubringenden Schicht mit bestimmten Frequenzen/Wellenlängen.

Entsprechend Vergleichsbeispielen erfolgen Messungen der Sensorköpfe im Wesentlichen gleichzeitig, d.h. z.B. innerhalb eines Zeitfensters von 3s, 1s, 0,5s, 0,1s oder kleiner. Abstandsmessungen zu dem Untergrund (Referenz, auf die bereits aufgebrachte Schicht bzw. auf den Untergrund für die aufzubringende Schicht) und/oder zu dem Objekt, und/oder als Referenzmessung(en) werden im Wesentlichen gleichzeitig durchgeführt (synchrone Messung innerhalb eines Zeitfensters, wie oben angegeben). D. h., es ist möglich, dass alle im Messsystem angeordneten Sensorköpfe im Wesentlichen zeitgleich Messungen durchführen. Dies ist im Hinblick auf die Messgenauigkeit des Messsystems vorteilhaft, da bei einer gleichzeitigen Messung im Prinzip eine Momentaufnahme von beispielsweise des Untergrund- bzw. Referenzprofils und der Referenzmessung(en) unter gleichen Bedingungen (beispielsweise Umweltbedingungen) erstellt wird. Im Gegensatz zu einer asynchronen (nicht zeitgleichen, beispielsweise nacheinander durchgeführten) Messung sind bei einer im Wesentlichen zeitgleich durchgeführten Messung Veränderungen von Abständen oder äußeren Bedingungen, beispielsweise ausgelöst durch mechanische Vibrationen (Schwingungen) der Maschine bzw. des Werkzeugs oder von Maschinenteilen oder ausgelöst durch Temperaturschwankungen, nicht relevant, da im Moment der (zeitgleichen) Messungen beispielsweise das Untergrund- bzw. Referenzprofil abstandsgetreu vom Messsystem erfasst wird und auch Referenzmessung(en) unter gleichen Bedingungen erfolgen. Es wird somit ein korrektes Referenzprofil bzw. korrektes Profil des Untergrunds von allen Sensorköpfen in allen Abschnitten und allen Trägern des Messsystems erfasst. Ferner ist eine gleichzeitige Messung vorteilhaft im Hinblick auf eine hohe Messrate (Abtastrate), wie es bei einer Nivellierung im Straßenbau (beispielsweise einer Höhennivellierung der Bohle) heutzutage erforderlich ist.

Entsprechend einem weiteren Vergleichsbeispiel weist der erste und/oder der zweite Abschnitt eine Anzeige, wie z. B. eine LED, LED-Anzeige, auf. Die Anzeige bzw. LED-Anzeige ist ausgebildet, um einen Verbindungsstatus zwischen dem ersten und zweiten oder jedem weiteren Abschnitt anzuzeigen oder um eine Information, z.B. bzgl. einer Abweichung, des Messsystems oder eines mit dem Messsystem verbundenen Regel- und/oder Steuersystems anzuzeigen. Denkbar ist hierbei auch eine LCD-Anzeige oder dergleichen als Anzeige, auf der beispielsweise ein Text und/oder Symbole angezeigt werden.

Entsprechend weiteren Vergleichsbeispielen kann das Messsystem einen GNSS-Sensor, einen Neigungssensor, einen Infrarotsensor, einen Temperatursensor, einen Lagesensor (Inertial Measurement Unit) oder einen weiteren Sensor aufweisen. Auch kann entsprechend Beispielen jeder Abschnitt eine Beleuchtung umfassen.

Entsprechend einem weiteren Vergleichsbeispiel weist das Messsystem an einer (ersten) Stirnseite ein erstes Verbindungselement auf, wobei das erste Verbindungselement mit einem zweiten Verbindungselement, welches beispielhaft an der Maschine befestigt ist verbunden ist und an der zweiten Stirnseite an der ein weiteres Messsystem z.B. ein Abstandsmesssystem angebracht ist.

Entsprechend weiteren Vergleichsbeispielen ist eine Berechnungseinheit ausgebildet, um mit dem ersten Messwert und dem zweiten Messwert eine Regressionsgerade zusammen mit einer Steigung der Regressionsgerade gegenüber dem Untergrund oder der Referenz zu bestimmen und ausgehend von der Steigung einen Winkel zu bestimmen, der die Steigung der Regressionsgerade und die Lage der Komponente der Baumaschine gegenüber dem Untergrund oder der Referenz beschreibt.

Weiter Details werden nachfolgend erläutert. Komponenten von Baumaschinen, wie z. B. eine Bohle, werden hinsichtlich ihrer Lage überwacht. Beispielsweise gibt es Winkel- oder Neigungssensoren, die die Rotation der Bohle um ihre Längsachse, das heißt also die Verkippung der Bohle gegenüber dem Untergrund ermitteln. Da auf die Bohle oder allgemein auf Komponenten der Baumaschinen erhebliche Störeinflüsse, wie z. B. Vibrationen, wirken, bedarf es Mechanismen, um diese Störeinflüsse zu kompensieren.

Im Stand der Technik wird beispielsweise die Neigung über unterschiedliche Messprinzipien ermittelt, um so die Vorteile unterschiedlicher Messprinzipien hinsichtlich "Störunanfälligkeit", Genauigkeit, etc. zu kombinieren.

Vergleichsbeispiele schaffen ein Messsystem für eine Baumaschine, wobei das Messsystem einen Träger aufweist, der mit einer Komponente der Baumaschine verbindbar ist. Das Messsystem umfasst in der Basisausführung zumindest einen ersten, zweiten und dritten Sensorkopf sowie eine Berechnungseinheit. Der erste, zweite und dritte Sensorkopf sind mit dem Träger verbunden. Bevorzugt kann wiederum eine parallele Ausrichtung erfolgen; auch kann das System entsprechend Vergleichsbeispielen nach Aspekt 1 verwendet werden. Im allgemeinen sind die Sensorköpfe ausgebildet, um einen ersten Abstand von dem ersten Sensorkopf zu dem Untergrund oder einer Referenz zu messen, um einen ersten Messwert zu erhalten, bzw. einen zweiten Abstand von dem zweiten Sensorkopf zu einem Untergrund bzw. einer Referenz zu messen, um einen zweiten Messwert zu erhalten, bzw. einen dritten Abstand von dem dritten Sensorkopf zu einem Untergrund bzw. einer Referenz zu messen, um einen dritten Messwert zu erhalten. Die Berechnungseinheit ist ausgebildet, um ausgehend von dem ersten, zweiten und dritten Messwert eine Regressionsgerade zusammen mit einer Steigung der Regressionsgerade gegenüber dem Untergrund bzw. der Referenz zu bestimmen und ausgehend von der Steigung einen Winkel zu bestimmen, der die Steigung der Regressionsgerade und damit die Lage der Komponente der Baumaschine gegenüber dem Untergrund bzw. der Referenz beschreibt.

Entsprechend Vergleichsbeispielen kann die Komponente einen Zugarm oder eine Bohle oder eine über den Zugarm fest, starr und/oder zumindest im Arbeitsprozess starr verbunden Bohle, d.h. insbesondere mit einer fest definierten Beziehung bzw. zumindest während des Arbeitsprozesses fest definierten Beziehung, umfassen.

Vergleichsbeispielen liegt die Erkenntnis zugrunde, dass durch drei Messwerte eine Regressionsgerade und insbesondere die Lage der Regressionsgerade im Raum bestimmbar ist. Wenn man davon ausgeht, dass die Sensoren (die beispielsweise voneinander beabstandet sind) auf einem Träger angeordnet sind, der in einer bekannten bzw. festen Lage zu der Komponente angeordnet ist bzw. befestigt ist, kann durch die drei Messwerte eine Regressionsgerade bestimmt werden, die mit einem festen Winkel zu der Komponente liegt. Beispielsweise kann die Regressionsgerade parallel zu der Lage der Komponente angeordnet sein.

Ausgehend von einem Ausgangszustand, in welchem die Lage der Komponente bekannt ist, kann durch Beobachtung der Lageänderung der Regressionsgerade ein Rückschluss auf eine Lageänderung der Komponente geschlossen werden. Unter Kenntnis der Lage der Regressionsgerade bzw. der Lage der Sensorköpfe zu der Komponente (z. B. Abstand entlang des Trägers und Offset) ist es auch möglich, die Lage (gegenüber der Referenz oder dem Untergrund) der Regressionsgerade und damit auch der Komponente zu bestimmen. Da die Regressionsgerade im Regelfall nicht zu stark von Einzelmessungen abhängt, wird eine sehr genaue und gleichsam robuste Messung ermöglicht.

Durch die Verwendung von mehr als zwei Sensorwerten bzw. insbesondere die Verwendung von mehr als zwei Messpunkten in Folge von zeitlich aufeinanderfolgenden Messungen sind die Ergebnisse der Regressionsgerade(nberechnung) besonders stabil und robust. Ferner verändern sich die Werte aufgrund der starren Kopplung über den Träger gleichmäßig, so dass die Lage vorteilhafterweise auch trotz Störungen (Gegenstände auf dem Untergrund bzw. Vibrationen) detektierbar ist. Durch die Bestimmung der Lage der Regressionsgerade ist die Lage, wie z. B. eine Neigung einer Komponente in robuster Art und Weise detektierbar.

Entsprechend dem Vergleichsbeispiel kann der Träger hinter der Bohle angeordnet sein, z. B. fest mit der Bohle verbunden. Der Träger ist dann auf die gerade aufgebrachte Schicht gerichtet und ermöglicht unter Verwendung der Schicht als Referenz die Bestimmung der Lage der Bohle. Beispielsweise wäre es denkbar, dass sich der Träger entlang der Längsachse erstreckt, um hier die Rotation der Bohle um deren Längsachse zu bestimmen (Anmerkung: Die Längsachse der Bohle erstreckt sich bei einem wie eingangs beschriebenen Straßenfertiger quer zu dessen Fahrtrichtung). Wenn der Träger quer der Längsrichtung oder schräg (z.B. 45°) angeordnet ist, kann ein Profil und/oder zusätzlich eine Seitenneigung (zusätzlich zum Profil) bestimmt werden.

Entsprechend einem weiteren Vergleichsbeispiel kann auch das Messsystem um einen weiteren Träger mit weiteren (drei) Sensoren berücksichtigt werden. Dieser kann beispielsweise hinter der Bohle angeordnet sein. Bei diesem Ansatz werden dann zwei Regressionsgeraden bestimmt, wobei ein lateraler Versatz der ersten Regressionsgerade gegenüber der zweiten Regressionsgerade einer Schichtdicke entspricht. Dieses Schichtdickenmesssystem ist robust gegenüber Rotationen der Bohle, da, wenn man davon ausgeht, dass beispielsweise die zwei Träger fluchtend zueinander bzw. parallel zueinander angeordnet sind, die Regressionsgeraden auch parallel verlaufen. Der parallele Versatz entspricht der Schichtdicke, unabhängig, wie die Regressionsgeraden im Raumwinkel sind.

Insofern schafft ein weiteres Vergleichsbeispiel ein Schichtdickenmesssystem. Das Schichtdickenmesssystem für eine Baumaschine weist einen Träger und weiteren Träger auf, die mit einer Bohle der Baumaschine derart verbindbar sind, dass der Träger sich vor der Bohle erstreckt und der weitere Träger sich hinter der Bohle erstreckt. Das umfasst ferner einen ersten, zweiten und dritten Sensorkopf, die mit dem Träger verbunden sind und ausgebildet sind, um einen ersten Abstand von dem ersten Sensorkopf zu einem Untergrund oder einer Referenz zu messen, um einen ersten Messwert zu erhalten, und einen zweiten Abstand von dem zweiten Sensorkopf zu einem Untergrund oder einer Referenz zu messen, um einen zweiten Messwert zu erhalten; und einen dritten Abstand von dem dritten Sensorkopf zu einem Untergrund oder einer Referenz zu messen, um einen dritten Messwert zu erhalten. Ferner sind weitere erste, zweite und dritte Sensorköpfe vorgesehen, die mit einem weiteren Träger verbunden sind und ausgebildet sind, um einen weiteren ersten, zweiten und dritten Abstand von dem weiteren ersten, zweiten und dritten Sensorkopf zum Untergrund/Referenz zu messen, um einen weiteren ersten, zweiten und dritten Messwert zu erhalten; eine Berechnungseinheit ist ausgebildet, um ausgehend von dem ersten, zweiten und dritten Messwert eine Regressionsgerade zu bestimmen und um ausgehend von dem weiteren ersten, weiteren zweiten und weiteren dritten Messwert eine weitere Regressionsgerade zu bestimmen. Die Berechnungseinheit ist ausgebildet, um ausgehend von der Lage der Regressionsgerade gegenüber der weiteren Regressionsgerade eine Schichtdicke zu bestimmen.

Das Schichtdickenmesssystem kann entsprechend Vergleichsbeispielen derart ausgebildet sein, dass der Träger und der weitere Träger in ihrer gegenseitigen Lage bekannt sind und damit auch die Regressionsgerade und die weitere Regressionsgerade so ausgerichtet werden können, dass sie parallel verlaufen. Wie bereits angesprochen, stellt bzw. entspricht der Versatz der Regressionsgeraden zueinander der Schichtdicke oder lässt allgemein gesprochen einen Rückschluss zu.

Entsprechend einer weiteren Variante kann das Messsystem auch an einer weiteren Komponente, wie z. B. dem Chassis selber, befestigt sein, um hier eine Lage zu bestimmen.

Entsprechend einem weiteren Vergleichsbeispiel kann das Messsystem vier Sensorköpfe umfassen, die beispielsweise an einem gemeinsamen Träger angeordnet sind. Entsprechend Vergleichsbeispielen kann die Berechnungseinheit ausgebildet sein, eine Regressionsgerade ausgehend von einer Punktwolke zu definieren, um den ersten, den zweiten, den dritten und den vierten Messwert zu bestimmen. Die Regressionsgerade wird so im Raum angeordnet, dass die Abstände beispielsweise minimal zu den Punkten der Punktwolke sind.

Da mittels der Regressionsgerade immer eine relative Neigung zu einer Referenz bzw. zum Untergrund bestimmt wird, kann das Messsystem um einen Neigungssensor erweitert werden, wobei dann die Berechnungseinheit beispielsweise ausgebildet ist, um ausgehend von der absoluten Neigung, bestimmt durch den Neigungssensor, zusammen mit dem Winkel, bestimmt über die Regressionsgerade, eine absolute Neigung der Komponente der Baumaschine zu bestimmen.

Ausgehend von einem Fahrzustand (z.B. Geschwindigkeit < 2km/h) werden je Sensorkopf mehrere Messwerte hintereinander ermittelt. Hierbei erfolgt dann zur Bestimmung der Regressionsgerade eine zeitliche Mittelung je Messpunkt bzw. eine zeitliche Mittelung der Regressionsparameter nach wiederholter Bestimmung dieser Parameter. Entsprechend weiteren Vergleichsbeispielen kann die Mittelung auch lokal oder anders geartet ausgeführt sein.

Der erste und der zweite Sensorkopf bzw. bei Vergleichsbeispielen mehrerer Sensorköpfe sind die Sensorköpfe typischerweise beabstandet. Entsprechend einem Vergleichsbeispiel kann die Berechnungseinheit ausgebildet sein, um den Abstand der Sensorköpfe mit zu berücksichtigen. Dies ist insbesondere wichtig, um die Steigung der Regressionsgeraden zu bestimmen. Weiterhin kann die Berechnungseinheit ausgebildet sein um mit einem Geschwindigkeitssignal, welches aus einem Wegsignal oder Positionssignal, z.B. GNSS Signal, erzeugt werden kann, aus einer zeitbezogenen Messung eine wegbezogene/positionsbezogene Messung zu erzeugen. Somit kann auf ortsfeste Störungen reagiert werden.

Ein weiteres Vergleichsbeispiel schafft eine Baumaschine, wie insbesondere eine Straßenbaumaschine mit einem Messsystem oder einem Schichtdickenmesssystem.

Ein weiteres Vergleichsbeispiel schafft ein Verfahren zur Bestimmung einer Lage einer Komponente einer Baumaschine unter Verwendung eines Messsystems mit einem Träger, der mit einer Komponente der Baumaschine verbindbar ist. Das Verfahren hat die folgenden Schritte: Bestimmen, ausgehend von dem ersten Messwert, dem zweiten Messwert und dem dritten Messwert, einer Regressionsgerade zusammen mit einer Steigung der Regressionsgerade gegenüber dem Untergrund; und Bestimmen ausgehend von der Steigung eines Winkels, der die Steigung der Regressionsgerade und die Lage der Komponente der Baumaschine gegenüber dem Untergrund beschreibt.

Das Verfahren kann, wenn man von weiteren Sensorköpfen an einem weiteren Träger ausgeht, auch die folgenden Schritte aufweisen: Bestimmen einer weiteren Regressionsgerade zusammen mit einer Steigung der weiteren Regressionsgerade gegenüber dem Untergrund ausgehend von den weiteren ersten, zweiten und dritten Messwerten; Bestimmen eines Winkels, der die Steigung der weiteren Regressionsgerade und die Lage der Komponente der Baumaschine gegenüber dem Untergrund beschreibt, ausgehend von der Steigung; und Bestimmen einer Schichtdicke anhand der Regressionsgerade und der weiteren Regressionsgerade.

Ein weiteres Verfahren bezieht sich auf die Bestimmungen einer Schichtdicke. Dieses Verfahren umfasst die drei Schritte: Bestimmen ausgehend von dem ersten, zweiten und dritten Messwert einer Regressionsgerade; und Bestimmen ausgehend von weiteren ersten, zweiten und dritten Messwert einer weiteren Regressionsgerade; Bestimmen ausgehend von der Lage der Regressionsgerade gegenüber der weiteren Regressionsgerade einer Schichtdicke.

Das Verfahren kann entsprechend Vergleichsbeispielen auch Computer-implementiert sein. Deshalb bezieht sich ein weiteres Vergleichsbeispiel auf ein Computerprogramm zur Durchführung des Verfahrens nach einem der vorherigen Vergleichsbeispielen.

Betrachtet man die Hauptaufgabe vom Straßenfertiger, so besteht diese darin, eine kontinuierliche Ebenheit während dem Einbauprozess sicherzustellen. Hierbei gibt es jedoch aufgrund von einer Vielzahl von verschiedenen Störgrößen derartige Beeinflussungen, dass die gewünschte Ebenheit zumindest beeinträchtigt wird.

Ein entscheidender Nachteil der Höhennivellierung der Bohle liegt darin begründet, dass die Messung der Höheninformation der Bohle nicht in der Nähe der Bohlenhinterkante stattfindet, sondern im Bereich der Bohlenschnecke. Dies stellt letztendlich eine Kompromisslösung dar, damit trotz der sehr trägen Verhaltensweise der Bohle eine notwendige dynamische Reaktion am Zugpunkt stattfindet, sobald eine Regelabweichung in der Höhe vorhanden ist. Dabei verstellt das Höhennivellierungssystem den Zugpunkt der Bohle derart, dass die Höhenabweichung zur Referenz an der Position der Höhenabtastung (im Bereich der Bohlenschnecke) schnellstmöglich ausgeregelt wird. An dieser Position wird somit exakt die Höhe zur Referenz eingehalten. Die maßgebende Höhe an der Bohlenhinterkante kann sich jedoch über diesen Punkt (Höhensensor im Bereich der Bohlenschnecke) ändern, sodass sich letztendlich über die Zeit eine andere Höhe an der Bohlenhinterkante im Vergleich zum gewünschten Höhensollwert einstellt. Somit verändert sich die Höhe der Bohlenhinterkante in Bezug zur Referenz, was wiederum eine Abweichung der gewünschten Höhe darstellt und die vom Nivelliersystem nicht kompensiert wird.

Ein Messystem für ein Nivelliersystemen ist z.B. in der US 5,356,238 gezeigt.

Auch die Praxis zeigt, dass es bei den heute üblichen Nivelliersystemen immer wieder zu unerwünschten Höhenabweichungen der Bohle kommt. Deshalb besteht der Bedarf nach einem verbesserten Ansatz.

Vergleichsbeispiele schaffen eine Steuerung einer Straßenmaschine mit einer Bohle, die ausgebildet ist, um einen Zugpunkt der Bohle zu verstellen. Die Steuerung umfasst einen ersten und einen zweiten Regelkreis. Der erste Regelkreis variiert den Zugpunkt in Abhängigkeit von einem ersten Sensorwert, während der zweite Regelkreis den Zugpunkt in Abhängigkeit von einem zweiten Sensorwert variiert. Der erste Sensorwert repräsentiert einen Abstand (von dem Sensor) zu einem Untergrund bzw. einer Referenz im Bereich der Bohle, während der zweite Sensorwert einen Abstand (von dem Sensor) zu dem Untergrund bzw. einer Referenz im Bereich des Zugpunkts repräsentiert.

Entsprechend Vergleichsbeispielen berücksichtigt der erste Regelkreis bei der Variation einen ersten Sollwert, während der zweite Regelkreis einen zweiten Sollwert bei der Variation berücksichtigt.

Vergleichsbeispielen liegt die Erkenntnis zugrunde, dass die Aufsplittung der Regelung in zwei Regelkreise der Situation Rechnung trägt, dass unterschiedliche Störgrößen auf die Nivellierung einwirken. Der Regelkreis, der im Bereich des Zugpunkts regelt, regelt beispielsweise Störgrößen, die direkt auf das Chassis wirken, aus.

Beispielsweise kann dieser Regelkreis weniger träge ausgeführt sein als der andere Regelkreis, um der Störgröße entsprechend entgegenzuwirken. Der Regelkreis, der im Bereich der Bohle seine Messwerte ermittelt, regelt im Wesentlichen die Störgrößen aus, die auf die Bohle wirken. Diese Störgrößen interagieren nicht nur zwischen Fahrwerk und Zugpunkt, wie beim sogenannten zweiten Regelkreis, sondern über die Bohle inklusive dem Wirkmechanismen "Asphalt", so dass hier ein trägerer Regelkreis zugrunde gelegt werden kann. Durch die Aufteilung der zwei Regelkreise wird zwar die Komplexität in der Steuerung erhöht, aber so Störgrößen individueller und signifikant besser ausgeregelt.

Entsprechend Vergleichsbeispielen ist der erste Regelkreis träger ausgelegt als der zweite Regelkreis. Beispielsweise kann entsprechend Vergleichsbeispielen jeder Regelkreis einen Filter umfassen (erster Regelkreis erstes Filter und/oder zweiter Regelkreis zweites Filter). Entsprechend Vergleichsbeispielen ist der erste Regelkreis für eine niedrig-frequente Regelung ausgelegt und hat beispielsweise einen Tiefpassfilter mit niedriger Eckfrequenz. Der zweite Regelkreis kann beispielsweise für hochfrequente bzw. höher-frequente Regelungen ausgelegt sein und einen Tiefpassfilter mit erhöhter Eckfrequenz umfassen.

Beim ersten Regelkreis wird entsprechend Vergleichsbeispielen ein Modell zur Abbildung des Übertragungsverhaltens der Bohle verwendet. Dieses Modell kann entsprechend Vergleichsbeispielen eine Geschwindigkeit oder zurückgelegte Distanz der Baumaschine berücksichtigen. Entsprechend weiteren Vergleichsbeispielen kann das Modell eine Bohlenrotation um die Längsachse, ein Gewicht der Bohle und/oder eine Tamper- oder VibrationsFrequenz der Bohle berücksichtigen. Entsprechend weiteren Vergleichsbeispielen kann das Modell eine Viskosität und/oder eine Temperatur der aufzubringenden Schicht bzw. des aufzubringenden Straßenbelags berücksichtigen. Weiterhin können auch Faktoren wie Schüttwinkel oder Materialhöhe vor der Bohle berücksichtigt werden. Insofern verwendet der erste Regelkreis gemäß Vergleichsbeispielen das Modell, das als Inputgröße eine Geschwindigkeit, eine Bohlenrotation um die Längsachse, eine Viskosität und/oder eine Temperatur hat.

Der erste Regelkreis und der zweite Regelkreis sind entsprechend weiteren Vergleichsbeispielen ausgebildet, um ein Übertragungsverhalten der Zugpunktverstellung und/oder ein Übertragungsverhalten der Bohle zu berücksichtigen. Entsprechend Vergleichsbeispielen ist das Übertragungsverhalten der Zugpunktverstellung durch ein IT-Verhalten (Integralverhalten mit Zeitanteil) beschreibbar. Das Übertragungsverhalten der Bohle ist beispielsweise annäherungsweise durch ein PT₂-Verhalten (Proportionalverhalten mit Zeitanteil und einer Verzögerung 2. Ordnung) beschreibbar.

Bezüglich der Sensoren sei angemerkt, dass diese entsprechend Vergleichsbeispielen als Ultraschallsensoren oder als Lasersensoren oder als Radarsensoren oder ganz allgemein als Abstandsensoren ausgebildet sein können, die im einfachsten Fall den Abstand zum Untergrund bzw. der aufgebrachten Schicht messen. Selbstverständlich wäre es auch denkbar, gegenüber einer Referenz (z. B. Seil, Kante bzw. Bordsteinkante, Linie) zu messen. Auch wäre die Verwendung einer Totalstation als Sensorik oder Laserempfänger in Kombination mit einem zentralen Sender denkbar (3D-Steuerung).

Ein weiteres Vergleichsbeispiel bezieht sich auf ein Bohlensteuerungssystem mit einer Steuerung, wie sie oben erläutert worden ist, sowie einem Aktor zur Zugpunktverstellung.

Entsprechend Vergleichsbeispielen weist das Bohlensteuerungssystem einen ersten Sensor im Bereich der Bohle sowie einen zweiten Sensor im Bereich des Zugpunkts auf bzw. ist mit diesem verbunden.

Ein weiteres Vergleichsbeispiel bezieht sich auf eine Baumaschine, insbesondere eine Straßenbaumaschine mit einer entsprechenden Steuerung bzw. Bohlensteuerung.

Ein weiteres Vergleichsbeispiel schafft ein Verfahren zum Steuern einer Straßenbaumaschine mit einer Bohle. Das Verfahren umfasst die folgenden Schritte: Verstellen eines Zugpunkts der Bohle unter Verwendung eines ersten und zweiten Regelkreises, Variieren des Zugpunkts in dem ersten Regelkreis in Abhängigkeit von einem ersten Sensorwert; und Variieren des Zugpunkts in dem zweiten Regelkreis in Abhängigkeit von einem zweiten Sensorwert. Der erste Sensorwert repräsentiert einen Abstand zum Untergrund bzw. zu einer Referenz. Der zweite Sensorwert repräsentiert einen Abstand zum Untergrund bzw. zu der Referenz.

Entsprechend weiteren Vergleichsbeispielen kann das Verfahren Computer-implementiert ausgeführt sein.

So kann beispielsweise das o.g. Messsystem als Sensoranordnung für die Steuerung dienen. Ebenso kann dieses Messsystem als Sensoranordnung für die Messmethodik (vgl. oben) dienen. Die Messmethodik ist vorteilhafterweise mit der Steuerung verbindbar, da hier typischerweise die gleichen Punkte am Untergrund abgetastet werden. Natürlich können entsprechend einem weiteren bevorzugten Vergleichsbeispiel alle drei Aspekte miteinander kombiniert werden. Alle drei Aspekte verfolgen ein gemeinsames Ziel, nämlich die Nivellierung und/oder Steuerung einer Straßenbaumaschine (insbesondere eines Straßenfertigers oder einer Straßenfräse) zu verbessern.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Beispielen können einige oder mehrere der wichtigsten Verfahrensschritte durch einen solchen Apparat ausgeführt werden.

Je nach bestimmten Implementierungsanforderungen können Beispiele in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Beispiele umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Beispiele als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Beispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Beispiel des Verfahrens somit ein Computerprogramm, das einen Programmcode zum Durchführen eines der hierin beschriebenen Verfahren aufweist, wenn das Computerprogramm auf einem Computer abläuft.

Ein weiteres Beispiel der Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nicht-vorübergehend.

Ein weiteres Beispiel des Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Beispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Beispiel umfasst einen Computer, auf dem das Computerprogramm zum Durchführen eines der hierin beschriebenen Verfahren installiert ist.

Ein weiteres Beispiel umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Beispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Beispielen kann ein feldprogrammierbares Gatterarray mit einem Mikroprozessor zusammenwirken, um eines der hierin beschriebenen Verfahren durchzuführen. Allgemein werden die Verfahren bei einigen Beispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Beispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Beispiele hierin präsentiert wurden, beschränkt sei.

## Patentansprüche

1. Messsystem (100) für eine Baumaschine (1), wobei das Messsystem (100) einen Träger (110) umfasst, der mit der Baumaschine (1) verbindbar ist, mit folgenden Merkmalen:
einem ersten Abschnitt (111) und einem zweiten Abschnitt (112) des Trägers (110);
wobei der erste Abschnitt (111) einen oder mehrere an dem ersten Abschnitt (111) befestigte oder integrierte Sensorköpfe (121-126) zur berührungslosen Messung gegenüber einem Untergrund oder einer Referenz aufweist, wobei der erste Abschnitt (111) an einer zweiten Stirnseite ein zweites Verbindungselement (132) aufweist, wobei das zweite Verbindungselement (132) mit einem ersten Verbindungselement (131) derart verbindbar ist, dass eine mechanische und elektrische Verbindung ausgebildet wird; wobei der zweite Abschnitt (112) ein oder mehrere an dem zweiten Abschnitt (112) befestigte oder integrierte Sensorköpfe (121-126) aufweist, wobei der zweite Abschnitt (112) an einer ersten Stirnseite das erste Verbindungselement (131) aufweist;
wobei das erste und/oder das zweite Verbindungselement (132) einen Haken (131h) aufweist, so dass das erste Verbindungselement (131) und das zweite Verbindungselement (132) durch eine Drehbewegung um eine Rotationsachse (132r) in Eingriff bringbar ist, um die mechanische Verbindung auszubilden;
wobei das erste Verbindungselement (131) einen Stecker (132s) aufweist und wobei das zweite Verbindungselement (132) eine Buchse (132b) aufweist, wobei der Stecker (132s) und die Buchse (132b) zusammen die elektrische Verbindung ausbilden; und wobei der Stecker (132s) und/oder die Buchse (132b) ausgebildet sind, verkippt zu werden, und/oder wobei der Stecker (132s) und/oder die Buchse (132b) zumindest partiell eine konische Form (132b_2m) aufweisen.

2. Messsystem (100) gemäß Anspruch 1,
wobei der Stecker (132s) eine konische Spitze (132b_2m) und/oder eine sich verjüngende Spitze (132b_2m) und/oder eine Anphasung aufweist; und/oder
wobei die Buchse (132b) eine konische Öffnung aufweist oder einen sich zur Öffnung hin aufweitenden Durchmesser aufweist.

3. Messsystem (100) gemäß einem der vorherigen Ansprüche, wobei der Stecker (132s) und/oder die Buchse (132b) um eine oder mehrere weitere Rotationsachsen rotierbar sind; oder
wobei der Stecker (132s) und/oder die Buchse (132b) um eine oder mehrere weitere Rotationsachsen rotierbar sind, wobei die weiteren Rotationsachsen parallel zu der Rotationsachse der Drehbewegung (132r) verlaufen.

4. Messsystem (100) gemäß einem der vorherigen Ansprüche, wobei der Stecker (132s) und/oder die Buchse (132b) einen oder mehrere Magneten aufweist, die ausgebildet sind, um die Stecker (132s) und/oder die Buchse (132b) durch eine Magnetkraft zu fixieren und/oder gegenseitig auszurichten und/oder zu kontaktieren.

5. Messsystem (100) gemäß einem der vorherigen Ansprüche, wobei der Stecker (132s) und/oder die Buchse (132b) durch ihre Geometrie und/oder Magnete ausgebildet sind, um sich gegenseitig zu zentrieren.

6. Messsystem (100) gemäß einem der vorherigen Ansprüche, wobei der Stecker (132s) und/oder die Buchse (132b) ein oder mehrere elektrische Pole umfassen; und/oder
wobei die elektrische Verbindung ausgebildet ist, um elektrische Energie und/oder Daten zu übertragen.

7. Messsystem (100) gemäß einem der vorherigen Ansprüche, wobei das erste Verbindungselement (131) und/oder das zweite Verbindungselement (132) einen Mechanismus zur mechanischen Fixierung des ersten und des zweiten Verbindungselements (131, 132) aufweist; oder
wobei das erste Verbindungselement (131) ein Hebelmechanismus (138e) und/oder einen Hebelmechanismus (138e) mit einem Exzenter aufweist, um das erste Verbindungselement (131) mit dem zweiten Verbindungselement translatorisch zu fixieren.

8. Messsystem (100) gemäß einem der vorherigen Ansprüche, wobei der Stecker (132s) und/oder die Buchse (132b) sich im Wesentlichen längs einer Längsrichtung des ersten und/oder zweiten Abschnitts erstrecken.

9. Messsystem (100) gemäß einem der vorherigen Ansprüche, wobei der Haken (131h) des ersten und/oder des zweiten Verbindungselements (131, 132) oder die Haken (131h) des ersten und/oder des zweiten Verbindungselements (131, 132) eine Eingriffsfläche (132e') aufweisen, die im Wesentlichen senkrecht zu der Längsrichtung des jeweiligen Abschnitts geöffnet ist; und/oder
wobei die Drehbewegung durch einen Endanschlag definiert ist, der eine Berührung der ersten und zweiten Stirnseite voraussetzt.

10. Messsystem (100) gemäß einem der vorherigen Ansprüche, wobei der zweite Abschnitt an einer zweiten Stirnseite ein zweites Verbindungselement und/oder der erste Abschnitt an einer ersten Stirnseite ein erstes Verbindungselement aufweist, und/oder
wobei das Messsystem ein Befestigungselement aufweist, das mit der Baumaschine (1) und einer Komponente der Baumaschine (1) verbindbar ist und das ein erstes und/oder ein zweites Verbindungselement (131, 132) aufweist; und/oder
wobei das Messsystem ein Befestigungselement aufweist, das mit der Baumaschine (1) oder einer Komponente der Baumaschine (1) verbindbar ist und das ein erstes und/oder ein zweites Verbindungselement (131, 132) aufweist, so dass der erste Abschnitt mit der Baumaschine (1) oder der Komponente der Baumaschine (1) verbindbar ist.

11. Messsystem (100) gemäß einem der vorherigen Ansprüche, wobei der erste und/oder der zweite Abschnitt (111, 112) auf einer Längsseite senkrecht zu der Längsachse des ersten und/oder des zweiten Abschnitts (111, 112) ausgerichtete Sensorköpfe (121-126) aufweist; oder
wobei der erste und/oder der zweite Abschnitt (111, 112) auf einer Längsseite Sensorköpfe (121-126) aufweist, die auf den Untergrund oder die Referenz gerichtet sind.

12. Messsystem (100) gemäß einem der vorherigen Ansprüche, wobei das Messsystem (100) je ersten und/oder zweiten Abschnitt (111, 112) oder je Träger (110) zumindest einen ersten weiteren Sensorkopf aufweist, der parallel zu der Längsachse ausgerichtet ist, und/oder der an der ersten und/oder der zweiten Stirnseite angeordnet ist; und/oder
wobei der erste weitere Sensorkopf ausgebildet ist, um eine Referenzmessung durchzuführen, und/oder
wobei das Messsystem (100) je ersten und/oder zweiten Abschnitt (111, 112) einen zweiten Sensorkopf aufweist, der entlang der Längsachse des jeweiligen ersten und/oder zweiten Abschnitts (111, 112) oder des Trägers (110) angeordnet ist und sich an der gegenüberliegenden Stirnseite zu dem ersten weiteren Sensorkopf befindet; und/oder
wobei das Messsystem an der ersten und/oder an der zweiten Stirnseite einen Reflektor oder einen geneigten Reflektor aufweist.

13. Baumaschine (1), insbesondere Straßenbaumaschine (1), wie ein Straßenfertiger oder eine Straßenfräse, mit einem Messsystem (100) gemäß einem der vorherigen Ansprüche.

## Claims

1. A measuring system (100) for a construction machine (1), the measuring system (100) comprising a carrier (110) which is connectable to the construction machine (1), comprising:
a first portion (111) and a second portion of the carrier (110);
wherein the first portion (111) comprises one or more sensor heads (121-126) attached to or integrated with the first portion (111) for non-contact measurement relative to a ground or reference, the first portion (111) having a second connecting element (132) at a second end face, the second connecting element (132) being connectable to a first connecting element (131) such that a mechanical and electrical connection is formed; wherein the second portion (112) comprises one or more sensor heads (121-126) attached to or integrated with the second portion (112), wherein the second portion (112) comprises the first connecting element (131) at a first end face;
wherein the first and/or the second connecting element (132) comprise a hook (131h) such that the first connecting element (131) and the second connecting element (132) are engageable by a rotational movement about a rotational axis (132r) to form the mechanical connection;
wherein the first connecting element (131) comprises a plug (132s) and wherein the second connecting element (132) comprises a socket (132b), the plug (132s) and the socket (132b) together forming the electrical connection; and wherein the plug (132s) and/or the socket (132b) are configured to be tilted, and/or wherein the plug (132s) and/or the socket (132b) at least partially have a conical shape (132b_2m).

2. The measuring system (100) according to claim 1, wherein the plug (132s) comprises a conical tip (132b_2m) and/or a tapered tip (132b_2m) and/or a chamfer; and/or
wherein the socket (132b) has a conical opening or has a diameter widening towards the opening.

3. The measuring system (100) according to any of the preceding claims, wherein the plug (132s) and/or the socket (132b) are rotatable about one or more further axes of rotation; or
wherein the plug (132s) and/or the socket (132b) are rotatable about one or more further axes of rotation, the further axes of rotation being parallel to the rotational axis of the rotational movement (132r).

4. The measuring system (100) according to any of the preceding claims, wherein the plug (132s) and/or the socket (132b) comprise one or more magnets configured to fix and/or mutually align and/or contact the plug (132s) and/or the socket (132b) by a magnetic force.

5. The measuring system (100) according to any of the preceding claims, wherein the plug (132s) and/or the socket (132b) are configured by their geometry and/or magnets to center each other.

6. The measuring system (100) according to any of the preceding claims, wherein the plug (132s) and/or the socket (132b) comprise one or more electrical poles; and/or
wherein the electrical connection is configured to transmit electrical energy and/or data.

7. The measuring system (100) according to any of the preceding claims, wherein the first connecting element (131) and/or the second connecting element (132) comprise a mechanism for mechanically fixing the first and second connecting elements (131, 132); or
wherein the first connecting element (131) comprises a lever mechanism (138e) and/or a lever mechanism (138e) with an eccentric for translationally fixing the first connecting element (131) with the second connecting element.

8. The measuring system (100) according to any of the preceding claims, wherein the plug (132s) and/or the socket (132b) extend substantially along a longitudinal direction of the first and/or second portions.

9. The measuring system (100) according to any of the preceding claims, wherein the hook (131h) of the first and/or the second connecting element (131, 132) or the hooks (131h) of the first and/or the second connecting element (131, 132) comprise an engagement surface (132e') opened substantially perpendicular to the longitudinal direction of the respective portion; and/or
wherein the rotational movement is defined by an end stop which requires the first and second end faces to be in contact.

10. The measuring system (100) according to any of the preceding claims, wherein the second portion has a second connecting element at a second end face and/or the first portion has a first connecting element at a first end face, and/or
wherein the measuring system comprises a fastening element connectable to the construction machine (1) and a component of the construction machine (1) and comprising a first and/or a second connecting element (131, 132); and/or
wherein the measuring system comprises a fastening element connectable to the construction machine (1) or a component of the construction machine (1) and comprising a first and/or a second connecting element (131, 132) such that the first portion is connectable to the construction machine (1) or the component of the construction machine (1).

11. The measuring system (100) according to any of the preceding claims, wherein the first and/or the second portion (111, 112) comprise sensor heads (121-126) aligned on a longitudinal side perpendicular to the longitudinal axis of the first and/or the second portion (111, 112); or
wherein the first and/or the second portion (111, 112) comprise, on a longitudinal side, sensor heads (121-126) directed towards the ground or reference.

12. The measuring system (100) according to any of the preceding claims, the measuring system (100) comprising, for each first and/or second portion (111, 112) or carrier (110), at least one first further sensor head which is aligned parallel to the longitudinal axis and/or which is arranged at the first and/or the second end face; and/or
wherein the first further sensor head is configured to perform a reference measurement, and/or
wherein the measuring system (100) comprises, for each first and/or second portion (111, 112), a second sensor head arranged along the longitudinal axis of the respective first and/or second portion (111, 112) or of the carrier (110) and located at the opposite end face to the first further sensor head; and/or
wherein the measuring system comprises a reflector or an inclined reflector at the first and/or at the second end face.

13. A construction machine (1), in particular road construction machine (1), such as a road finishing machine or a road milling machine, comprising a measuring system (100) according to any of the preceding claims.

## Revendications

1. Système de mesure (100) pour une machine de chantier (1), dans lequel le système de mesure (100) comprend un support (110) qui peut être relié à la machine de chantier (1), comportant les caractéristiques suivantes :
une première section (111) et une seconde section (112) du support (110) ;
dans lequel la première section (111) présente une ou plusieurs têtes formant capteurs (121-126) fixées ou intégrées à la première section (111) pour la mesure sans contact par rapport à un sol ou à une référence, dans lequel la première section (111) présente, sur une seconde face frontale, un second élément de liaison (132), dans lequel le second élément de liaison (132) peut être relié à un premier élément de liaison (131) de telle sorte qu'une liaison mécanique et électrique est réalisée ; dans lequel la seconde section (112) présente une ou plusieurs têtes formant capteurs (121-126) fixées ou intégrées à la seconde section (112), dans lequel la seconde section (112) présente, sur une première face frontale, le premier élément de liaison (131) ;
dans lequel le premier et/ou le second élément de liaison (132) présentent un crochet (131h), de sorte que le premier élément de liaison (131) et le second élément de liaison (132) peuvent être mis en prise par un mouvement de rotation autour d'un axe de rotation (132r) afin de réaliser la liaison mécanique ;
dans lequel le premier élément de liaison (131) présente une prise mâle (132s) et dans lequel le second élément de liaison (132) présente une prise femelle (132b), dans lequel la prise mâle (132s) et la prise femelle (132b) réalisent ensemble la liaison électrique ; et dans lequel la prise mâle (132s) et/ou la prise femelle (132b) sont réalisées pour être inclinées, et/ou dans lequel la prise mâle (132s) et/ou la prise femelle (132b) présentent au moins partiellement une forme conique (132b_2m).

2. Système de mesure (100) selon la revendication 1, dans lequel la prise mâle (132s) présente une pointe conique (132b_2m) et/ou une pointe effilée (132b_2m) et/ou une anfractuosité ; et/ou
dans lequel la prise femelle (132b) présente une ouverture conique ou présente un diamètre s'élargissant vers l'ouverture.

3. Système de mesure (100) selon l'une des revendications précédentes, dans lequel la prise mâle (132s) et/ou la prise femelle (132b) peuvent tourner autour d'un ou de plusieurs autres axes de rotation ; ou
dans lequel la prise mâle (132s) et/ou la prise femelle (132b) peuvent tourner autour d'un ou de plusieurs autres axes de rotation, dans lequel les autres axes de rotation s'étendent parallèlement à l'axe de rotation du mouvement de rotation (132r).

4. Système de mesure (100) selon l'une des revendications précédentes, dans lequel la prise mâle (132s) et/ou la prise femelle (132b) présentent un ou plusieurs aimants qui sont réalisés pour, au moyen d'une force magnétique, fixer la prise mâle (132s) et/ou la prise femelle (132b) l'une à l'autre et/ou pour les aligner mutuellement et/ou pour les mettre en contact.

5. Système de mesure (100) selon l'une des revendications précédentes, dans lequel la prise mâle (132s) et/ou la prise femelle (132b) sont réalisées, par leur géométrie et/ou leurs aimants, pour se centrer mutuellement.

6. Système de mesure (100) selon l'une des revendications précédentes, dans lequel la prise mâle (132s) et/ou la prise femelle (132b) comprennent un ou plusieurs pôles électriques ; et/ou
dans lequel la liaison électrique est réalisée pour transmettre de l'énergie électrique et/ou des données.

7. Système de mesure (100) selon l'une des revendications précédentes, dans lequel le premier élément de liaison (131) et/ou le second élément de liaison (132) présentent un mécanisme permettant de fixer mécaniquement le premier et le second élément de liaison (131, 132) ; ou
dans lequel le premier élément de liaison (131) présente un mécanisme à levier (138e) et/ou un mécanisme à levier (138e) comportant un excentrique afin de fixer en translation le premier élément de liaison (131) avec le second élément de liaison.

8. Système de mesure (100) selon l'une des revendications précédentes, dans lequel la prise mâle (132s) et/ou la prise femelle (132b) s'étendent sensiblement le long d'une direction longitudinale de la première et/ou de la seconde section.

9. Système de mesure (100) selon l'une des revendications précédentes, dans lequel le crochet (131h) du premier et/ou du second élément de liaison (131, 132) ou les crochets (131h) du premier et/ou du second élément de liaison (131, 132) présentent une surface de mise en prise (132e') qui est ouverte sensiblement perpendiculairement à la direction longitudinale de la section respective ; et/ou
dans lequel le mouvement de rotation est défini par une butée d'extrémité qui implique un contact entre les première et seconde faces frontales.

10. Système de mesure (100) selon l'une des revendications précédentes, dans lequel la seconde section présente, sur une seconde face frontale, un second élément de liaison et/ou la première section présente, sur une première face frontale, un premier élément de liaison, et/ou
dans lequel le système de mesure présente un élément de fixation qui peut être relié à la machine de chantier (1) et à un composant de la machine de chantier (1) et qui présente un premier et/ou un second élément de liaison (131, 132) ; et/ou
dans lequel le système de mesure présente un élément de fixation qui peut être relié à la machine de chantier (1) ou à un composant de la machine de chantier (1) et qui présente un premier et/ou un second élément de liaison (131, 132), de sorte que la première section peut être reliée à la machine de chantier (1) ou au composant de la machine de chantier (1).

11. Système de mesure (100) selon l'une des revendications précédentes, dans lequel la première et/ou la seconde section (111, 112) présentent des têtes formant capteurs (121-126) alignées sur une face longitudinale perpendiculairement à l'axe longitudinal de la première et/ou de la seconde section (111, 112) ; ou
dans lequel la première et/ou la seconde section (111, 112) présentent, sur une face longitudinale, des têtes formant capteurs (121-126) qui sont dirigées vers le sol ou la référence.

12. Système de mesure (100) selon l'une des revendications précédentes, dans lequel le système de mesure (100) présente, pour chaque première et/ou seconde section (111, 112) ou pour chaque support (110), au moins une première autre tête formant capteur qui est alignée parallèlement à l'axe longitudinal, et/ou qui est disposée sur la première et/ou la seconde face frontale ; et/ou
dans lequel la première autre tête formant capteur est réalisée pour effectuer une mesure de référence, et/ou
dans lequel le système de mesure (100) présente, pour chaque première et/ou seconde section (111, 112), une seconde tête formant capteur qui est disposée le long de l'axe longitudinal de la première et/ou de la seconde section (111, 112) respective ou du support (110) et qui se trouve sur la face frontale opposée par rapport à la première autre tête formant capteur ; et/ou
dans lequel le système de mesure présente un réflecteur ou un réflecteur incliné sur la première et/ou la seconde face frontale.

13. Machine de chantier (1), en particulier machine pour travaux routiers (1), telle qu'un finisseur de route ou une fraiseuse routière, comportant un système de mesure (100) selon l'une des revendications précédentes.
